(19) Europäisches Patentamt
European Patent Office
Office européen des brevets

(11) **EP 1 933 516 A2**

(12) **EUROPEAN PATENT APPLICATION**

(43) Date of publication:
**18.06.2008 Bulletin 2008/25**

(51) Int Cl.:
*H04L 27/26* (2006.01)      *H04L 25/03* (2006.01)
*H04L 1/00* (2006.01)       *H04N 5/455* (2006.01)
*H04N 7/24* (2006.01)

(21) Application number: **08000336.1**

(22) Date of filing: **01.05.1998**

(84) Designated Contracting States:
**AT BE CH CY DE DK ES FI FR GB GR IE IT LI LU MC NL PT SE**

(30) Priority: **02.05.1997   GB 9709063**
**30.07.1997   US 54195 P**
**22.12.1997   GB 9727112**
**22.12.1997   GB 9727113**
**27.04.1998   GB 9808989**
**27.04.1998   GB 9808993**
**27.04.1998   GB 9808990**
**27.04.1998   GB 9808991**
**27.04.1998   GB 9808992**

(62) Document number(s) of the earlier application(s) in accordance with Art. 76 EPC:
**98303446.3 / 0 877 526**

(71) Applicants:
• **LSI Logic Corporation**
**Milpitas CA 95035 (US)**
• **British Broadcasting Corporation**
**London W1A 1AA (GB)**

(72) Inventors:
• **Guyot, Jean Marc**
**75014 Paris (FR)**

• **Clarke, Christopher Keith Perry**
**Pound Hill**
**Crawley RH10 4TR (GB)**
• **Mitchell, Justin David**
**Olivier Road**
**Maidenbower Crawley RH10 7ZH (GB)**
• **Sadot, Philippe**
**92410 Ville d'Avray (FR)**
• **Regis, Lauret**
**78120 Sonchamp (FR)**
• **Stott, Jonathan Highton**
**Horely**
**Surrey RH6 9AR (GB)**
• **Robinson, Adrian Paul**
**London W14 0RH (GB)**
• **Haffenden, Oliver Paul**
**London SW17 7LF (GB)**

(74) Representative: **Holmes, Miles Keeton et al**
**First Thought IP**
**35 New Broad Street House**
**New Broad Street**
**London EC2M 1NH (GB)**

Remarks:
This application was filed on 10-01-2008 as a divisional application to the application mentioned under INID code 62.

(54) **Demodulating video broadcast signals**

(57)    A demodulator suitable for implementation in a single chip for demodulating digital video broadcast signals comprising data modulated on a multiplicity of spaced carrier frequencies, wherein an input broadcast signal is converted to a frequency sufficiently low to enable analog digital conversion of the signal, the demodulator comprising analog to digital conversion means (20) for converting the broadcast signal to a series of digital samples, real to complex conversion means (22) for converting each digital sample to a complex number value, Fourier transform means (24) for analysing the complex number values to provide a series of signal values for each carrier frequency, frequency control means (9, 38), comprising means responsive to the output of said Fourier Transform means for producing a signal for controlling the frequency of the signal formed by said complex number values, and signal processing means for receiving the signal values and providing an output for decoding, the signal processing means including channel equalisation means (32) and channel state information generating means (34). Other arrangements are concerned with automatic frequency control for example based on coarse frequency control means for controlling the frequency in terms of increments of the carrier spacing frequency, and fine frequency control means for controlling the frequency for values less than a single carrier spacing frequency interval. Still other arrangements are concerned with timing synchronisation means for synchronising the Fourier Transform means with the symbol periods of the broadcast signal. Further arrangements are concerned with phase error correction, for example based on determining the variation in phase of continual

pilot signals between consecutive symbols in the broad-　　cast signals.

FIG. C2

ARCHITECTURE OF THE DTTV INTEGRATED CIRCUIT

**Description**

This invention relates to demodulating digital video broadcast (DVB) signals.

There are currently two major types of DVB, namely, terrestrial broadcasting and satellite/cable broadcasting. The invention is particularly, though not exclusively concerned with terrestrial broadcasting, which has special problems, particularly in communication channel impairment, arising from adjacent television channels, multipath, and co-channel interference, for example. A type of transmission which has been developed to meet these problems is known as Coded Orthogonal Frequency Division Multiplexing (COFDM) - see for example "Explaining Some of the Magic of COFDM" Stott, J.H. - Proceedings of 20th International Television Symposium, Montreux, June 1997. In COFDM, transmitted data is transmitted over a large number of carrier frequencies (1705 or 6817 for DVB), spaced (by the inverse of the active symbol period) so as to be orthogonal with each other; the data is convolutionally coded, to enable soft-decision (Viterbi) decoding. Metrics for COFDM are more complex than those of single frequency networks in that they include Channel State Information (CSI) which represents the degree of confidence in each carrier for reliably transmitting data.

Modulation and Demodulation of the carriers may be carried out by a Fast Fourier Transform (FFT) algorithm performing Discrete Fourier Transform operations. Naturally, various practical problems arise in demodulation, firstly in translating the transmitted signal to a frequency at which demodulation can be carried out, and secondly by accurately demodulating the data from a large number of carriers in a demodulator which is not overly complex or expensive.

It is an object of the present invention to provide a demodulator for digital terrestrial broadcast signals which can demodulate data transmitted by a COFDM system but which may be manufactured simply and inexpensively, preferably in a single integrated circuit chip.

The present invention provides as a first aspect, apparatus for demodulating digital video broadcast signals comprising data modulated on a multiplicity of spaced carrier frequencies, including:

down-conversion means for converting an input broadcast signal to a frequency sufficiently low to enable analog to digital conversion of the signal;
analog to digital conversion means for converting the broadcast signal to a series of digital samples, real to complex conversion means for converting each digital sample to a complex number value, Fourier Transform means for analysing the complex number values to provide a series of signal values for each carrier frequency, frequency control means, comprising means responsive to the output of said Fourier Transform means for producing a signal for controlling the frequency of the signal formed by said complex number values, and signal processing means for receiving the signal values and providing an output for decoding, the signal processing means including channel equalisation means and channel state information processing means.

In accordance with the invention, the input broadcast signal which is normally a UHF signal, say 700 MHz, is down converted, preferably in two stages, firstly to about 30-40 MHz and secondly to about 4.5 MHz. Since the bandwidth of the signal is about 7.6 MHz, an IF frequency of 4.5 MHZ represents essentially a DC or base band signal which can then be sampled by means of an analog to digital converter. Subsequent to analog to digital conversion, the sampled signal is converted to complex number values, in order to represent a true DC signal centred on 0Hz. This facilitates the operation of the Fourier transform device which as mentioned above is normally an FFT performing a DFT on each carrier signal. The result of the transform is a series of data values for the data encoded on each carrier wave.

The data is processed, principally for channel equalisation and for weighting the contribution of each channel by the derived Channel State Information.

Another signal processing employed is correction for common phase error. As will become clear below, phase error in COFDM signals is present in two components, a random component and a component which is common to all carriers, arising from local oscillator phase noise. Such common phase error may be removed by a technique as described in more detail below.

The process of demodulation requires very accurate tracking of the input signal and to this end automatic frequency control and timing control are desirable. Timing control is necessary in order to ensure that the timing window for the FFT is correctly positioned in relation to the input waveforms. Thus, the sampling by the ADC must be synchronised with the input wave forms. For an input signal centred on 4.57 MHz, an ADC operating frequency of 18.29 MHz (4.57 x 4) is preferred. The ADC is maintained in synchronisation by a loop control wherein the complex signal value at the input of the FFT is applied to a time synchronisation unit whose output is converted in a digital to analog converter (DAC) to an analog value, which is employed to control a voltage controlled oscillator providing a clock signal to the ADC.

Automatic frequency control (AFC) is necessary to maintain the demodulation process in synchronisation with down-conversion, otherwise a gradually increasing phase error occurs in the recovered signals. To this end, a signal derived subsequent to the FFT, from the demodulated signals may be fed back to the local oscillator for IF generation in order to maintain frequency synchronisation. However, such control has disadvantages of complication in that a control signal must be fed back to the IF generation means and the control signal must adjust the reference crystal within the search range of the AFC. As an alternative therefore, AFC may be provided as a digital control applied to a digital frequency shifter coupled the input of the FFT device. The process of automatic frequency control (AFC) is described in more detail below. However, it will be shown that AFC requires a coarse control and a fine control. The fine control is dependent upon measuring the phase difference (first difference) between two adjacent continual pilot signal samples, whereas the coarse control requires the determination of rate of change of phase (or second difference) i.e., the difference between two consecutive phase differences between adjacent samples.

An important consideration in designing a demodulator for incorporation in an integrated circuit chip is reducing the separating requirements for memory. Bearing in mind the chip may only contain about 1 M Bit of memory, and that signal values for up to about 7000 carrier frequencies may be processed in the chip, this requires tight control over the use of available memory. Certain operations such as Fourier transformation and symbol interleaving require fixed amounts of memory (about 50% of the total). However, other operations such as timing synchronisation, common phase error (CPE) correction, and channel equalisation require some memory but the amount of memory can be adjusted.

In particular, as will become clear below, common phase error requires at least one symbol delay (for each carrier) and channel equalisation may use three symbols delay (for each carrier). However, as pointed out above, automatic frequency control requires measuring phase differences, as does common phase error control. It has been found that by using the signal for second difference in phase error, it is possible to adjust the channel equalisation to use only two symbols delay. Since the common phase error determination already employs two symbols delay, it has been found, in accordance with the invention, that memory required for such two symbol delays may be shared between CPE correction and channel equalisation, so that data is stored in the same memory area for the two operations in different phases of operation of the demodulator.

Accordingly, the present invention provides in a further aspect, apparatus for demodulating a digital video broadcast signal comprising data modulated on a multiplicity of spaced carrier frequencies, the apparatus including:

transform means for analysing a version of the broadcast signal to provide a series of signal values for each of the multiplicity of carrier frequencies,
phase error correction means for recovering the common phase error in said signal values, including a first plurality of delay elements for processing delayed versions of the signal values with current signal values,
channel equalisation means for compensating for communication channel impairments for receiving the phase error corrected signal values and including a second plurality of delay elements for processing delayed versions of the signal values with the current values, and
wherein the apparatus is arranged such that the phase error correction means employs said first plurality of delay elements in one phase of operation and the channel equalisation means employs said second plurality of delay elements in a different phase of operation whereby to permit the first and second plurality to be constituted by the same memory elements.

BRIEF DESCRIPTION OF THE DRAWINGS

A preferred embodiment of the invention will now be described with reference to the accompanying drawings, in which:-

Figure A1 is a schematic block diagram of a digital terrestrial front end converter incorporating the present invention;
Figure A2 is a more detailed block diagram of demodulating apparatus according to the invention forming part of the converter of figure AI;
Figure A3 is a schematic view of a chip incorporating the apparatus of Figure A2; and
Figure A4 is a schematic block diagram of phase error correction means and channel equalisation means.

DESCRIPTION OF THE PREFERRED EMBODIMENTS

The preferred embodiment of the present invention comprises a front end for digital terrestrial television transmitted according to the DVB-T specification. The front end consists of two separate components. First, an analog down-converter that converts the input signal from UHF to a low IF. Second, an integrated circuit chip that accepts the analog signal from the down-converter and performs the required DSP operations, which include synchronisation and demodulation, to form a stream of soft decisions suitable for presentation to an FEC decoder (Forward Error Correction decoder).

Full compliance to the DVB-T specification means that the chip is capable of decoding signals transmitted in the following modes:

1) A signal that contains either 1705 or 6817 active carriers, commonly referred to as 2K and 8K respectively. The chip includes the functionality and memory required to perform the FFT algorithm in both modes.

2) Non-hierarchical QPSK, 16-QAM and 64-QAM constellations.

3) Hierarchical 16-QAM and 64-QAM constellations, either uniform or non-uniform with the possible scale factors $\alpha$=2 and $\alpha$=4.

4) Guard intervals 1/4, 1/8, 1/16 and 1/32 of the OFDM symbol length.

5) Viterbi code rates 1/2, 2/3, 3/4, 5/6 and 7/8.

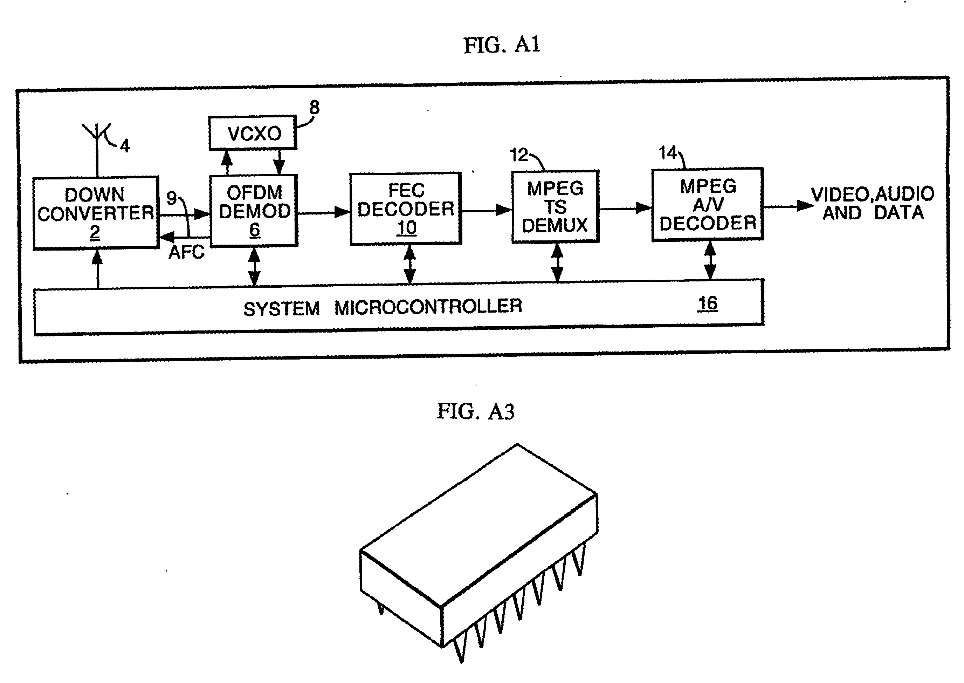

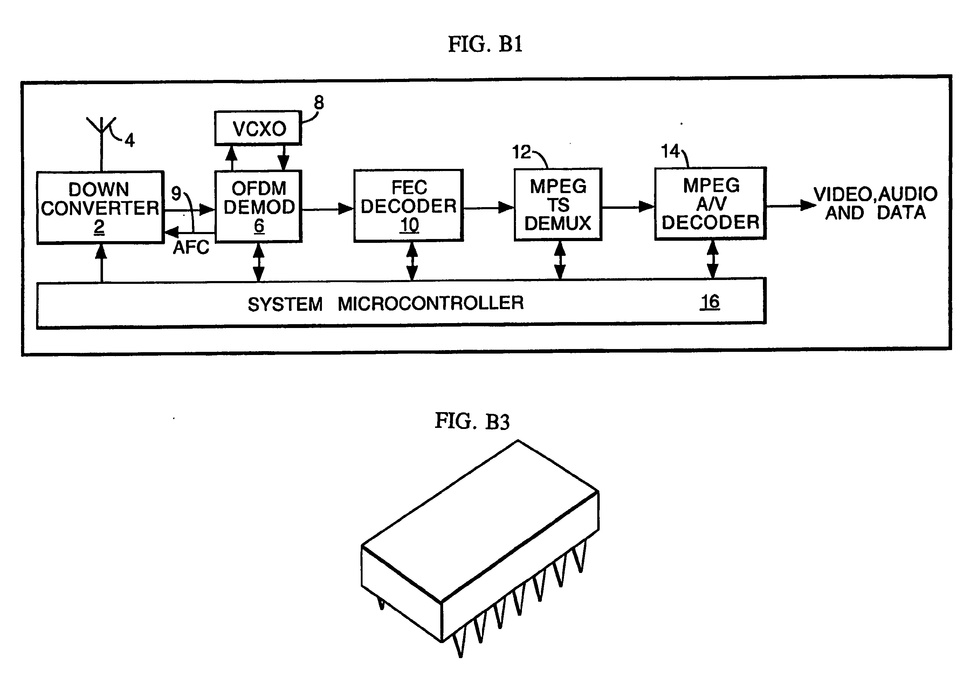

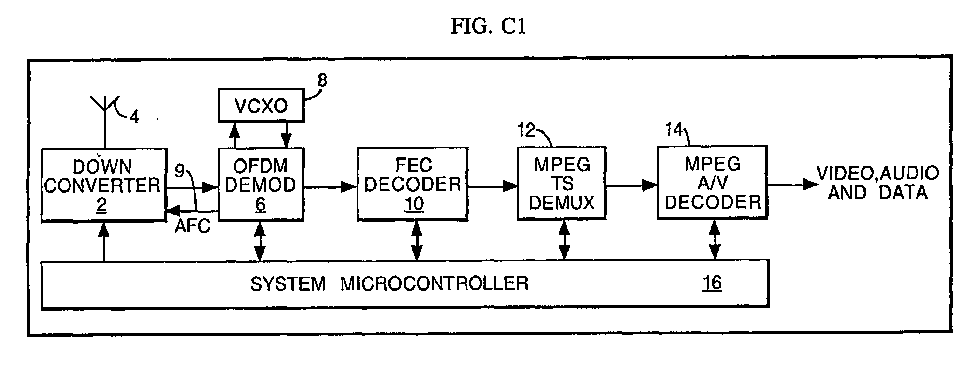

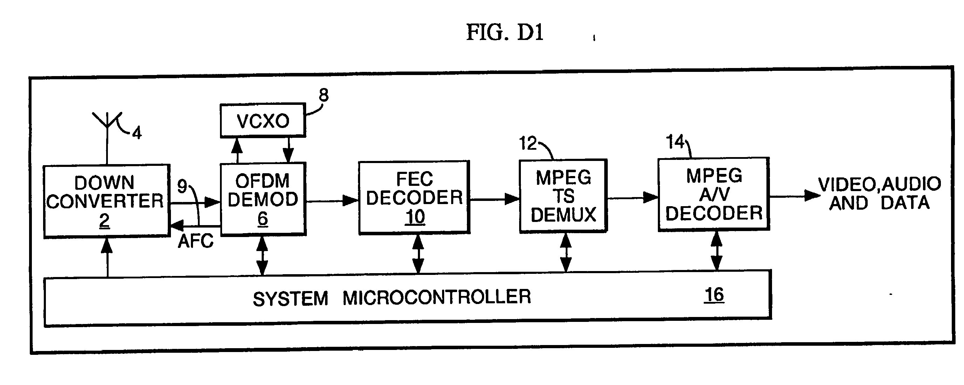

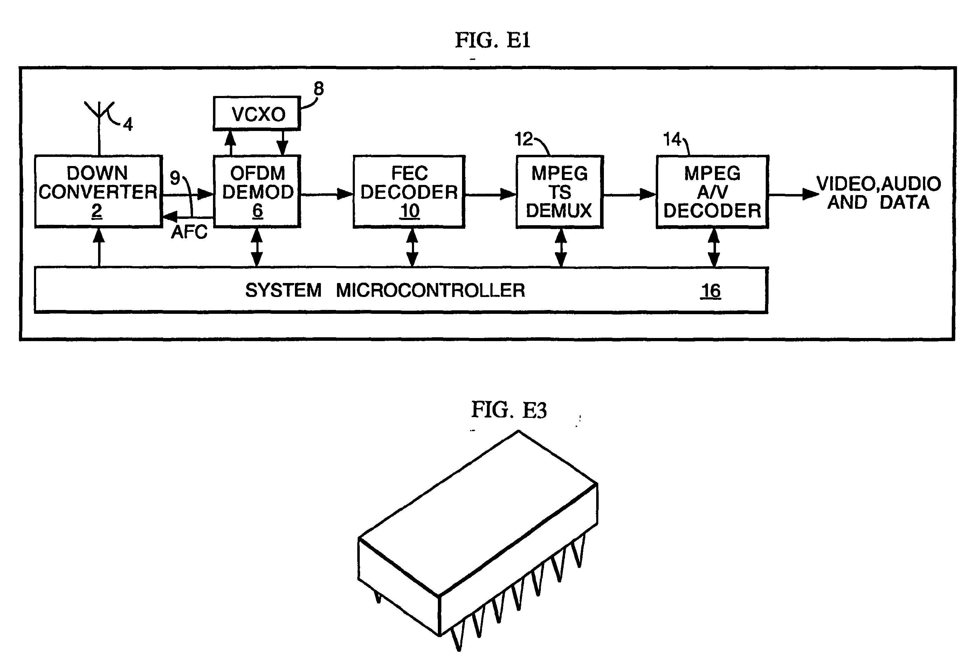

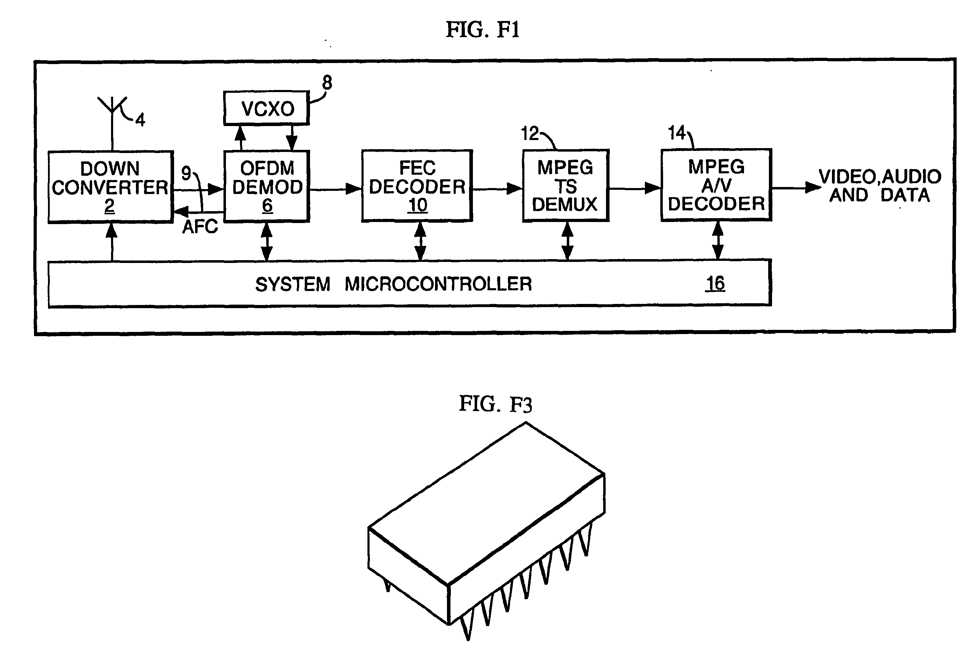

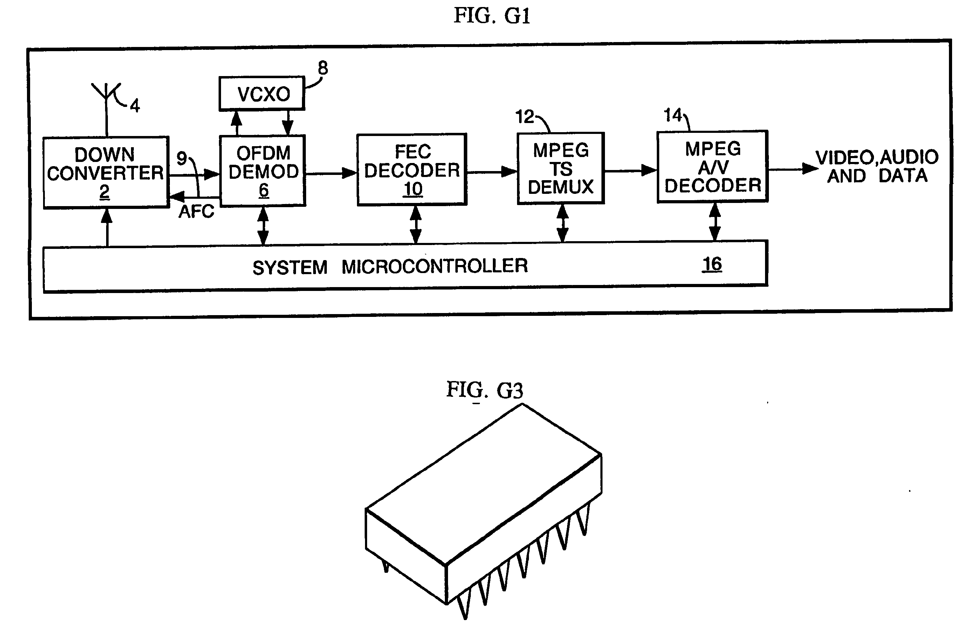

Referring now to figure 1, a block diagram of the front end system, a down-converter 2 receives the input UHF broadcast signal from an antenna 4 and converts the carrier signal to a first IF frequency of 30-40 MHz and then to a second IF frequency of 4.57 MHz. Since the bandwidth of the modulated data is about 7.6 MHz, this second IF signal is sufficiently low in frequency to present the signal as a base band signal to a demodulator chip 6. Demodulator chip digitises the incoming signal at a rate determined by a voltage controlled oscillator 8, and provides an Automatic Frequency Control on a line 9 to down-converter 2. The output of demodulator 6 represents demodulated data and is fed to a FEC decoder 10 (Forward Error Correction or Viterbi decoder) for recovering the data. The decoded data is fed to a transport stream demultiplexer 12 and then to an audio-visual decoder 14. The front end is controlled by a system microcontroller 16.

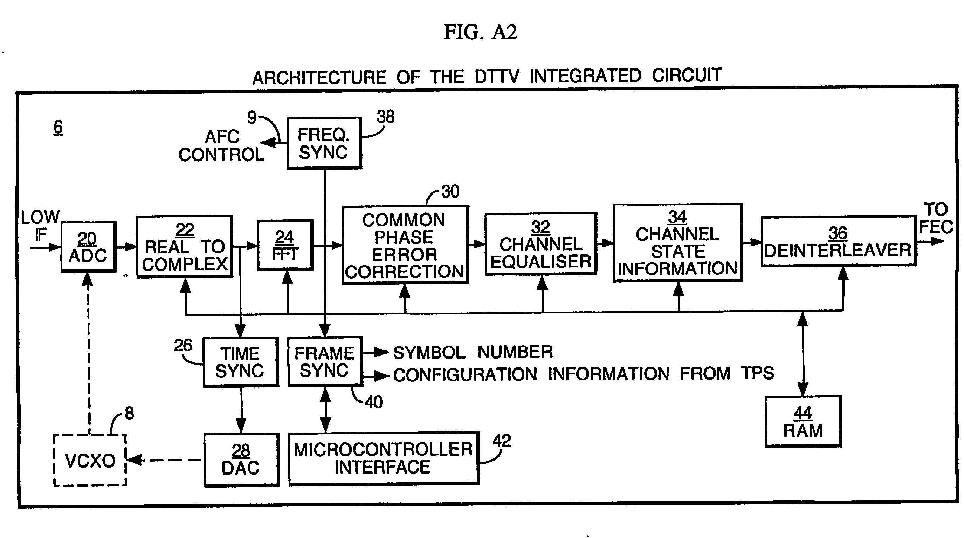

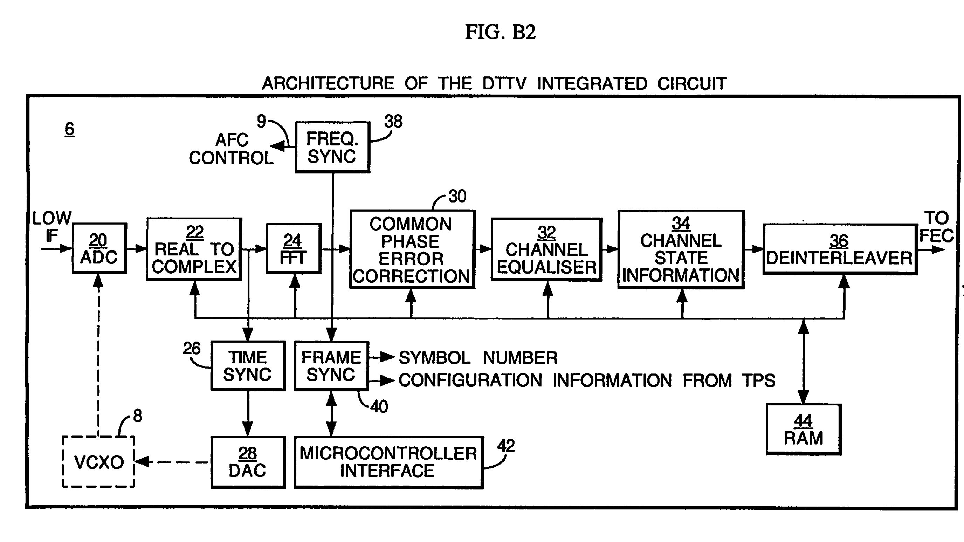

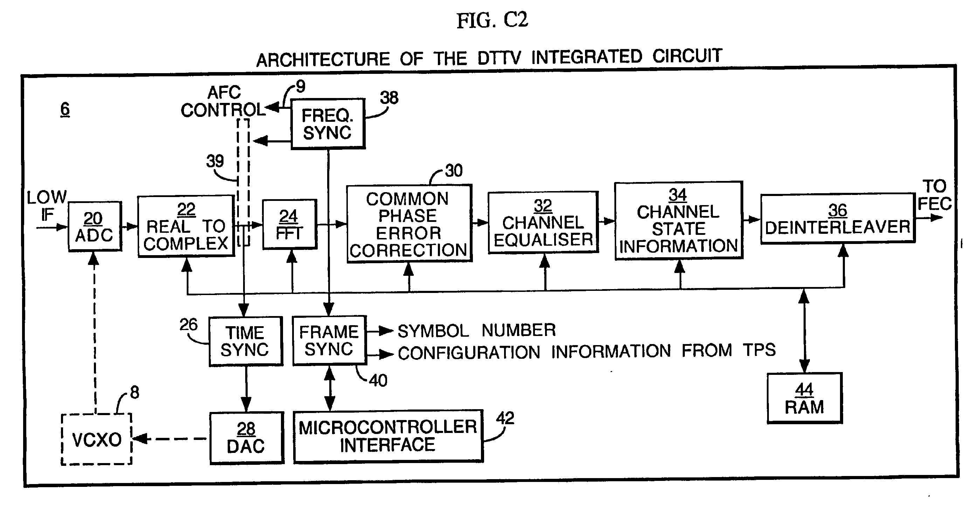

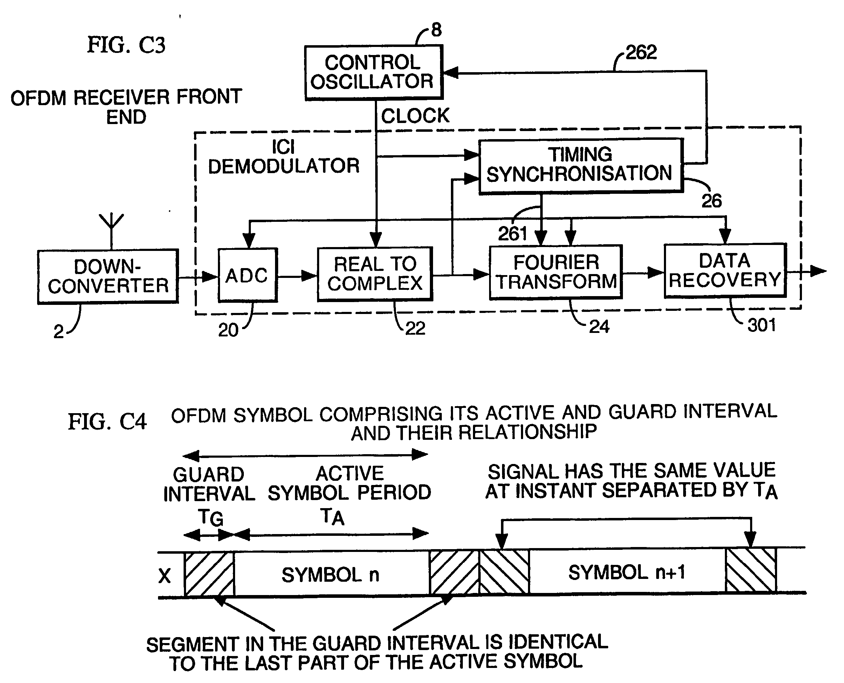

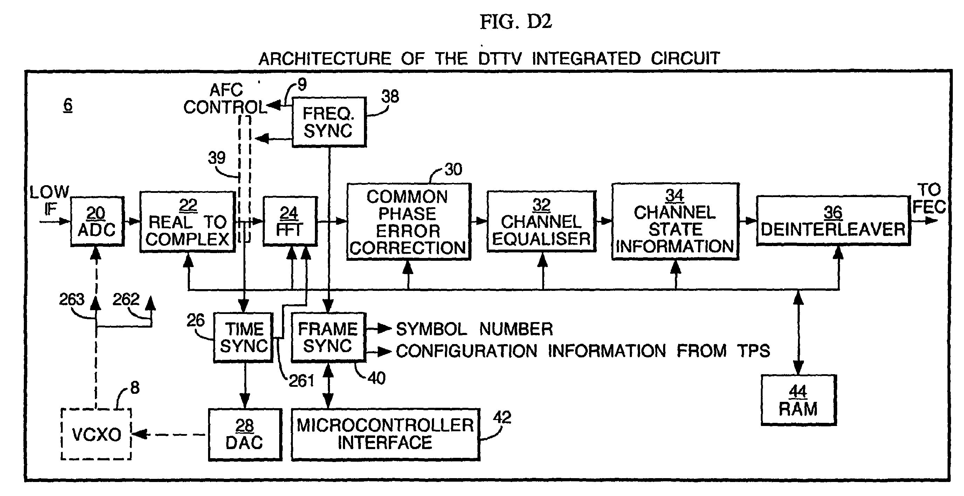

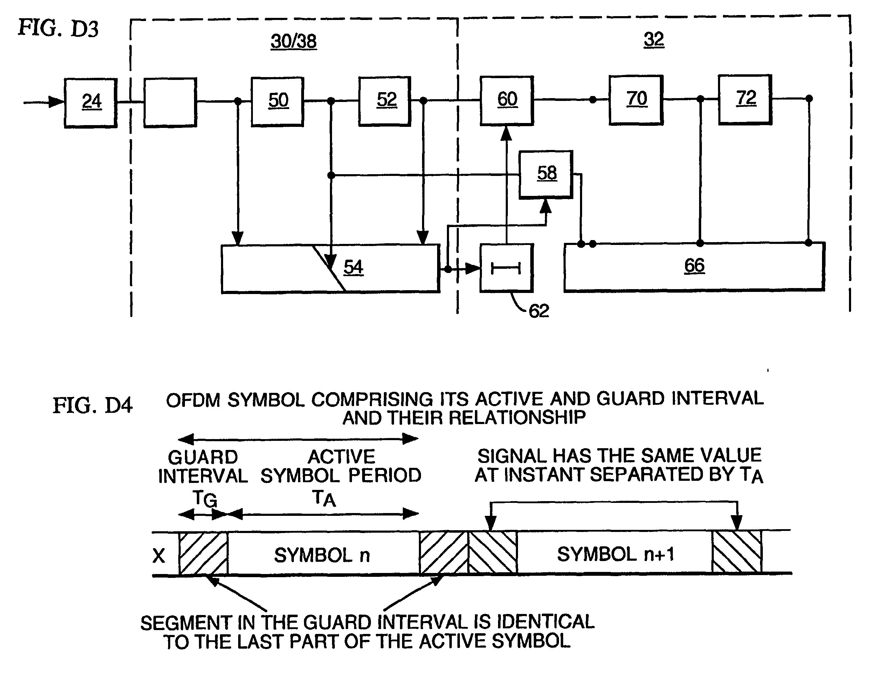

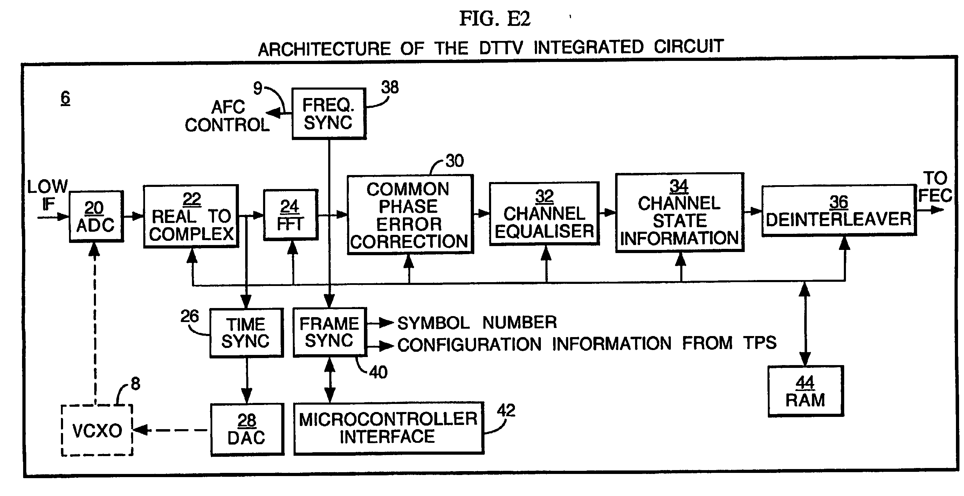

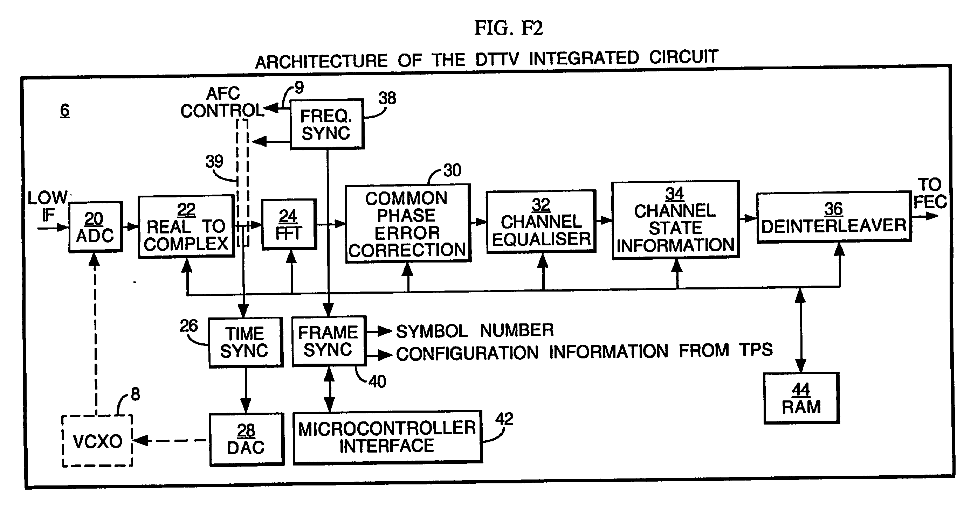

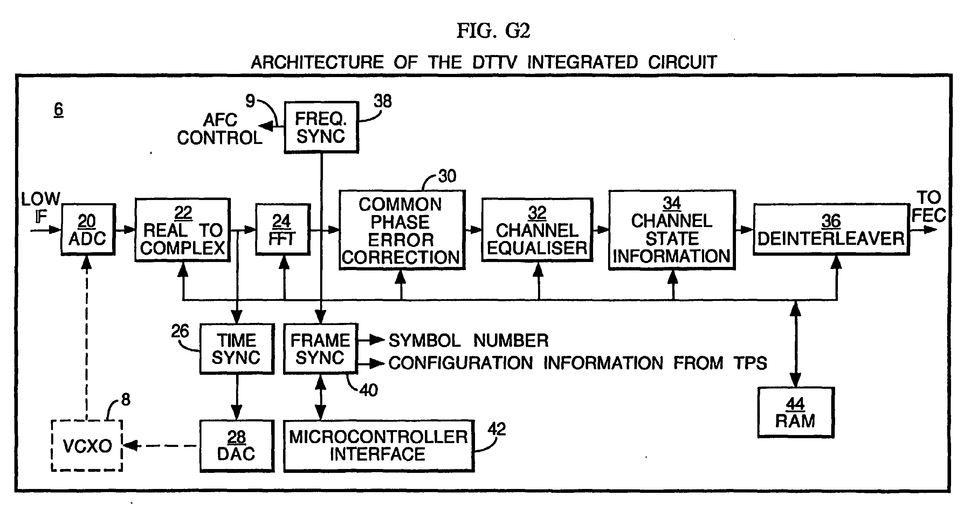

Referring now to figure 2, this shows the demodulator chip 6 in more detail. The chip itself is shown schematically in figure 3. The low second IF is fed to an analog digital converter which samples the IF signal at a frequency of 18.29 MHz (x 4 the second IF frequency of 4.57 MHz), in an analog to digital converter 20. The digital output samples are fed to a real to complex converter 22 which converts the digital samples to complex number values in order to provide a complex signal centred on zero frequency. This signal is fed to a Fast Fourier Transform device (FFT) 24 and to a timing synchronisation unit 26 which derives a value from the complex input signal which is fed to a digital to analog converter 28 to supply an analog control voltage to a voltage controlled oscillator 8, which provides a sampling clock signal to analog to digital converter 20.

The FFT device 24 has four modes of operation. Firstly, it is capable of performing either a 2048 point or an 8192 point transform. Second, it is capable of performing the transform in either direction. The inverse FFT functionality is provided so that the integrated circuit may be used in applications requiring OFDM modulation. In any event, the FFT performs a series of discrete Fourier transforms on each carrier frequency to provide at an output the data symbols for each carrier frequency. These output signals are corrected in phase at a common phase error generator unit 30 and then passed to a channel equaliser 32, a channel state information correction unit 34 and a deinterleaver 36. The signal thus processed is then passed at an output from the demodulator to forward error correction unit 10. The phase error correction block 30 calculates the common phase error of the signal and applies the necessary correction. The channel equaliser 32 first performs linear temporal equalisation followed by frequency equalisation using a high order interpolating filter. The equaliser outputs an equalised constellation to the channel state information unit 34. Unit 34 generates 3 or 4 bit soft decisions which are suitable for presentation to a Viterbi decoder. Deinterleaver 36 performs firstly symbol deinterleaving followed by bit deinterleaving.

In addition, the output signals from FFT 24 are passed to a frequency synchronisation unit 38 which converts it to a control signal for automatic frequency control, which acts upon a local oscillator in down-converter unit 2 for adjusting the frequency of the first or second IF.

In addition, the output of FFT 24 is fed to a frame synchronisation unit 40 whose outputs are fed forward to units 10, 12 and 14 (Fig. 1). A microcontroller interface 42 is provided, and in addition RAM memory 44 is provided to which all the units 22, 24, 30-36 have access to in order to provide their required operations.

Channel Impairments

The front end architecture of Figure 1 must provide the best possible performance under actual operating conditions. There are several key types of channel impairments that the front end must be adept at dealing with, as follows:

1) Adjacent analog television signals. In multi-frequency networks OFDM signals may be transmitted in adjacent channels to PAL signals that could be 30dB higher in power. Therefore, special care must be taken when designing the IF filtering scheme in the down-converter, in particular by providing a high pass filter for the second IF having a stop band from 0 Hz to a certain higher frequency.

2) Co-channel analog television interference. This will be particularly significant in interleaved frequency networks.

3) Delayed signal interference, either due to reflections from natural obstacles, or created by the network itself as is the case with single frequency networks. Such interference causes frequency selective fading which may completely erase, or significantly affect the reliability of, the bits of information carried by some of the OFDM carriers. This is compensated for in Channel State Information block 34.

4) Narrow-band interference coming from intermodulation products due to nonlinearities in the transmission chain may also corrupt the bits of information carried by some of the OFDM carriers but in a different way from the frequency selective fading.

5) Co-channel interference from artificial sources such as radio microphones operating in the UHF frequency.
6) and of course thermal noise, as is present in every transmission system.

The down-converter 4 must cope with the specific requirements of COFDM whilst operating in the channel conditions described above. This means:

1) The IF must ensure the proper rejection of adjacent channel analog television signals.
2) The gain distribution must preserve linearity in order not to create intermodulation products between the OFDM carriers, thus creating a self-interference effect on the signal, and
3) The synthesiser phase-noise characteristics must be compatible with 64-QAM operation.

Memory Budget

A significant problem for demodulator integrated circuit 6 is the amount of RAM 42 that the chip requires.

TABLE 1 - Proportion of RAM used

| Architecture component | % RAM |
|---|---|
| Timing synchronisation | 2% |
| Frequency synchronisation | 11% |
| FFT | 38% |
| Common phase error correction | 11% |
| Channel equalisation | 23% |
| Channel State Information | 3% |
| Deinterleaver | 12% |

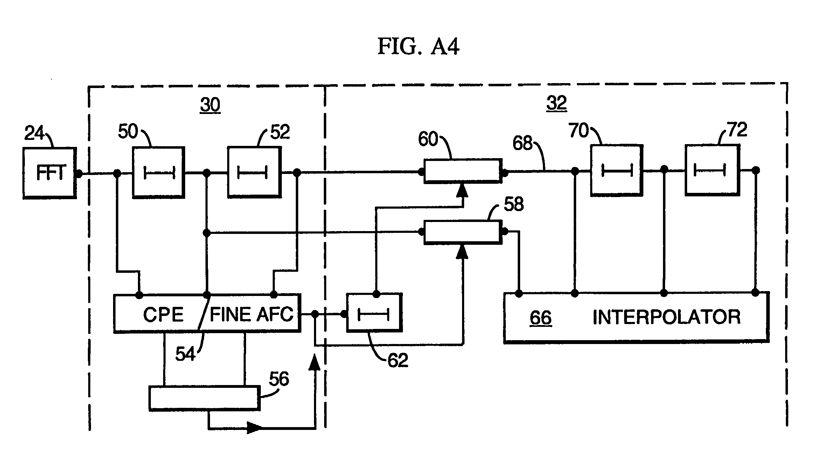

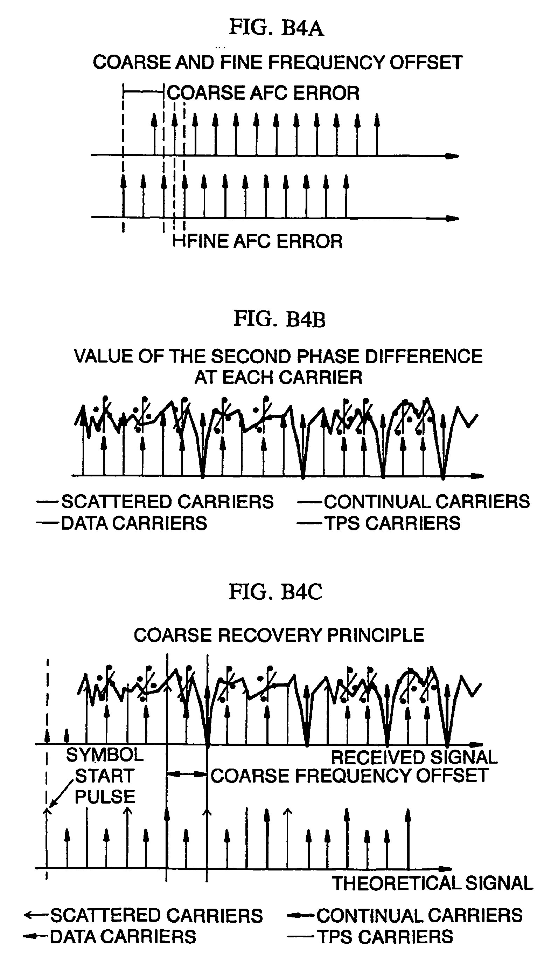

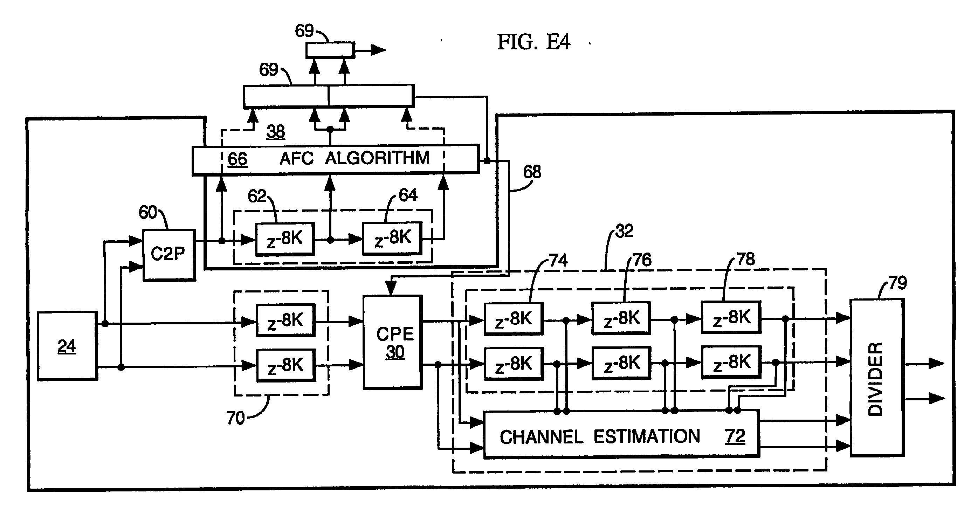

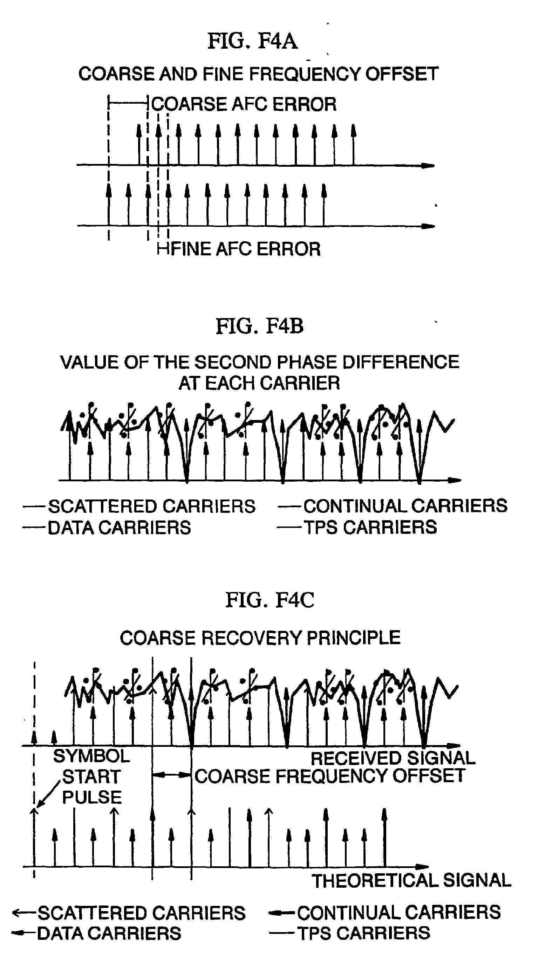

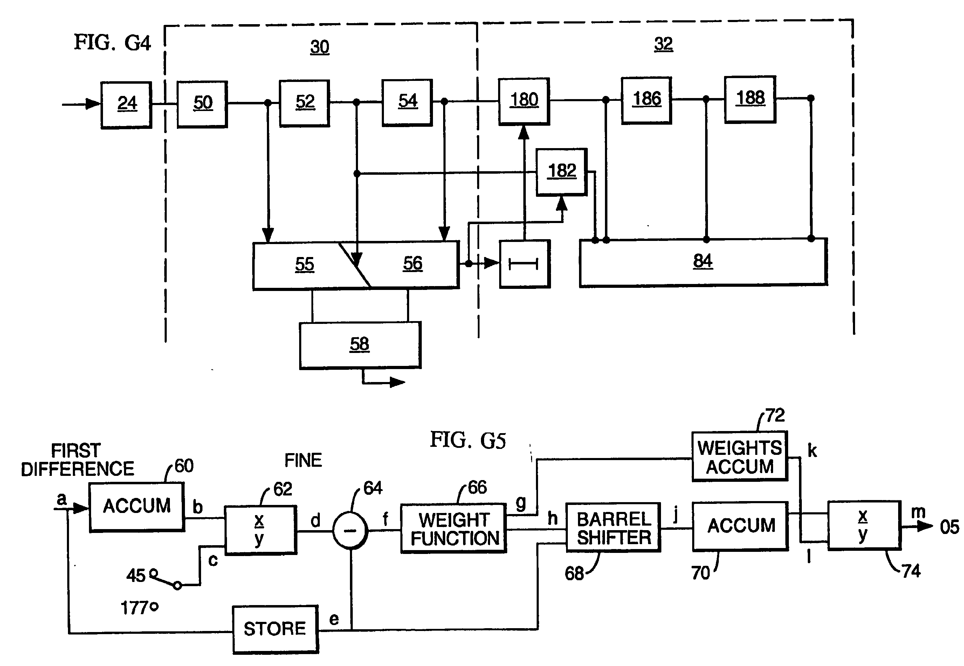

It is necessary to make the best possible use of the RAM. Some of the blocks of memory, such as the FFT and symbol deinterleaver, require fixed amounts of RAM and it is not possible to reduce them (except by reducing the word widths and so degrading the performance). Other blocks, for example, the timing synchronisation, required some algorithmic alterations for the sole purpose of reducing the amount of memory but without degrading the performance. A technique that is employed to make best use of the available memory is to "reuse" some of the memories. For example, the data delay required to implement common-phase-error correction doubles as the first data delay in the channel equaliser. This means that only two additional data delays were required to implement full linear temporal equalisation. This is explained in more detail below with reference to Figure 4.

Table 1 shows the final allocations of RAM that were made in the chip. As this table shows, the highest memory usage is in the FFT circuitry and the smallest is in the timing synchronisation circuitry. This memory allocation provides the best compromise between performance and cost.

Analog versus Digital AFC

One of the processes that is required in the synchronisation of the demodulator is to obtain frequency synchronisation. There is a choice as to whether to apply the required frequency shift as an analog correction in the down-converter 2, or as a digital frequency shift in the demodulator chip.

Analog frequency correction

If the frequency correction is implemented by adjusting the frequency of the reference crystal in the down-converter 2, then a control signal on line 9 is provided from the output of the integrated circuit 6 back to the down-converter. This method has the advantage that a SAW filter inside the down-converter can be made as narrow as possible. The disadvantages are twofold. First, the integrated circuit must pass a control signal back to the down-converter. Second, the architecture of the down-converter is made more complicated since the control signal must adjust the reference crystal within the search range of the AFC.

Digital Frequency Correction

If the frequency correction is implemented in the integrated circuit 6, then the architecture of the down-converter 2 is made much simpler since there is no longer any need to have a control signal from the chip 6, and the loop in the down-converter that drives the reference crystal is no longer required. The disadvantage of this method is that the bandwidth of the SAW filter must be increased by the AFC search range. This causes a significant penalty in terms of the adjacent channel protection ratio when the receiver is used in an environment where the existing analogue services are operated in adjacent channels to digital services. The architecture described will permit both analog and digital correction.

Temporal Response versus Noise Averaging in Channel Equaliser 32

The signal from the FFT is affected by all the impairments caused by the channel; for example, in the presence of a single echo, the FFT output will suffer from frequency selective fading. The purpose of the channel equaliser 32 is to rotate and scale the constellation so that the constellations on all the carriers are of a known size ( but not necessarily of the same reliability), the process is performed by using the scattered pilot information contained in the COFDM signal. The scattered pilots provide a reference signal of known amplitude and phase on every third OFDM carrier. Since this scattered pilot information is subject is subject to the same channel impairments as the data carriers, the scattered pilots are noisy.

In the present invention, temporal linear interpolation is performed between two received scattered pilots, and these interpolated values are used as the reference for frequency equalisation of the data. Since scattered pilots at the same time duration are spaced 4 OFDM symbols apart, a compensating data delay of 3 OFDM symbols must be provided to permit this option.

Common Phase Error Correction versus Down Converter Performance

The down converter performance has a different set of requirements from those demanded by down-converters suitable for analog television. For example, in a down-converter for analogue television, particular attention must be given to the group delay-characteristics. However COFDM has been specially designed to be robust to this type of distortion, and so the group delay is much less important.

Another difference between the two requirements is in the local oscillator phase noise performance. The addition of local oscillator phase noise to an OFDM signal has two principal effects:

1) To rotate the received constellation by an amount which is the same for all carriers within one OFDM symbol, but varying randomly from symbol to symbol. This is called the common phase error (CPE) and primarily results from the lower- frequency components of the phase- noise spectrum; and
2) To add Inter-Carrier Interference (ICI) of a random character similar to additive thermal noise. ICI primarily results from the higher frequency components of the phase-noise spectrum. ICI cannot be corrected and must be allowed for in the noise budget. It can be kept small in comparison with thermal noise by suitable local oscillator design.

It is possible to remove the common phase-error component caused by phase noise added in the down-converted by digital processing in the chip. This processing is performed by the common-phase-error correction block 30.

The common-phase-error correction block 30 is able to remove the common phase error because all carriers within a given symbol suffer the same common phase error. By measuring the continual pilots, whose intended phase is the same from symbol to symbol, the common phase error is determined and then subtracted from the phase of all the data cells in the same symbol. There are sufficient continual pilots (which in any case are transmitted with a power approx. 2.5 dB greater than data cells) that the effect of thermal noise on this measurement can be rendered negligible by averaging.

There are essentially three components required to implement common-phase-error correction in the chip. These are:

1) A one-symbol data delay; since the common phase error varies randomly from symbol to symbol, it must be applied to the symbol from which it was calculated. Furthermore, it is not possible to calculate the common phase error until the whole symbol has been received.
2) The digital circuitry required to calculate the common phase error based on the received data.
3) A phase-to-complex-number look-up table. This is required since the common phase error value that is calculated will be a phase value. In order to apply the correction to the signal, the signal must be multiplied by a complex number equal to the complex representation of the phase.

These three factors, which together form the "cost" of implementing the feature on the chip, must be balanced against the cost of improving the performance of the down-converter so that the phase-noise it introduces is negligible.

Referring now to Figure 4, this shows a more detailed block diagram of the common phase error correction circuit 32 and channel equaliser 30. The common phase error correction circuit 30 receives an output from FFT 24 which is applied to first and second delay elements 50, 52 (two such elements being provided for each carrier frequency). Signals from the inputs and outputs of delay elements 50, 52 are provided to subtraction circuits in a unit 54 in order to derive phase error signals (first difference).

In addition, the difference (second difference) between the phase error signals is determined in unit 56. These phase error signals are averaged for the continual pilot signals, as more particularly described in our copending application (GBP1288A). The assessed common phase error is applied to correction circuits 58, 60 , the output to correction circuit 60 being applied via a further delay element 62. The signal outputs from memory elements 50, 52 are thus corrected for phase in circuits 58, 60, and are applied to an interpolator 66 in channel equaliser circuit 32. The output circuit from correction circuit 58 is applied directly to the interpolator, but the signal from correction circuit 60 is applied to the interpolator firstly directly at tapping 68 and then via first and second memory elements 70, 72. Since the interpolator is provided with three sets of delayed symbols from delay element 62 and memory elements 70, 72 interpolation can be carried out on scattered pilots spaced four symbols apart, as provided in the ETSI standard and as described above.

By arranging for the circuits to operate in two phases of operation, in the first of which the common phase error is computed using delay elements 50, 52, and in the second of which interpolation occurs using memory elements 70, 72, it is possible to provide the two sets of memory elements 50, 52 and 70, 72, from the same section of RAM memory.

DEMODULATING DIGITAL VIDEO BROADCAST SIGNALS

This invention relates to demodulating digital video broadcast (DVB) signals.

There are currently two major types of DVB, namely, terrestrial broadcasting and satellite/cable broadcasting. The invention is particularly, though not exclusively concerned with terrestrial broadcasting, which has special problems, particularly in communication channel impairment, arising from adjacent television channels, multipath and co-channel interference, for example. A type of transmission which has been developed to meet these problems is known as Coded Orthogonal Frequency Division Multiplexing (COFDM) - see for example "Explaining Some of the Magic of COFDM" Stott, J.H. - "Proceedings of 20th International Television Symposium, Montreux, June 1997. In COFDM, transmitted data is transmitted over a large number of carrier frequencies (1705 or 6817 for DVB), spaced (by the inverse of the active symbol period) so as to be orthogonal with each other; the data is convolutionally coded, to enable soft-decision (Viterbi) decoding. Metrics for COFDM include Channel State Information (CSI) which represents the degree of confidence in each channel for reliably transmitting data.

Modulation and Demodulation of the carriers may be carried out by a Fast Fourier Transform (FFT) algorithm performing Discrete Fourier Transform operations.

Subsequent to demodulation, signal processing corrections are carried out such as channel equalisation, channel state information correction, phase error correction, and automatic frequency control. The demodulated and corrected signal may then be decoded in an FEC (forward error correction decoder) for recovery of data.

Automatic frequency control (AFC) is important, since frequency offsets may appear after down-conversion to an intermediate frequency, because of variations in local oscillator frequency. Such frequency offsets are lethal for frequency recovery, and must therefore be reduced to a minimum.

In regard to phase error correction, a principal problem is that of local oscillator phase-noise. The addition of local oscillator phase noise to an COFDM signal has two notable effects;

1) To rotate the received constellation by an amount which is the same for all the carriers within any one OFDM symbol, but varying randomly from symbol to symbol. This is called the Common Phase Error (CPE), and primarily results from the lower-frequency components of the phase-noise spectrum; and

2) To add Inter-Carrier Interference (ICI) of a random character similar to additive thermal noise. ICI primarily results from the higher-frequency components of the phase-noise spectrum. ICI cannot be corrected and must be allowed for in the noise budget. It can be kept small in comparison with thermal noise by suitable local oscillator design.

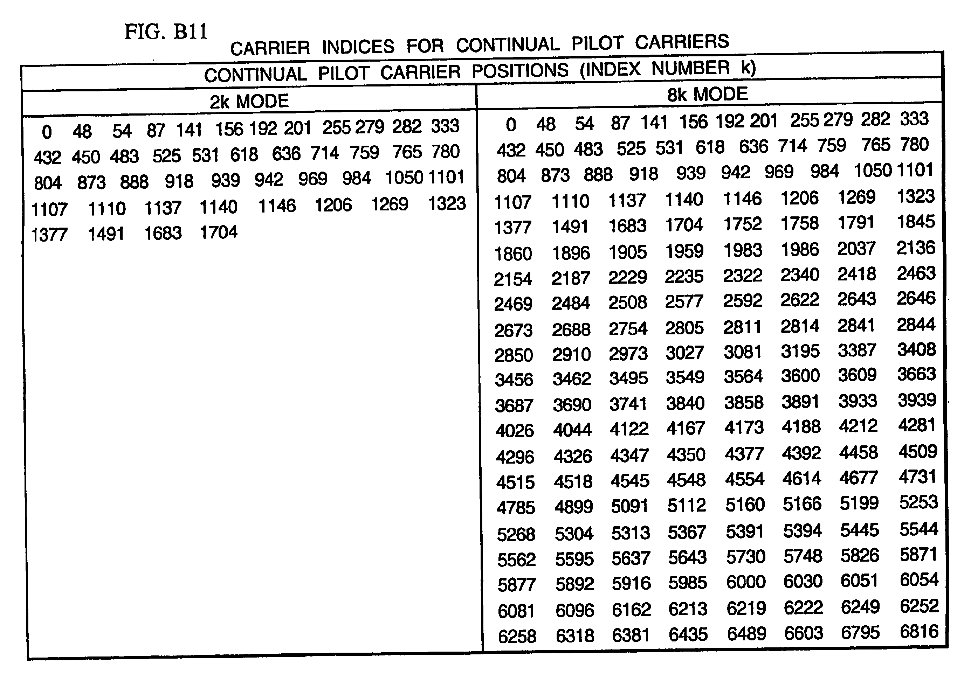

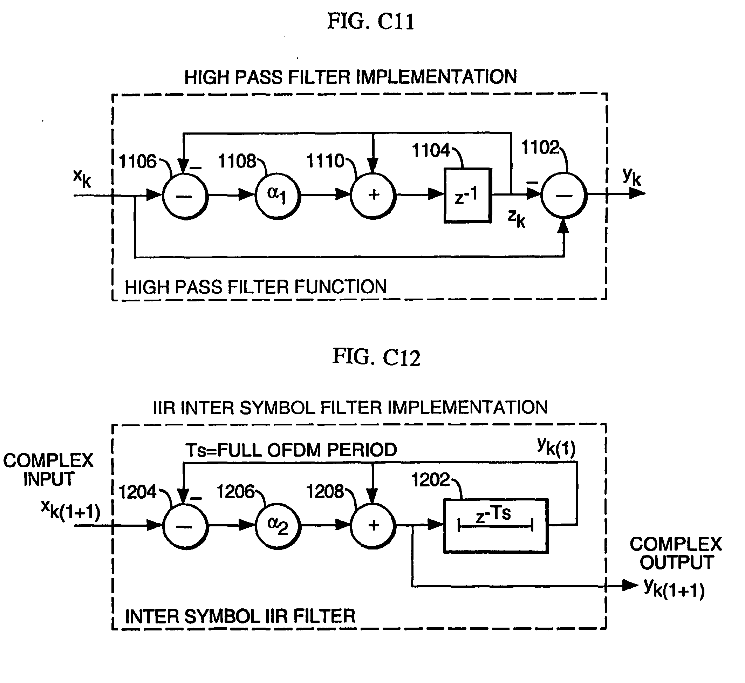

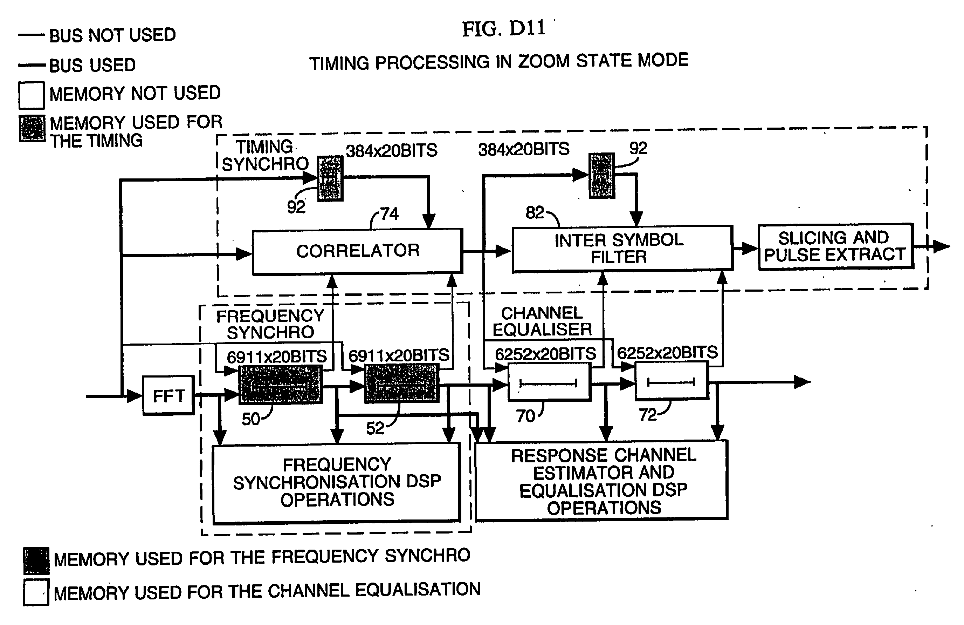

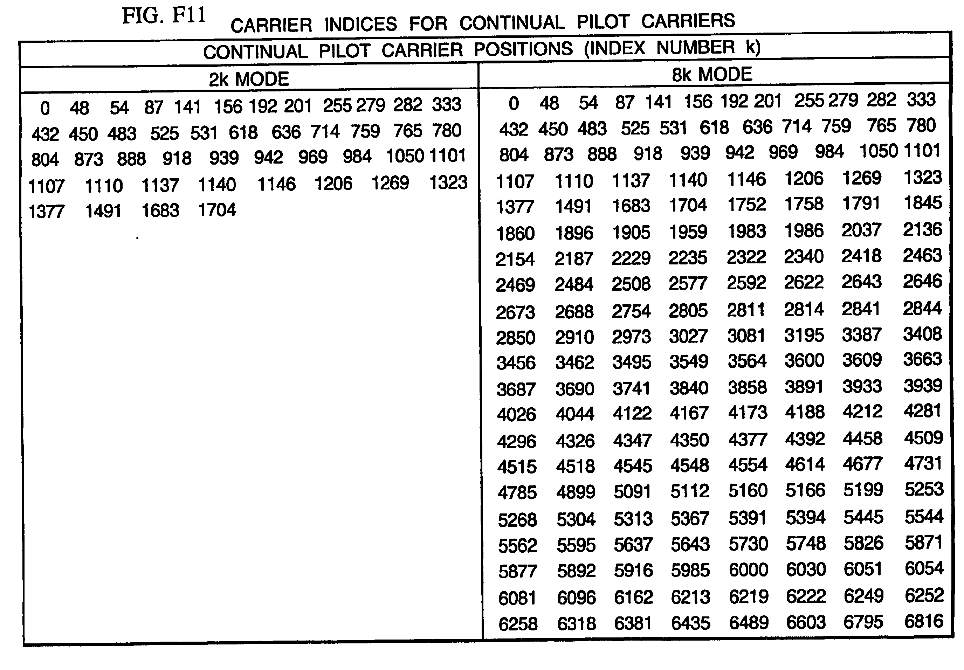

GB-A-2307155 describes (see Sec 2.1, p.7 and Fig. 11) an arrangement for automatic frequency control wherein it is recognised that the phase of the retrieved signals in OFDM is proportional to frequency error, and therefore a signal representing phase can be used to control the frequency of a local oscillator.

In practice, the frequency offset arising from local oscillator frequency variations may extend over an interval of many carrier frequencies. One technique which has been used in other applications, using QPSK or QAM modulation, to recover such large frequency offsets, is frequency sweeping. Frequency sweeping involves sweeping over a first frequency range, to detect a frequency lock condition, and then waiting for some time to allow the frequency lock algorithm to converge for a reliable detection of frequency lock. If there is no convergence, then the sweep range is increased until lock is reliably detected.

Whilst this method is suitable for QPSK or QAM modulation because an AFC lock indication can be provided very quickly, a similar method applied to COFDM would take an unduly long time for convergence, because an OFDM symbol lasts 1 millisecond, which would be the basis for any frequency detection algorithm

SUMMARY OF THE INVENTION

It is an object of the present invention to provide a method of automatic frequency control in a receiver for COFDM signals.

The invention is based on the recognition that, although the phase variation between adjacent symbols in COFDM is random, for continual pilot signals, as defined in the ETSI Specification, the intended phase of the signals is the same in adjacent symbol intervals. The phase error in adjacent data symbols may be determined by measuring the phase difference in adjacent symbol intervals in the continual pilot signals. Whilst this phase difference is primarily of use for common phase error correction, nevertheless it may also be employed for automatic frequency control since frequency variations are proportional to the change of phase.

Further, in accordance with the invention, it is recognised that frequency control may be split into two separate controls, namely coarse control for frequency offsets of integral numbers of carrier spacing intervals, and fine frequency control for frequency offsets of fractions of a carrier spacing interval.

For frequency offsets less than one carrier interval, the phase change may be used as representing the fine frequency offset. For coarse frequency control, a signal is used representing rate of change of phase. Since the phase variation between adjacent symbol intervals in continual pilots is constant, a second difference of phase error representing rate of change of phase error should be zero. This therefore provides a means of locating the continual pilot where the coarse frequency offset is a plurality of carrier spacings from the nominal position.

In our copending application (GBP12427A), there is claimed apparatus for demodulating digital video broadcast signals comprising data modulated on a multiplicity of spaced carrier frequencies, including:

analog to digital conversion means for providing a series of digital samples of the broadcast signal, transform means for analysing the samples to provide a series of data symbol values for each carrier frequency, signal processing means for processing the series of data signal values including phase error correcting means, and automatic frequency control means for controlling the frequency of the signals input to the transform means,

wherein the automatic frequency control means includes coarse frequency control means for controlling the frequency in terms of increments of the carrier spacing frequency, and fine frequency control means for controlling the frequency for values less than a single carrier spacing frequency interval,

wherein the coarse frequency means filter means for assessing a group of a predetermined number (N) of carrier signals on either side of the nominal position of a plurality of predetermined continual pilot signals to determine which signal best represents the continual pilot signal, whereby to determine the coarse frequency error.

Problems arise in that where large frequency offsets may be encountered, the number (2N + 1) of carrier signals that needs to be assessed becomes large, and the nominal position of more than one continual pilot may be present in the search range. Hence a false minimum value may be assigned as the continual pilot being located. A further problem is that because of the wide search range, the overall filtering effect is diminished and the immunity to noise is decreased.

The present invention provides apparatus for demodulating digital video broadcast signals comprising data modulated on a multiplicity of spaced carrier frequencies, including:

analog to digital conversion means for providing a series of digital samples of the broadcast signal, transform means for analysing the samples to provide a series of data symbol values for each carrier frequency signal processing means for processing the series of data symbol values including phase error correcting means, and automatic frequency control means for controlling the frequency of the signals input to the transform means,

wherein the automatic frequency control means includes coarse frequency control means for controlling the frequency in terms of increments of the carrier spacing frequency, and fine frequency control means for controlling the frequency for values less than a single carrier spacing frequency interval,

wherein the coarse frequency means includes a filter means for assessing a group of a predetermined number (N) of carrier signals on either side of the nominal position of a plurality of predetermined continual pilot signals, wherein the output of the filter means for each carrier assessed is provided to respective memory locations of memory means, the memory means being divided into a plurality of sections, first means for determining within each section a first signal best representing the continual pilot signal, and second means for determining from among the first signals from the plurality of sections a second signal which best represents the continual pilot signal.

As preferred, the rate of change of phase of each of said predetermined number of carrier signals between consecutive symbol intervals is determined, and applied as inputs to respective filters of the bank of filters. Preferably, the filter means comprises a recursive filter for providing an output representative of the accumulated value of a plurality of previous input values, and the minimum output value of the output of the bank of filters is selected.

Various configurations of filter may be envisaged. It would be possible to provide a separate filter could for each carrier signal or group of carrier signals assessed, which would however be very expensive in terms of hardware. However it is realised in accordance with the invention that the coarse frequency error will normally be the same for all carriers, and hence a filter can be arranged to operate on samples of carriers which are the same spacing from the theoretical position of the pilot in consecutive groups of carriers. Thus usually filtering will be carried out over a number of symbol intervals, and in each symbol interval a plurality of pilot signals are assessed. In accordance with the invention, it is preferred in order to reduce hardware to provide a single filter means with access to said memory means in which the filtered samples for each carrier position are stored and accessed and updated as required. As an alternative, a respective filter means may be provided for each of said memory sections, to process the carriers associated with the respective memory section.

BRIEF DESCRIPTION OF THE DRAWINGS

A preferred embodiment of the invention will now be described with reference to the accompanying drawings, in which:-

Figure B1 is a schematic block diagram of digital terrestrial front end converter incorporating the present invention;
Figure B2 is more detailed block diagram of demodulating apparatus according to the invention forming part of the converter of figure B1;
Figure B3 is a schematic view of a chip incorporating the apparatus of Figure B2;
Figures B4A, B4B and B4C are diagrams illustrating the recovery of coarse frequency error;
Figures B5 is a block diagram illustrating apparatus for recovering coarse frequency error;
Figure B6 is a schematic waveform diagram illustrating a problem with recovery of coarse frequency error;
Figure B7 is a block diagram of apparatus for recovering coarse frequency error in accordance with the invention;
Figure B8 is a more detailed block diagram of a common phase error/AFC circuit together with a channel equaliser circuit;
Figure B9 is a detailed block diagram of coarse AFC control, and Figure B9A is an associated waveform diagram;
Figure B10 is a block diagram of a circuit for providing CPE and AFC control from the circuits of Figure B9; and
Figure B11 is a table showing positions of continual pilot signals in the DVB-T 2K and 8K modes.

DESCRIPTION OF THE PREFERRED EMBODIMENTS

The preferred embodiment of the present invention comprises a front end for digital terrestrial television transmitted according to the DVB-T specification. The front end consists of two separate components. First, an analog down- converter that converts the input signal from UHF to a low IF. Second, an integrated circuit that accepts the analog signal from the down-converter and performs the required DSP operations, which include synchronisation and demodulation, to form a stream of soft decisions suitable for presentation to an FEC decoder (Forward Error Correction decoder).

Full compliance to the DVB-T specification means that the chip is capable of decoding signals transmitted in the following modes:

1) A signal that contains either 1705 or 6817 active carriers, commonly referred to as 2K and 8K respectively. The chip includes the functionality and memory required to perform the FFT algorithm in both modes.
2) Non-hierarchical QPSK, 16-QAM and 64-QAM constellations.
3) Hierarchical 16-QAM and 64-QAM constellations, either uniform or non-uniform with the possible scale factors $\alpha=2$ and $\alpha=4$.
4) Guard intervals 1/4, 1/8, 1/16 and 1/32 of the OFDM symbol length.
5) Viterbi code rates 1/2, 2/3, 3/4, 5/6 and 7/8.

Referring now to figure 1, a block diagram of the front end system, a down-converter 2 receives the input UHF broadcast signal from an antenna 4 and converts the carrier signal to a first IF frequency of 30-40 MHz and then to a second IF frequency of 4.57 MHz. Since the bandwidth of the modulated data is about 7.6 MHz, this second IF signal is sufficiently low in frequency to present the signal as a base band signal to a demodulator chip 6. Demodulator chip digitises the incoming signal at a rate determined by a voltage controlled oscillator 8, and provides an Automatic Frequency Control on a line 9 to down-converter 2. The output of demodulator 6 represents demodulated data and is fed to a FEC decoder 10 (Forward Error Correction or Viterbi decoder) for recovering the data. The decoded data is fed to a transport stream demultiplexer 12 and then to an audio-visual decoder 14. The front end is controlled by a system microcontroller 16.

Referring now to figure 2, this shows the demodulator chip 6 in more detail. The chip itself is shown schematically in figure 3. The low second IF is fed to an analog digital converter which samples the IF signal at a frequency of 18.29 MHz (x 4 the second IF frequency of 4.57 MHz), in an analog to digital converter 20. The digital output samples are fed to a real to complex converter 22 which converts the digital samples to complex number values in order to provide a complex signal centred on zero frequency. This signal is fed to a Fast Fourier Transform device (FFT) 24 and to a timing synchronisation unit 26 which derives a value from the complex input signal which is fed to a digital to analog converter 28 to supply an analog control voltage to a voltage controlled oscillator 8, which provides a sampling clock signal to analog to digital converter 20.

The FFT device 24 has four modes of operation. Firstly, it is capable of performing either a 2048 point or an 8192 point transform. Second, it is capable of performing the transform in either direction. The inverse FFT functionality is provided so that the integrated circuit may be used in applications requiring OFDM modulation. In any event, the FFT performs a series of discrete Fourier transforms on each carrier frequency to provide at an output the data symbols for each carrier frequency. These output signals are corrected in phase at a common phase error generator unit 30 and then passed to a channel equaliser 32, a channel state information correction unit 34 and a deinterleaver 36. The signal thus processed is then passed at an output from the demodulator to forward error correction unit 8. The phase error correction block 30 calculates the common phase error of the signal and applies the necessary correction. The channel equaliser 32 first performs linear temporal equalisation followed by frequency equalisation using a high order interpolating filter. The equaliser outputs an equalised constellation to the channel state information unit 34. Unit 34 generates 3 or 4 bit soft decisions which are suitable for presentation to a Viterbi decoder. Deinterleaver 36 performs firstly symbol deinterleaving followed by bit deinterleaving.

In addition, the output signals from FFT 24 are passed to a frequency synchronisation unit 38 and converts it to a control signal for automatic frequency control, which acts upon a local oscillator in down-converter unit 2 for adjusting the frequency of the first or second IF.

In addition, the output of FFT 24 is fed to a frame synchronisation unit 40 which is fed forward to units 10, 12 and 14 of Fig. 1. A microcontroller interface 42 is provided, and in addition RAM memory 44 is provided to which all the units 22, 24, 30-36 have access to in order to provide their required operations.

Analog versus Digital AFC

One of the processes that is required in the synchronisation of the demodulator is to obtain frequency synchronisation. There is a choice as to whether to apply the required frequency shift as an analog correction in the down-converter 2, or as a digital frequency shift in the demodulator chip.

Analog frequency correction

If the frequency correction is implemented by adjusting the frequency of the reference crystal in the down-converter 2, then a control signal on line 9 is provided from the output of the integrated circuit 6 back to the down-converter. This method has the advantage that a SAW filter inside the down-converter can be made as narrow as possible. The disadvantages are twofold. First, the integrated circuit must pass a control signal back to the down-converter. Second, the architecture of the down-converter is made more complicated since the control signal must adjust the reference crystal within the search range of the AFC.

Digital Frequency Correction

If the frequency correction is implemented in the integrated circuit 6, then the architecture of the down-converter 2 is made much simpler since there is no longer any need to have a control signal from the chip 6, and the loop in the down-converter that drives the reference crystal is no longer required. The disadvantage of this method is that the bandwidth of the SAW filter must be increased by the AFC search range. This causes a significant penalty in terms of the adjacent channel protection ratio when the receiver is used in an environment where the existing analogue services are operated in adjacent channels to digital services. The architecture described will permit both analog and digital correction.

As regards common phase error correction, this in practice combined with generation of the control signal in unit 38 for automatic frequency control. Both measurements are based on the phase rotation between one symbol and the next, measured on the continual pilots (CP's).

If a constant AFC error is present, there will be a constant change of rotation between successive symbols, proportional to the frequency error. Low frequency phase-noise will have a similar effect; rotating all of the carriers by the same angle, but this angle will vary from symbol to symbol in a random manner. In both cases it is desirable to attempt to correct the phase error on the current symbol by applying the opposite phase rotation to all carriers - this process is known as common-phase-error correction.

In addition to the phase rotation effect, an AFC error will also cause inter-carrier interference (ICI) which cannot be corrected for - for this reason it is also necessary to feed back an error signal to drive the frequency error to zero. This error signal can be applied to either in the analog domain as the local-oscillator control voltage, or in the digital domain to a DDFS which must be situated before the FFT. In either case an appropriate loop filter is included.

The measurement of phase rotations can only resolve AFC errors of up to roughly one half of the carrier spacing in either direction. In practice, during acquisition the AFC error is likely to be much greater than this. For this reason the AFC measurement also includes a "coarse" part, which measures the number of whole carriers by which the frequency is wrong. This is done using a pattern-matching approach looking for the continual pilots.

Referring to figure 4, a frequency offset can therefore be viewed as a shift of all the carriers either on the left of on the right. Basically, the frequency offset is divided in two parts.

1) Coarse Frequency Offset: A multiple of the carrier spacing
2) Fine Frequency Offset: A frequency offset less than the carrier spacing.

The OFDM signal is formed with a group of four different types of carriers, which are data carriers, continual pilots, scattered pilot and TPS pilots. Their positions are well defined by DVB-T specification. The continual pilots are always transmitted at the same position from OFDM symbol to OFDM symbol, as shown in Figure 11, which is taken from the ETSI standard for DVB, no. ETS 300744; for each OFDM symbol, continual pilots transmit exactly the same known information.

A fixed frequency offset rotates all carriers with the same phase from symbol to symbol. Therefore, the first phase difference between two carriers at the same index k belonging to two consecutive OFDM symbol gives the amount of frequency offset modulo $\pi$. This can be shown as follows:-

Symbol m, with N carriers, on a frequency $F_0$ lasting $T_T$ with a carrier spacing of $w_s$ may be written:

$$s(t) = \sum_{k=0}^{N-1} R_{k,m} e^{j(w_0 t + kw_s(t - mT_T))} \qquad mT_T < t < mT_T + T_s \tag{1}$$

The symbol is assumed to be integrated on Ts whereas it is sent through the Channel during $T_T = T_s + T_{Guard}$. Assuming a frequency offset of $\Delta w_0 = nw_s + \delta w_0$, the *l* output of the FFT equals:

$$Y_{l,m} = \frac{1}{T_s} \int_{mT_T}^{mT_T + T_s} r(t) e^{-j((w_0 + \Delta w_0)t + lw_s(t - mT_T))} dt \tag{2}$$

Which gives for carrier 1 of symbol m

$$Y_{l,m} = \underbrace{e^{-j\delta w_0 T_s/2} \cdot e^{-j(nw_s + \delta w_0)mT_T}}_{\text{Constant Phase Rotation}} \underbrace{\sum_{k=0}^{N-1} R_{k,m} (-1)^{(k-l-n)} \operatorname{sinc}(k - l - n - \delta w_0/w_s)}_{\text{Inter Carrier Interference Term}}$$

Phase difference for each carrier between consecutive symbols: $\phi = e^{-j(nw_s + \delta w_0)T_T}$

Conclusions: All carriers are rotated with the same phase from symbol to symbol

As continual pilots always carry the same information, then this difference is constant with time. Therefore, the second difference (the difference of the difference) shall be zero for all continual pilots, and random values for all carriers (as data on these carriers are changing from symbol to symbol).

Applying the second phase difference, (the difference of the difference between two consecutive symbols at carrier index k) should lead to a null phase value whatever the frequency offset is. For all the carriers that are not continual pilots, this value shall be a random value .

Each OFDM symbol carries 2k or 8k carriers. Continual pilots (45 or 177) always lie at the same index and are spaced apart as indicated in Figure 11 a variable distance, e.g. the sequence of carriers 0, 48, 54, 87, 141, 156 gives spacings of 47, 5, 32, 53, 14. Therefore, knowing the theoretical positions of the continual pilots, it is possible to search around the theoretical positions of the continual pilots to locate these zeros in second difference in phase. Further it is assumed frequency offsets are the same for all continual pilots in the symbol interval.

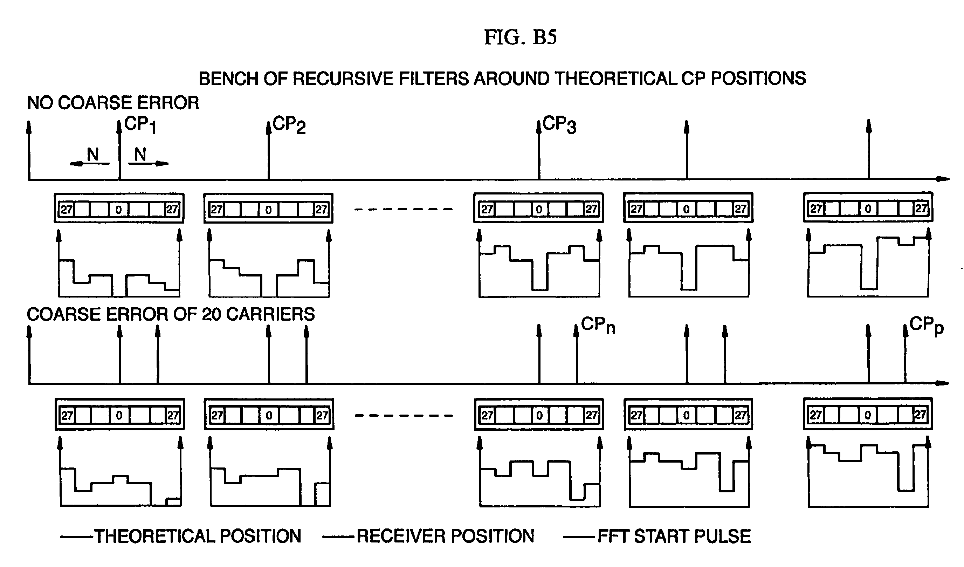

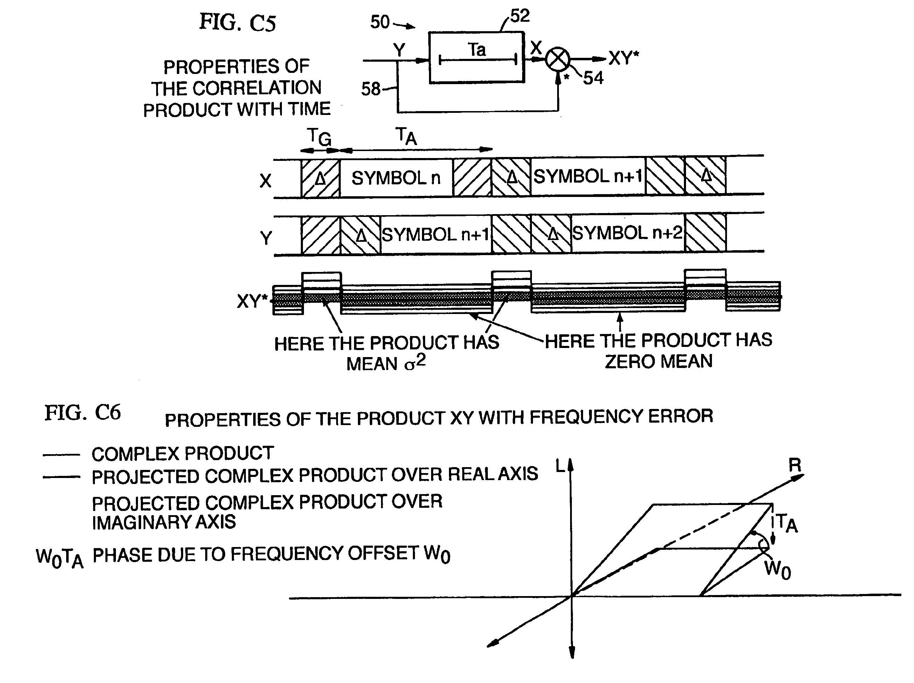

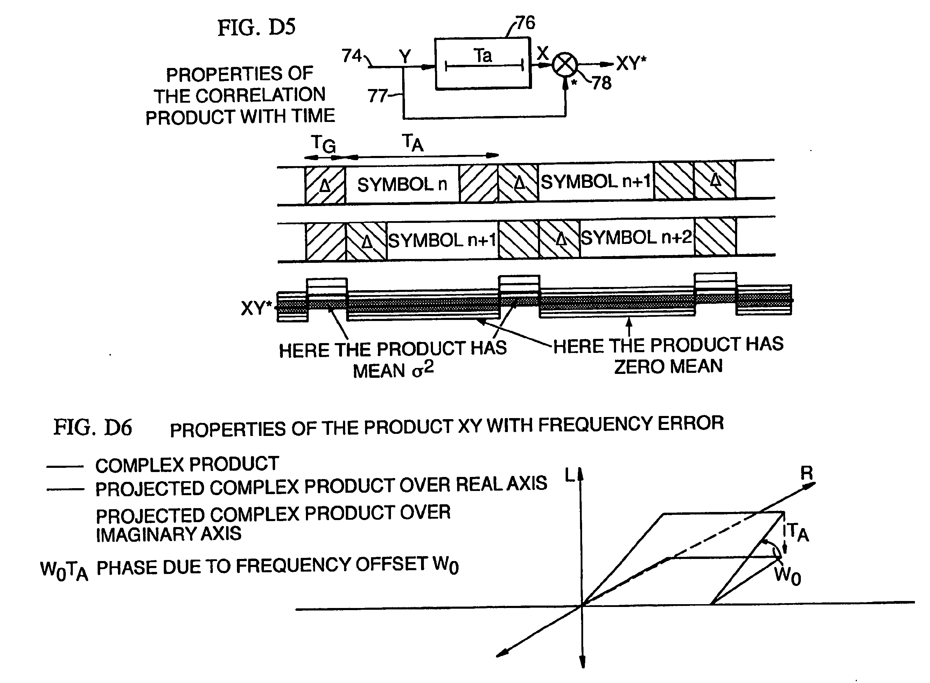

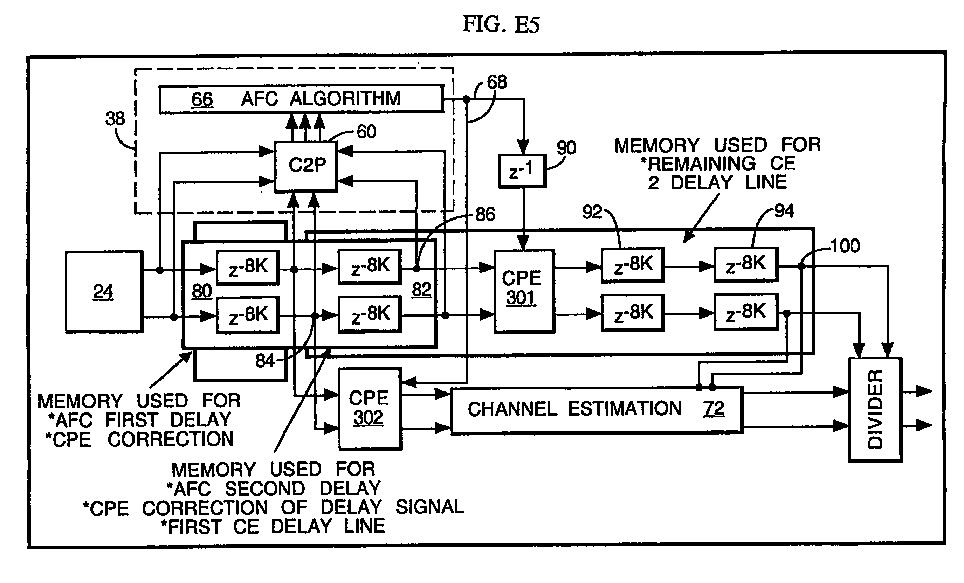

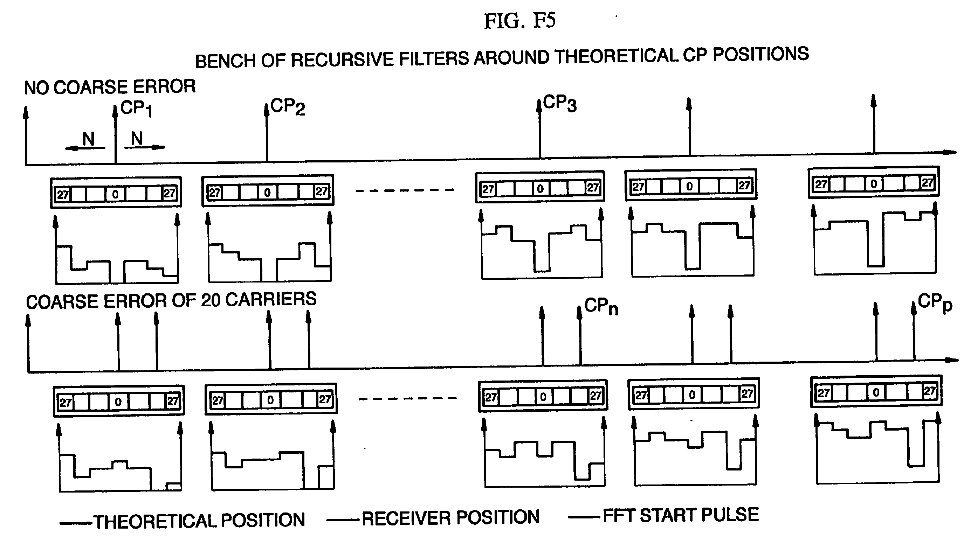

To achieve this, a bank of recursive filters is employed that accumulates the phase difference for each carrier around the theoretical position for a continual pilot signal, as indicated in figure 5. If a frequency offset of N carriers spacing (usually 47) is to be recovered, accumulator filters are placed around each continual pilot, N carriers before and N after. These accumulator filters contain the value of the second phase difference. Thus for each continual pilot CP1....CPp, a single bank of filters is employed, each filter (k) accumulating the second phase difference for the carriers occupying the kth position within the search range N either side of the nominal carrier position. In order to filter the result for better performance, the values of each accumulator filter of index k (between -N and N) shall be added to give an average of the value for that position. Thus, a bank of accumulators contains the average value of the second phase difference, for each carrier of index k (k between -N and N) that lies at a distance of + or -N of every continual pilot. The index of the accumulator containing the smallest value is the coarse frequency offset.

In order to reduce the number of filters required, the values of the filters may be stored in a suitable storage means and accessed for each new data symbol interval. A problem arises because the continual pilot spacing is not constant, and if N is large (say 47), it is possible to have two or more than two continual pilots that lie in a range of 2N+1 (Figure 11). If each continual pilot position were selected, then (e.g. k=48, 54, Figure 11), then a carrier, e.g. at position 30 would be within the search range for each CP position. requiring two simultaneous updates of the second phase difference. RAM memory cannot update at two simultaneous locations.

In accordance with the invention, a subset of the continual pilots is used. This subset shall have the property that no two consecutive pilots are spaced by less than 2N + pilots. Thus for example for a search range of $\pm$ 47, the range 2N+1 = 97, and for k=255, the search will be carried out between 208 and 302. Thus in the 2K mode, the CPs selected are:

0, 141, 255, 432, 531, 636, 759, 873, 969, 1101, 1206, 1323, 1491, 1683. In addition to these, in the 8K mode, we have:

1791, 1896, 2037, 2136, 2235, 2340, 2463, 2577, 2673, 2805, 2910, 3027, 3195, 3387, 3495, 3600, 3741, 3840, 3939, 4044, 4167, 4281, 4377, 4509, 4614, 4731, 4899, 5091, 5199, 5304, 5445, 5544, 5643, 5748, 5871, 5985, 6081, 6213, 6318, 6435, 6603, 6795. Thus it will be seen the groups selected are non-overlapping and essentially contiguous.

It will be understood that in many of groups of carriers searched, there will be more than one CP present. Whilst the process of filtering over many groups will filter out a false selection made in one group, nevertheless problems remain as follows.

In COFDM channels for digital terrestrial TV, one might need to recover large frequency offset and/or be very robust against noise. In case of large frequency offset, say where N=47, and 2N+1=95, the cost is that fewer continual pilots can be assessed, since a large search window is required, which does not overlap with adjacent search windows, and many Continual Pilots (CP) may be present in the search window. This has two drawbacks: firstly immunity to noise decreases due to a lighter filtering. Secondly, as more than one CP may be present in the search window, the selection of the wrong local minimum may endanger the correct offset recovery, inducing false locks.

In the case of small SNR having more CP available for measurement would filter more the signal and thus increase the performance. Therefore what is required is a system with a good search range and a good noise immunity. In other words, a system capable of being locally precise and extendable.

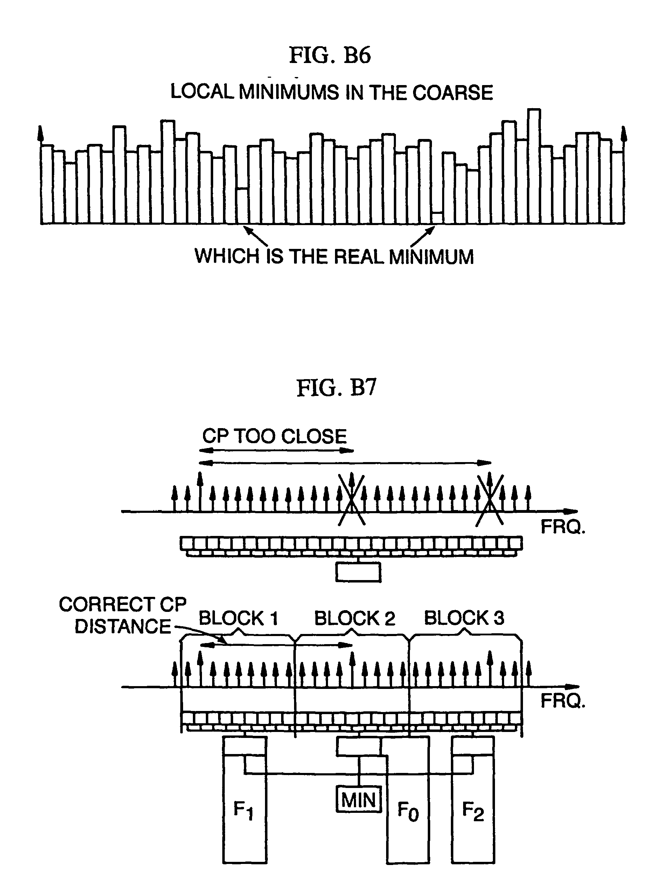

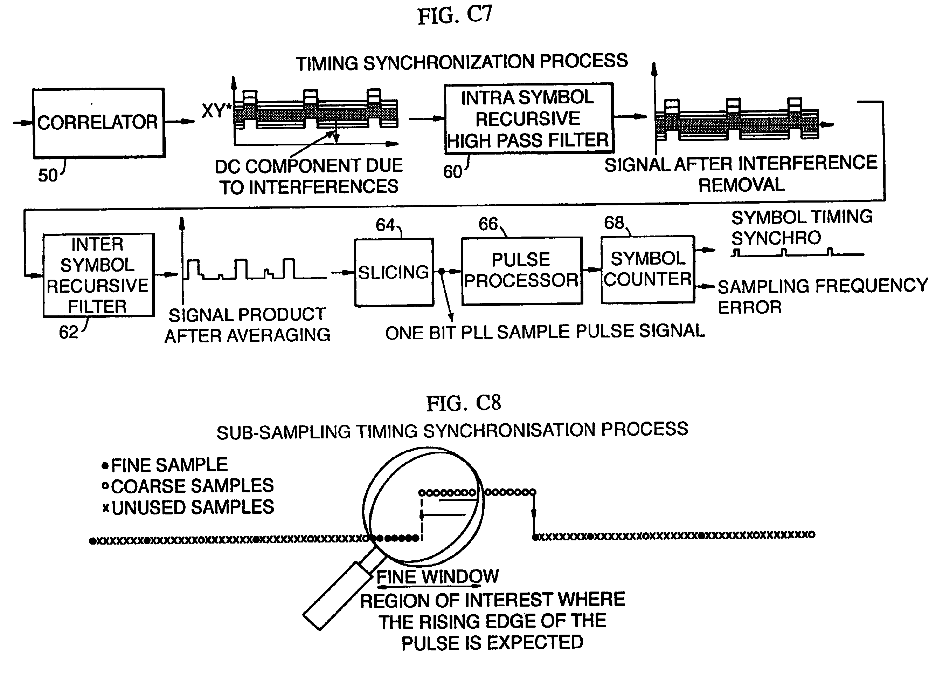

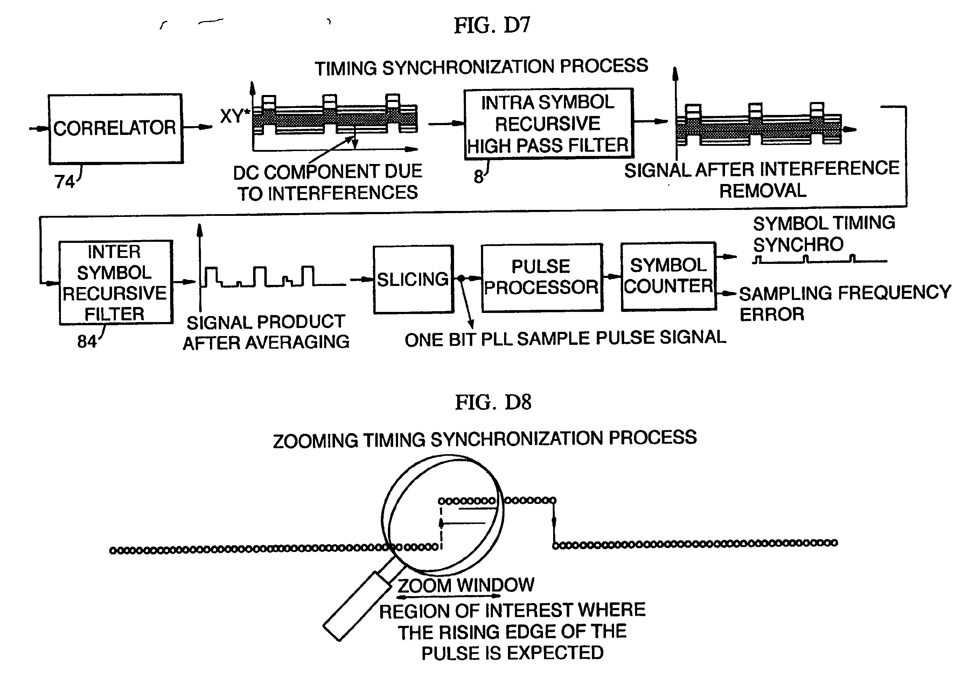

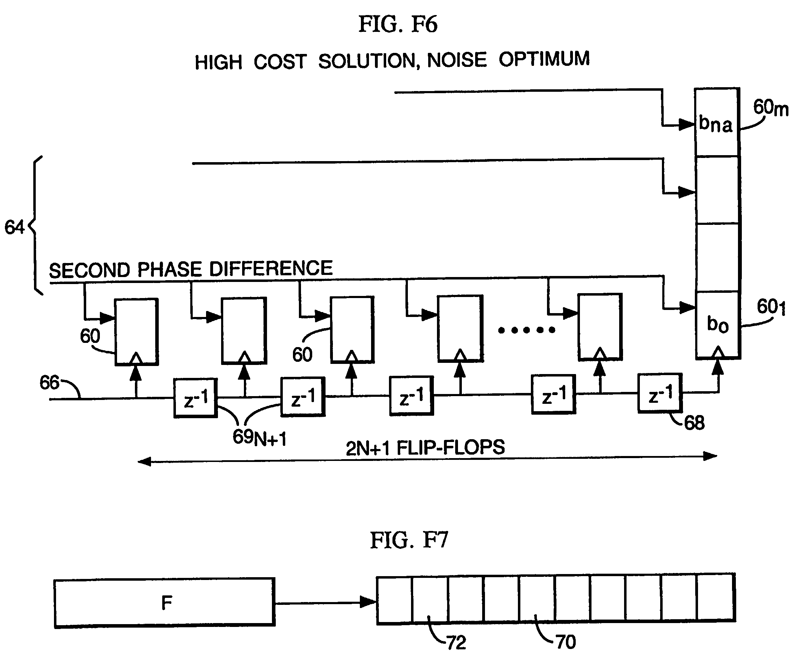

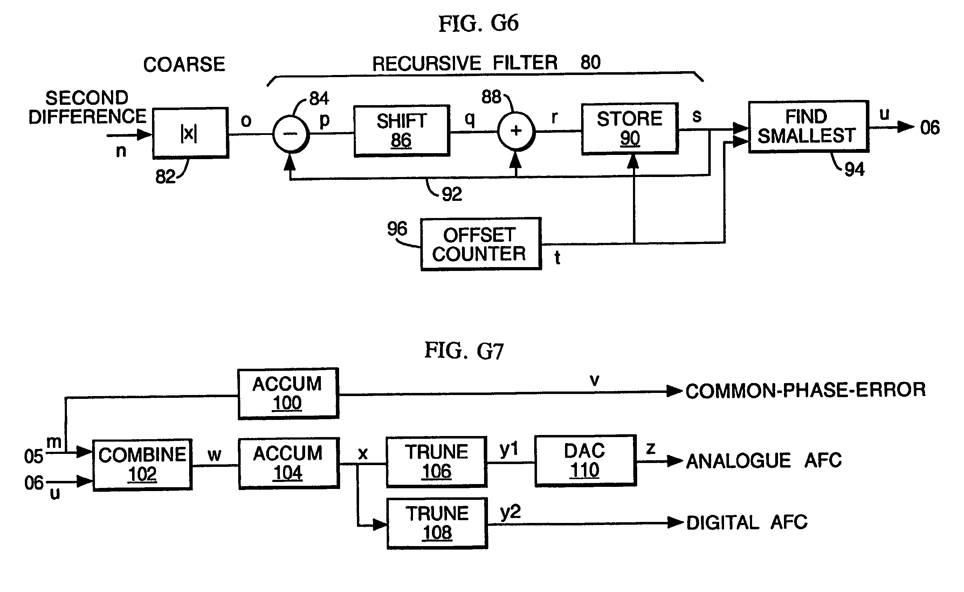

In the present invention, as indicated in figure 7, a RAM memory is divided into three contiguous memory sections 700, designated 1, 0, 2. Each memory is a separate element in the chip being a first set of decoders 702 for selecting the minimum in each section 700, and a second decoder 704 for selecting the minimum value of the local minimum decoders 702. For each memory section 1, 0, 2, a corresponding filter F1, F0, F2 is provided to determine the second phase difference for a number of carriers P, corresponding to the number of memory locations 706 within each row. Each memory location 706 receives the result of the second phase difference for a respective frequency.

This method may be used in two different ways.

    1) If the search range for the required frequency offset is too big for a single physical memory section, M blocks $\leq k \leq N$ are used each with a maximum frequency offset of

$\Delta f$. These M blocks are then capable of recovery of a frequency offset of $M\Delta f$. M is usually 2 or 3. Each block has the same number of continual pilots to average on, so there is no loss of robustness. This means M times more memories, but using higher clock rates and/or double port RAMs then M logical memories may be placed into one physical memory. This would lead to a smaller physical memory.

2) If the maximum recoverable frequency offset is sufficient, but the SNR is too small, instead of extending the search range, the memory is split into a set of smaller search ranges, as indicated in figure 7.

The big difference is that because there are M logical RAMs instead of 1 bigger RAM. Further such RAMs may operate simultaneously and independently of one another. The number of available continual pilots would increase as now all the CP with a distance greater then (2N+1)/M instead of 2N+1 can be selected. Each smaller RAM would then be more robust to noise because of a heavier filtering. Thus for N=47, 2N+1=95, and (2N+1)/M = 32 (i.e. 16 carrier spacings, roughly, on either side of the CP). As before, these RAMs could be one physical RAM by either increasing the clock frequency. This method however does not increase the number of RAM cells.

The overall process is the following:

When a continual pilot is detected, the system enters the SWEEP mode, if it was not already SWEEPING. Then, for 2N+1 carriers, the system is going to accumulate the new value in the register of index k (k grows from -N to N). If the new value is smaller than the local minimum, then the minimum is updated to the register content, and the index of the minimum is set to k.

After 2N + 1 carriers, the mechanism stalls until the next continual pilot arrives. When all the continual pilots have been received, the index of the minimum contains the reliable index of the minimum, which in turn gives the coarse frequency offset.

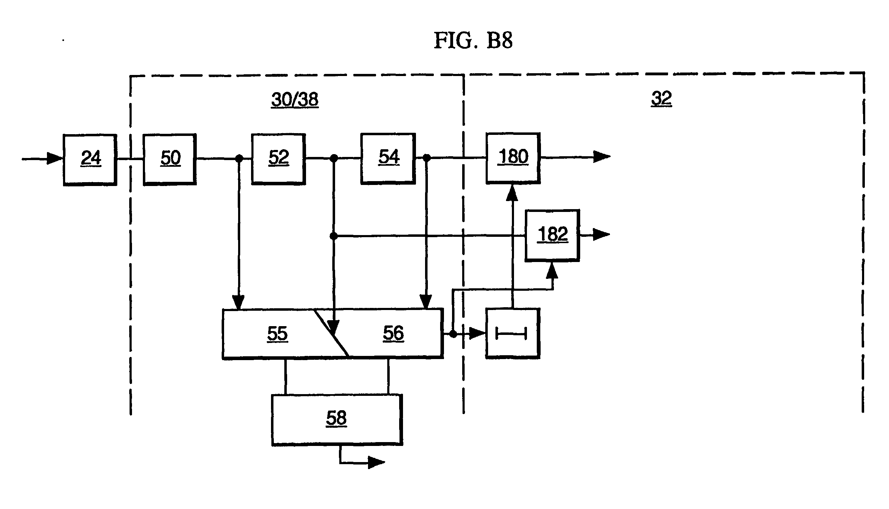

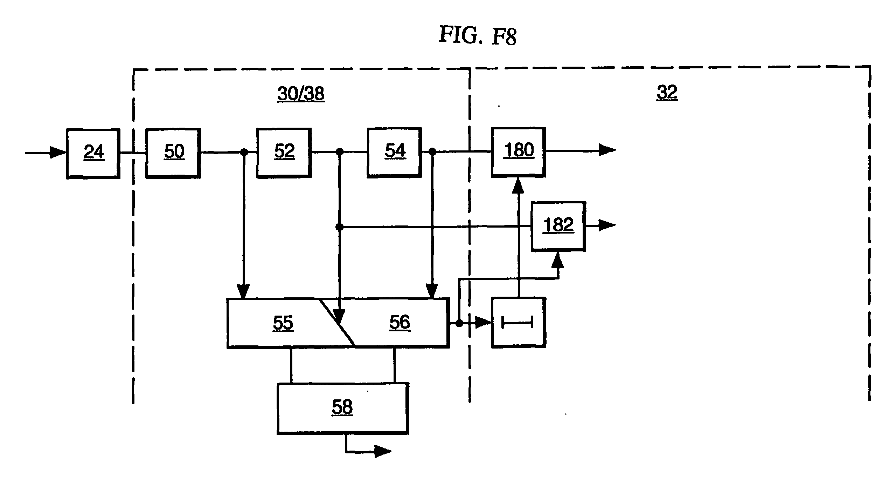

Referring now back to the specific embodiment and to Figure 8, this shows certain elements of Figure 2 in more detail, in particular the common phase error circuit 30 and the channel equalisation circuit 32. In practice, CPE circuit 30 is combined with AFC circuit 38, and comprises a complex to phase format converter 50 for converting the symbol values output from FFT unit 50 to a phase format. These converted symbol values are fed into delay elements 52, 54, and subtract units 55, 56 derive the phase difference between the current signal and that stored in element 52, and the phase difference between the symbols stored in elements 52, 54. These phase differences are used to control phase error correction circuits 180, 182. In addition a subtractor 58 is used to determine the difference between the two signals provided by subtractors 55, 56. The output second difference signal is used for coarse frequency control, as indicated below. The symbol values stored in elements 52, 54, are fed via phase correction circuits 180, 182 to channel equalisation unit 32.

The incoming data are denoted by $c(l,n)$ where $l$ is the symbol number and n is the slot number within the symbol. Note that this is not the same as the carrier number k, because this block must start processing before the nominal position of the first carrier to allow for a coarse frequency error.

The incoming complex values are converted to phase:

$$\theta(l,n) = \frac{1}{2\pi}\arg[c(l,n)]$$

where the argument function is defined such that $-\pi \leq \arg(z) < \pi$.

$c(l,n)$ is also delayed by one and two symbols and converted to phase to give $\theta(l-1,n)$ and $\theta(l-2,n)$ in delay elements 52, 54.

The first difference of phase is calculated for the current and previous symbols in subtractor units 55, 56.

$$\phi(l,n) = [\theta(l,n)-\theta(l-1,n)]\mathrm{mod}1.0$$

$$\phi(l-1,n) = [\theta(l-1,n)-\theta(l-2,n)]\mathrm{mod}1.0$$

The second difference is also calculated in further subtractor unit 58.

$$\psi(l,n) = [\phi(l,n)-\phi(l-1,n)]\mathrm{mod}1.0$$

The differences are calculated modulo 1.0, i.e. they are all between -0.5 and +0.5.

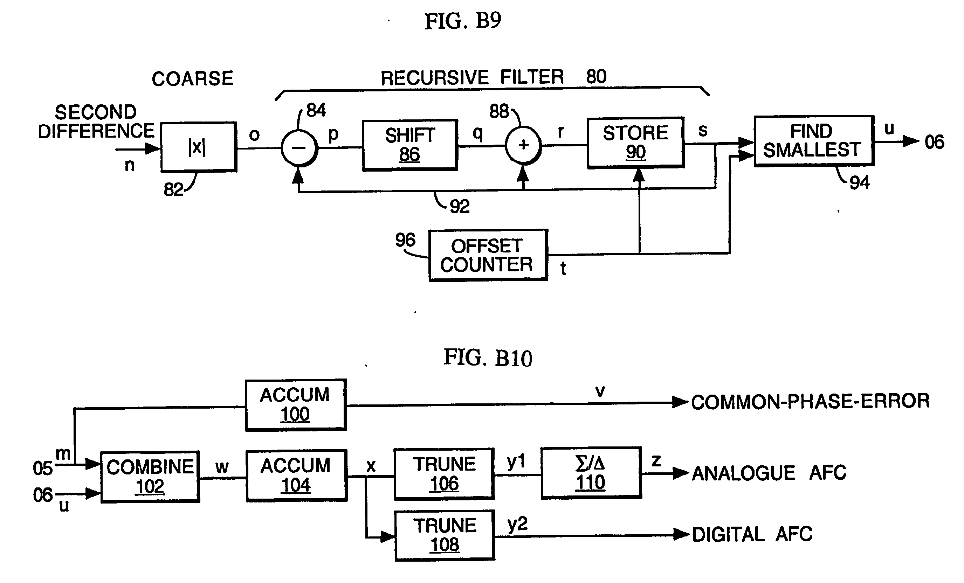

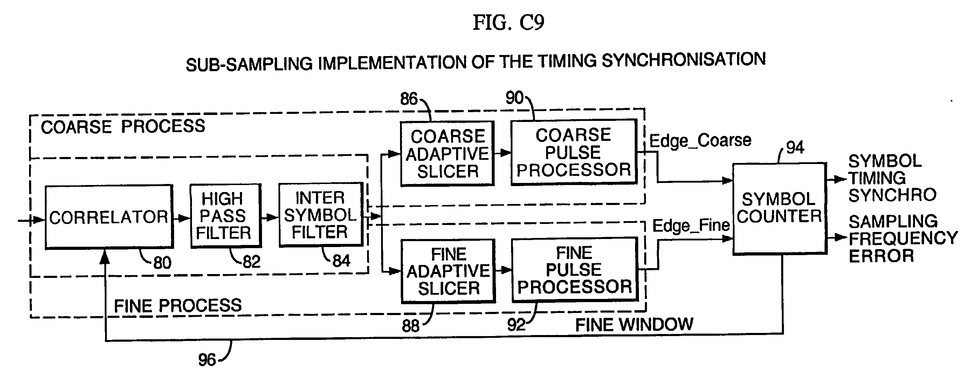

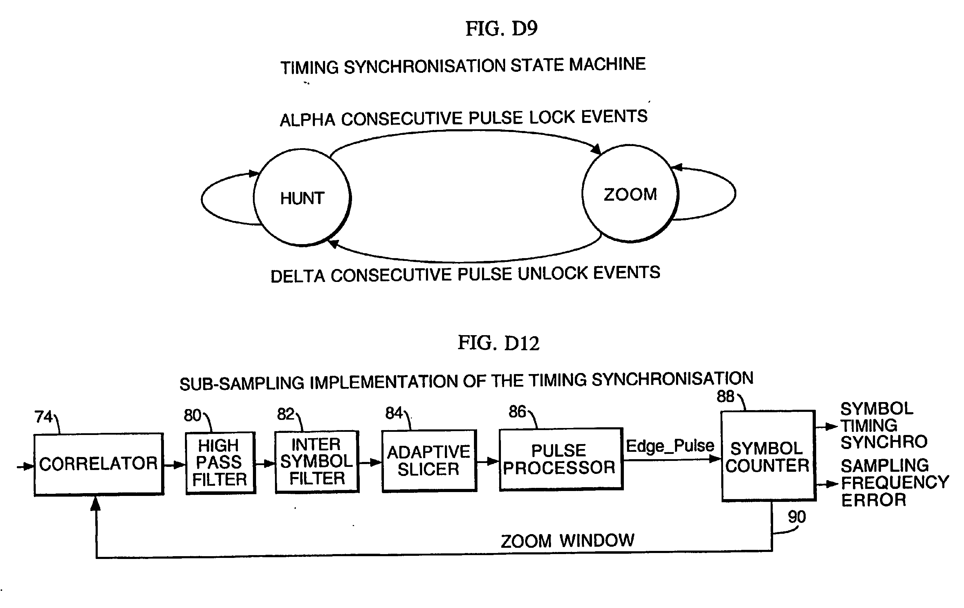

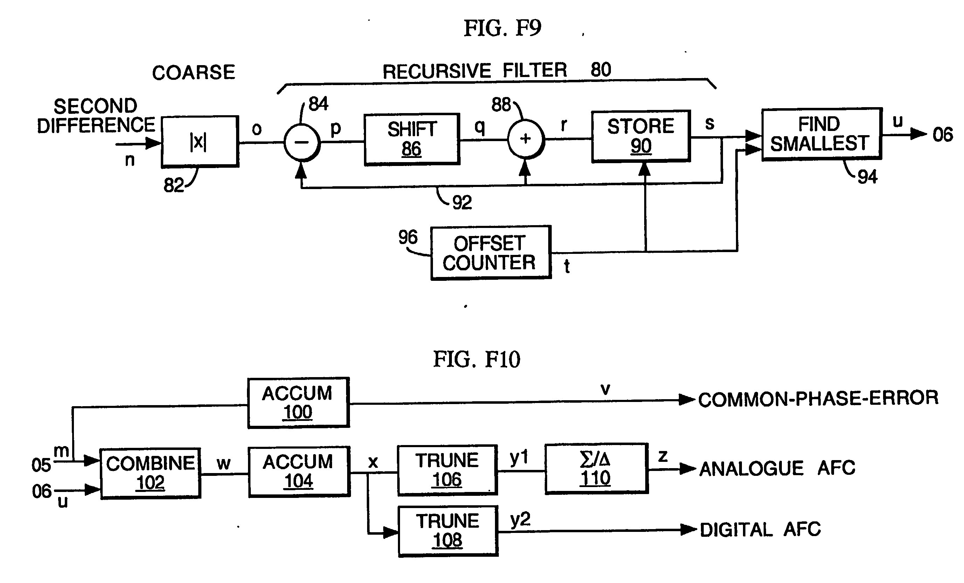

Referring to Figure 9, one filter of the recursive filters F2, F0, F1 in Figure 7 is shown. The magnitude of the second difference ψ(obtained from subtractor unit 58) is obtained in unit 82 and applied to filter 80 comprising subtractor 84, scaler 86, summer 88 and store 90, and a feedback loop 92 to summer 88 and subtractor 84. A unit 94 determines the smallest value in store 90. Store 90 and unit 94 are controlled by an offset counter 96. The value from counter 96 is provided as coarse frequency correction, corresponding to the smallest value in store 90.

Store 90 corresponds to a memory section 700 of the RAM of figure 7, and unit 94 corresponds to first decoder 702.

Thus the coarse AFC uses a bank of recursive filters having an output $\gamma_\Delta(l,n)$ in which each value of $\Delta$ corresponds to a different trial frequency offset. The search range is given by $-47 \leq \Delta \leq 47$. Each filter is updated only when the current slot would contain a continual pilot for its particular value of $\Delta$ (see above). the input to all of the filters is the rectified value of the second difference of phase. This will have a small average value only for the correct offset, because the first difference will be similar each time. The update rule for the output of the filter is:

$$\gamma_\Delta = \begin{cases} (1-R)\gamma_\Delta(l, n-1) + R|\psi(l,n)| & (n-N_0-\Delta) \in C_R \\ \gamma_\Delta(l, n-1) & otherwise \end{cases}$$

where R is the scaling factor applied by scaler 86. Where $C_R$ is a subset of C chosen such that at most one store needs to be updated for each slot as explained above. The store which needs to be updated, if any, is the one for which $\Delta = n-N_0 N_C$, where $N_C \in C_R$.

After all of the filter stores have been updated for a given CP, the coarse AFC output is set to the value of $\Delta$ corresponding to the store containing the smallest value:

$$\Delta_C = \underset{\Delta}{\arg\min} \gamma_\Delta$$

The algorithm can be expressed as follows:

```
if ((n - N₀ + 47) ∈ C_R && sweep == false)
{
        Δ = -47;
        sweep=true;
        γ_min = 0.5;
        Δ_min = 0;
}
if (sweep)
{
        γ_Δ = (1 - R)γ_Δ + R|ψ| ;

        if (γ_Δ < γ_min)
        {
                γ_min = γ_Δ;
                Δ_min = Δ;
        }

        Δ = Δ + 1;
        if (Δ > 47)
        {
                sweep=false;
                Δ_C = Δ_min;
        }
}
```

this process is the offset value $\Delta_C$, which represents the coarse frequency offset in terms of number of carrier spacings.

Two methods are used for combining coarse and fine measurement.

METHOD 1:

This method simply adds the two measures together, since the coarse measure is an integer giving the number of whole carriers offset, while the fine measure gives fractions of a carrier.

$$E = \Delta_C + \phi_W$$

METHOD 2:

In this method the fine part is only considered if the coarse value is zero. The coarse value is also clipped to the range -1 to +1:

$$E = \begin{cases} -1 & \Delta_c < 0 \\ \phi_w & \Delta_c \equiv 0 \\ 1 & \Delta_c > 0 \end{cases}$$

The frequency error value $E$ is fed into a loop filter, which consists simply of an integrator:

$$v(l) = v(l-1) + E\big|_{n = N_{max}}$$

The integrator is clocked once per symbol, at the end of the symbol. This value is fed to a DAC which can be used to generate the AFC control voltage if analog AFC is being used. The value is also fed to the DDFS if digital AFC is being used.

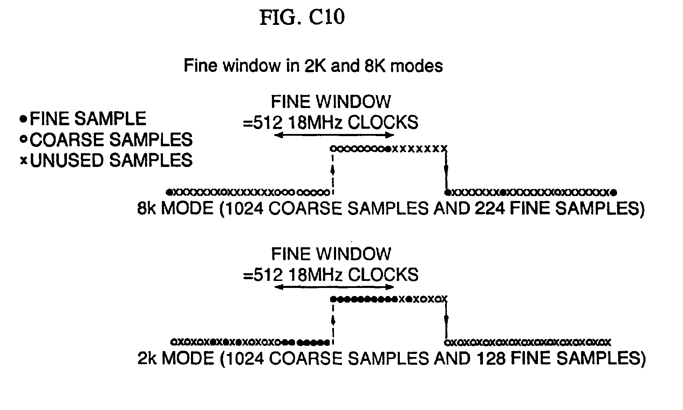

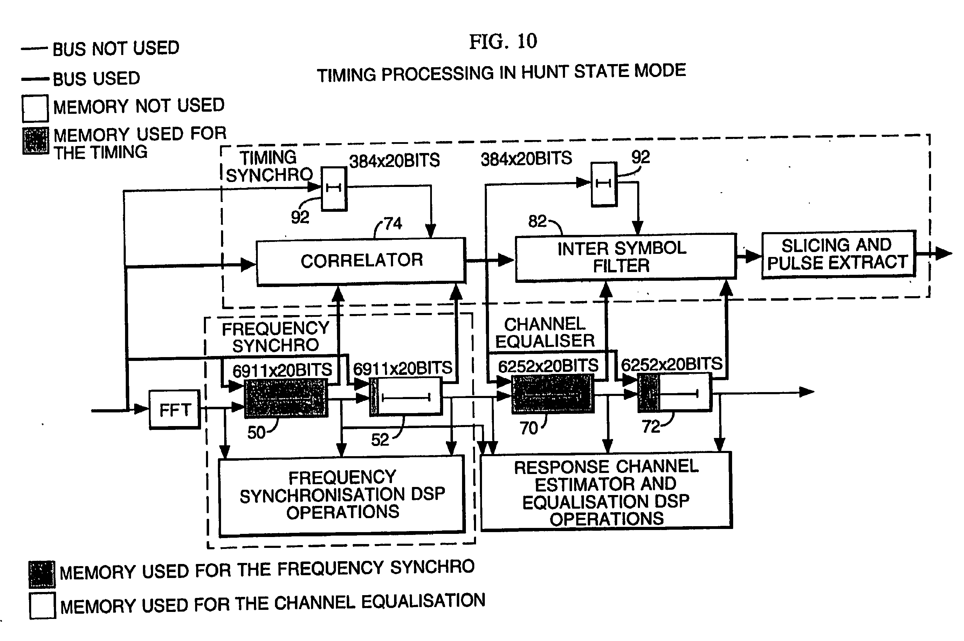

Referring now to Figure 10, this shows a circuit for combining the outputs of the fine and coarse error circuits . The input O5 is applied to an accumulator 100 which provides a common-phase-error signal. The signal O5 is also applied to a combining circuit 102 where it is combined with the output O6 from Figure 9 in order to provide a summed signal which is applied to an accumulator 104. The output of accumulator 104 is applied to truncation circuits 106, 108. The output from truncation circuit 108 may be used for digital automatic frequency control where the signal is applied to a DDFS circuit at the input of FFT unit 24; alternatively the output from truncation circuit 106 is applied to a $\Sigma/\Delta$ digital to analog converter circuit 110 in order to provide a signal for analog automatic frequency control where the frequency of a local oscillator in the down-converter stage is controlled.

A major advantage of this method is that it requires no specific lock information, that would be difficult to derive in COFDM.

Besides, the duplication of identical hardware has the merit of simplicity and the choice in combination functions may lead to various degrees of rapidity/robustness.

Advantage of this method are as follows:

1) No lock indication required to recover the frequency offset using all the continual pilot. May lead to better performance, but on the other side, using a subset of the continual pilots lead to very optimised and cost effective solutions.
2) Easy extendible range. A simple duplication of these banks leads to increase of the maximum recoverable offset. Using specific error functions (with limiters) may lead to various degree of finesse.
3) Usage of RAMs instead of registers that reduces the hardware area.
4) No area overlapping in each process that leads to the use of low cost RAMs

DEMODULATING DIGITAL VIDEO BROADCAST SIGNALS

This invention relates to demodulating digital video broadcast (DVB) signals.

There are currently two major types of DVB, namely, terrestrial broadcasting and satellite/cable broadcasting. The invention is particularly, though not exclusively concerned with terrestrial broadcasting, which has special problems, particularly in communication channel impairment, arising from adjacent television channels, multipath, and co-channel interference, for example. A type of transmission which has been developed to meet these problems is known as Coded Orthogonal Frequency Division Multiplexing (COFDM) - see for example "Explaining Some of the Magic of COFDM" Stott, J.H. - Proceedings of 20th International Television Symposium, Montreux, June 1997. In COFDM, transmitted data is transmitted over a large number of carrier frequencies (1705 or 6817 for DVB) occupying a bandwidth of several MHz in the UHF spectrum, spaced (by the inverse of the active symbol period) so as to be orthogonal with each other; the data is modulated as QPSK or QAM and convolutionally coded, to enable soft-decision (Viterbi) decoding. Metrics for COFDM include Channel State Information (CSI) which represents the degree of confidence in each carrier for reliably transmitting data.

Modulation and Demodulation of the carriers may be carried out by a Fast Fourier Transform (FFT) algorithm performing Discrete Fourier Transform operations. Naturally, various practical problems arise in demodulation, firstly in translating the transmitted signal to a frequency at which demodulation can be carried out, and secondly by accurately demodulating the data from a large number of carriers in a demodulator which is not overly complex or expensive, which involves *inter alia* synchronising the demodulator (receiver) in time to the incoming signal. This is important for the proper execution of the FFT algorithms.

The data signal on each carrier has a relatively long symbol period and this, in part, gives the signal its good performance in conditions of multipath propagation. The multipath performance is further enhanced by the inclusion of a guard interval in which a portion of the modulated signal waveform taken from the end of each symbol is also included at the beginning of the symbol period. Different fractions of the basic symbol period, such as 1/32, 1/16, 1/8 or 1/4, can be used in this way to provide immunity to multipath distortion of increasingly long delays.

The principal requirement for synchronisation in a receiver is to obtain from the signal waveform a reliable time synchronisation pulse related to the start of the symbol period. Such a pulse is then be used to start, at the correct position in the waveform, the process of Fourier Transformation which accomplishes a major portion of the demodulation process. A second requirement for synchronisation is to lock a digital sampling clock in the receiver to an appropriately chosen harmonic of the symbol period. However, the modulated OFDM waveform produced by adding together all the modulated carriers is essentially noise-like in nature and contains no obvious features such as regular pulses which could be used to synchronise the circuitry receiver.

Because of this, techniques for synchronisation are based on correlation of the signal with a version of itself delayed by the basic symbol period. The similarity between the portion included to form the guard interval and the final part of the basic symbol is then shown as a region of net correlation while the remainder of the symbol period shows no correlation. Even so, the correlated waveform still reflects the noise-like nature of the signal waveform and can be impaired by signal distortions, so it is necessary to process the signal further to obtain reliable synchronisation.

British patent application GB-A-2037155 describes time synchronisation involving the use of correlation and a filter which exploits the periodicity of the waveform to form a complex symbol pulse. The modulus of the pulse signal is used to derive a pulse related to the start of the symbol period and a signal to control a sampling clock frequency in the demodulator.

An implementation of such an arrangement in the 8K mode of COFDM would require about 410Kbits of memory, which is far too great for implementation in a single chip.

It is an object of the present invention to provide a demodulator for digital terrestrial video broadcast signals which can demodulate data transmitted by a COFDM system but which may be manufactured simply and inexpensively, preferably in a single integrated circuit chip.

The present invention provides as a first aspect, apparatus for demodulating digital video broadcast signals comprising data modulated on a multiplicity of spaced carrier frequencies, comprising:

conversion means for converting a down-converted version of the broadcast signal to a series of digital samples in complex format, transform means for analysing the digital sample values to provide a series of data symbol values for each carrier frequency, and signal processing means for receiving the data symbol values and providing an output for decoding,
and timing synchronisation means for synchronising the transform means with the symbol periods of the broadcast signal, including correlation means for receiving said digital sample values and comprising delay means having a time period delay equal to the active symbol period, and multiplier means for receiving the digital sample values and a version thereof delayed by said delay means, to form a complex product signal, and means for processing the complex product signal to derive timing synchronisation pulses, wherein the timing synchronisation means comprises a coarse synchronisation means employing a subset of the digital sample signals for providing a coarse timing synchronisation, and a fine synchronisation means for providing a fine synchronisation within a time period determined by the coarse synchronisation means.

As will be shown below the timing synchronisation means according to the invention can result in the use of only 61Kbits, or 15% of the memory required for the implementation mentioned above.

In accordance with the invention, the timing synchronisation means, where a fast Fourier Transform is employed, locks the transform to the start of the symbol period. In addition, a signal is provided for controlling the sampling rate of said conversion means to an harmonic of the broadest signal.

## BRIEF DESCRIPTION OF THE DRAWINGS

A preferred embodiment of the invention will now be described with reference to the accompanying drawings, in which:-

Figure C1 is a schematic block diagram of a digital terrestrial front end converter incorporating the present invention;
Figure C2 is a more detailed block diagram of demodulating apparatus according to the invention forming part of the converter of figure C1;

Figure C3 is a more detailed block diagram of the timing synchronisation elements of figure C2;

Figure C4 is a diagram of adjacent OFDM symbols having active and guard intervals;

Figure C5 is a block diagram of a correlator unit for extracting timing information, together with waveform diagrams showing its principle of operation;

Figure C6 is a schematic diagram of a complex pulse recovered from the correlator;

Figure C7 is a block diagram together with appropriate waveform diagrams of one form of timing synchronisation;

Figure C8 is a diagram of the principle underlying the present invention;

Figure C9 is a block diagram of a preferred embodiment of timing synchronisation apparatus according to the present invention;

Figure C10 is a schematic waveform diagram of a fine window generated in the timing synchronisation for 2 K and 8 K modes;

Figure C11 is a schematic block diagram of a high pass filter used in time synchronisation;

Figure C12 is a schematic block diagram of an intersymbol filter used in the timing synchronisation;

Figure C13 is a schematic block diagram of a coarse adaptive slicer used in the timing synchronisation;

Figure C14 is a schematic block diagram of a coarse pulse processor used in the timing synchronisation; and

Figure C15 is a schematic block diagram of a symbol counter used in the timing synchronisation.

## DESCRIPTION OF THE PREFERRED EMBODIMENTS

The preferred embodiment of the present invention comprises a front end for digital terrestrial television transmitted according to the DVB-T specification. The front end consists of two separate components. First, an analog down-converter that converts the input signal from UHF to a low IF. Second, an integrated circuit chip that accepts the analog signal from the down-converter and performs the required DSP operations, which include synchronisation and demodulation, to form a stream of soft decisions suitable for presentation to an FEC decoder (Forward Error Correction decoder).

Full compliance to the DVB-T specification means that the chip is capable of decoding signals transmitted in the following modes:

1) A signal that contains either 1705 or 6817 active carriers, commonly referred to as 2K and 8K respectively. The chip includes the functionality and memory required to perform the FFT algorithm in both modes.

2) Non-hierarchical QPSK, 16-QAM and 64-QAM constellations.

3) Hierarchical 16-QAM and 64-QAM constellations, either uniform or non-uniform with the possible scale factors $\alpha=2$ and $\alpha=4$.

4) Guard intervals 1/4, 1/8, 1/16 and 1/32 of the OFDM symbol length.

5) Viterbi code rates 1/2, 2/3, 3/4, 5/6 and 7/8.

Referring now to figure 1, a block diagram of the front end system, a down-converter 2 receives the input UHF broadcast signal from an antenna 4 and converts the carrier signal to a first IF frequency of 30-40 MHz and then to a second IF frequency of 4.57 MHz. Since the bandwidth of the modulated data is about 7.6 MHz, this second IF signal is sufficiently low in frequency to present the signal as a base band signal to a demodulator chip 6. Demodulator chip digitises the incoming signal at a rate determined by a voltage controlled oscillator 8, and provides an Automatic Frequency Control on a line 9 to down-converter 2. The output of demodulator 6 represents demodulated data and is fed to a FEC decoder 10 (Forward Error Correction or Viterbi decoder) for recovering the data. The decoded data is fed to a transport stream demultiplexer 12 and then to an audio-visual decoder 14. The front end is controlled by a system microcontroller 16.

Referring now to figure 2, this shows the demodulator chip 6 in more detail. The chip itself is shown schematically in figure 3. The low second IF is fed to an analog digital converter which samples the IF signal at a frequency of 18.29 MHz (x 4 the second IF frequency of 4.57 MHz), in an analog to digital converter 20. The digital output samples are fed to a real to complex converter 22 which converts the digital samples to complex number values in order to provide a complex signal centred on zero frequency. This signal is fed to a Fast Fourier Transform device (FFT) 24 and to a timing synchronisation unit 26 which derives a value from the complex input signal which is fed to a digital to analog converter 28 to supply an analog control voltage to a voltage controlled oscillator 8, which provides a sampling clock signal to analog to digital converter 20.

The FFT device 24 has four modes of operation. Firstly, it is capable of performing either a 2048 point or an 8192 point transform. Second, it is capable of performing the transform in either direction. The inverse FFT functionality is provided so that the integrated circuit may be used in applications requiring OFDM modulation. In any event, the FFT performs a series of discrete Fourier transforms on each carrier frequency to provide at an output the data symbols for each carrier frequency. These output signals are corrected in phase at a common phase error generator unit 30 and then passed to a channel equaliser 32, a channel state information unit 34 and a deinterleaver 36. The signal thus processed is then passed at an output from the demodulator to forward error correction unit 10. The phase error correction block 30 calculates the common phase error of the signal and applies the necessary correction. The channel equaliser 32 first performs linear temporal equalisation followed by frequency equalisation using a high order interpolating filter. The equaliser outputs an equalised constellation to the channel state information unit 34. Unit 34 generates 3 or 4 bit soft decisions which are suitable for presentation to a Viterbi decoder. Deinterleaver 36 performs firstly symbol deinterleaving followed by bit deinterleaving.

In addition, the output signals from FFT 24 are passed to a frequency synchronisation unit 38 which converts it to a control signal on line 9 for automatic frequency control, which acts upon a local oscillator in down-converter unit 2 for adjusting the frequency of the first or second IF. As an alternative, unit 38 may control a DDFS unit 39 (indicated in dotted lines) to compensate digitally for the frequency drift by centring the signal around 0Hz.

In addition, the output of FFT 24 is fed to a frame synchronisation unit 40. A microcontroller interface 42 is provided, and in addition RAM memory 44 is provided to which all the units 22, 24, 30-36 have access to in order to provide their required operations.

A significant problem for demodulator integrated circuit 6 is the amount of RAM 42 that the chip requires.

It is necessary to make the best possible use of the RAM. Some of the blocks of memory, such as the FFT and symbol deinterleaver, require fixed amounts of RAM and it is not possible to reduce them (except by reducing the word widths and so degrading the performance). The timing synchronisation however is designed for reducing the amount of memory but without degrading the performance.

Timing Synchronisation

The timing synchronisation is indicated in more detail in figure 3, wherein similar parts to those of figure 2 are denoted by the same reference numerals. It may be seen timing synchronisation unit 26 provides a symbol pulse on line 261 to FFT unit 24 to start the Fourier transform, and a sampling frequency error signal on line 262 to oscillator 8. Oscillator 8 provides clock signals principally to ADC 20, and also to real to complex unit 22, FFT 24, timing synchronisation unit 26, and other units in the signal processing chain, indicated generally by data recovery unit 301.

Coded Orthogonal Frequency Division Multiplexing (COFDM) has been specified for terrestrial television as defined in the DVB-T ETSI specification. The OFDM symbol produced by adding all the modulated carriers is essentially noise like in nature and contains no obvious features such as regular pulse which could be used to synchronise the receiver. The addition of the guard interval is the key to the usefulness of COFDM in multipath environment. It is also the key to the proposed synchronisation method. As shown in figure 4, each OFDM symbol is extended by a period $T_G$ (or$\Delta$) (the guard interval) which precedes the useful or active symbol period $T_A$, so that the whole symbol now lasts $T_S$ in total. $T_A$ is the reciprocal of the carrier spacing $F_A$, and is the duration of the time domain signal analysed by the fast Fourier Transform. Each carrier is continuous over the boundary between the guard interval and the active part of the same symbol, keeping the same amplitude and phase. If we consider the signal as complex baseband, with all the carriers not only spaced by $F_A$ but also equal to multiple $F_A$, then the signal in the guard interval is effectively a copy of the segment of the signal occupying the last $T_G$'s worth of the active part. It follows that the signal has the same value at any instant which are separated by $T_A$ but lie within the same symbol.

The similarity between the portion included to form the guard interval and the final part of the basic symbol is then shown as a region of net correlation while the remainder of the symbol period shows no correlation. Because of this, techniques for timing synchronisation are based on correlation of the signal with a version of itself delayed by the active symbol period. A correlator 50 is shown in Figure 5, comprising a one symbol delay 52 and a feed forward path 58 coupled to respective inputs of a complex multiplier 54.

The correlator takes the complex baseband signal Y, delays it by $T_A$ and multiplies the delayed version X with the complex conjugate of Y to form the product XY*. For those instants where the two samples X and Y belong to the same symbol, then the mean of the product XY* is proportional to $\sigma^2$ (the square of the variance); otherwise, the two samples X, Y being independent, the product XY* has zero mean. Because the output XY* of the complex multiplier is noisy (see Figure 5), it is necessary to filter to make visible the underlying pulse structure before the slicing process to detect the symbol pulse.

An implementation is shown in Figure 7. Two types of filter are used. The first one, an inter symbol recursive high pass filter 60 is included to remove the arbitrary DC component introduced when an OFDM signal experiences interferences. The second one, an inter symbol recursive filter 62 reduces the noise component by averaging the signal value from one symbol to another. After these two filters, slicer 64 extracts the timing information in a way that it can be used to control the loop governing the sampling frequency and symbol timing. Because the timing synchronisation process takes place before frequency control, possible frequency offset caused by tuner error may occur. The complex filtered signal product input to slicer 64 is a complex pulse shape signal, as shown in Figure 6. This complex filtered signal product is effectively projected over the real and imaginary axes in slicer 64. The magnitudes of the real and imaginary projections are compared and the larger one is chosen. The selected one is then sliced and further processed to check and isolate the leading edge of the pulse.

This sample pulse is then fed to a pulse processor 66 which generates a single pulse at the leading edge of the pulse and prevents the generation of spurious pulses. The timing of pulses produced by the pulse processor 66 is compared with the timing of pulses produced from the sampling clock frequency in a symbol counter 68. The comparison produces an error signal "sampling frequency error" applied to oscillator 8 (Figure 3).

The correlation function is performed over a full active period of the OFDM symbol; in 8K mode, a full version of the delay line in the correlator would require up to 8192 complex samples store locations (each of 20 bits) leading to a large memory of 163840 bits.

The inter symbol recursive filter performs its averaging over a full symbol period (active + guard interval period). In 8K mode with a guard interval of one quarter of the active period this results to 10240 complex samples per OFDM symbol, each complex samples of 24 bits, 12 bits for both real and imaginary parts, leading to a memory requirement of 245760 bits. Thus, a full version of the timing algorithm requires about 410 Kbits of memory.

Some architecture trade-offs and some algorithm alterations in the timing synchronisation are necessary for the sole purpose of reducing this huge amount of memory but without degrading the performance.

To reduce dramatically this memory and still keeping the same performance, the timing synchronisation in accordance with the invention consists of two processes, a coarse timing synchronisation process and a fine timing synchronisation process, as illustrated in Figure 8.

The coarse timing synchronisation process realises a correlation and inter symbol recursive filtering only over a subset of the OFDM signal by sub-sampling in time by a factor of 8 in 8K mode (by a factor of 2 in the 2K mode) the incoming complex samples, resulting in the storage of only 1024 complex samples for the correlator and 1280 complex samples for the inter symbol recursive filter. The coarse timing synchronisation process identifies rapidly the region of net correlation where the rising edge of the pulse structure is presumed to be located.

The fine timing synchronisation process corresponds to a full resolution of the correlation and the inter symbol recursive filtering but only in the region where the rising edge of the pulse structure is determined by the coarse process. This region called the fine window represents only 1/32 of the complete active period in 8K that is 224 complex sample store locations for the correlator and 224 complex samples for the recursive filtering. The task of fine timing synchronisation is to determine more gradually and precisely the phase of the incoming symbol pulse.

Such timing synchronisation requires 61056 bits or only 15% of memory which is required for a full resolution version of the timing synchronisation.

The optimised timing implementation consists of eight major units as shown in Figure 9. A correlator 80 operating only on coarse and fine samples performs the correlation between the delayed version of the noisy-like OFDM signal and its complex conjugate.

A high pass recursive filter 82 operating on coarse samples only removes the offset cause by the interferer. This is followed by an IIR symbol filter 84 operating over coarse and fine samples which exploits the periodic nature of the waveform to suppress noise and other impairments to produce a rectangular pulse, the duration of which is related to the guard interval.

Then coarse adaptive slicer unit 86 working only on coarse samples and the fine adaptive slicer unit 88 working on all the samples, project the incoming complex input along four axes (real, -real, imaginary, -imaginary), compares the four axis values, choose the larger one and slice it at a predetermined value. The one bit signals from the coarse and fine adaptive slicer units are passed respectively to coarse and fine pulse processor units 90, 92 which check and isolate the desired coarse and fine leading edge of the correlation pulse. Finally, the *EDGE_FINE* and *EDGE_COARSE* signals produced respectively by the fine and coarse units are presented to a symbol counter 94. The role of the symbol counter is to obtain both the sampling frequency and symbol timing synchronisation. The symbol counter provides a fine window interval on line 96 to correlator 80. Symbol counter 94 provides a start pulse for the FFT processing and the sampling frequency error for VCXO 8 (Figure 2).

It will be observed that the coarse and fine operations are carried out simultaneously, in parallel. Thus in operation, on startup, the *EDGE_COARSE* signal will not be stable and hence the window for the fine process will be similarly unstable, with no useful information being provided. As the coarse process settles with more incoming samples, the *EDGE_COARSE* signal becomes more stable, and the window for the fine process moves less, eventually becoming fixed. As the recursive filtering in the fine process becomes effective, the *EDGE_FINE* signal will remain stable, even with occasional movement of the fine window, caused by spurious movement of the *EDGE_COARSE* signal. If however, the *EDGE_COARSE* signal moves to a stable new position, the *EDGE_FINE* signal will eventually degrade and the recursive filtering will gradually move the *EDGE_FINE* signal to a new stable position.

The correlator unit performs the correlation between the delayed version of the noisy-like OFDM signal and its complex conjugate. During the coarse processing, the correlator in 8K mode, considers only one sample over eight received while in 2K mode, one over two complex samples are considered resulting for the two modes to a coarse buffer of 1024 coarse samples.

The correlator unit 80 consists of two logical buffers, a coarse logical buffer and a fine logical buffer that can be implemented with a single port memory of 1248 words of 20 bits (1094 coarse and 224 fine samples).

After the correlator unit 80, the high pass filter unit 82 consists of an intra symbol recursive low pass filter which extracts the average level of the complex produce signal and a subtractor which subtracts the average level from the complex input signal. This HPF function is working only on coarse samples. Referring to Figure 11, the high pass filter comprises a subtractor 1102 for subtracting the input signal from an averaged version of the input signal, the averaged value being provided by a delay element 1104 which provides an output both to subtractor unit 1102 and to a further subtractor unit 1106 coupled to receive the input signal and providing a difference value to a constant multiplier $\alpha_1$(1/8192 in 2 K mode and 1/32768 in 8 K mode) 1108, the scaled version being provided to an adder 1110 where it is added with the output of delayed unit 1104, thereby providing a long term average complex input signal.

The high pass filter unit 82 is followed by the inter symbol IIR filter unit 84 which suppress noise to produce a recognisable pulse. This filter works on both coarse and fine samples only and implements the following equation from symbol to symbol for every incoming fine and coarse complex samples:

$$y_k(l+1) = \alpha_2(\chi_k(l+1) - y_k(l)) + y_k(l)$$

Where $k$ represents the temporal index and $l$ the symbol number.

Referring to Figure 12, the intersymbol IIR filter unit 84 comprises a delay line 1202 having a full one symbol delay, representing the active OFDM symbol pulse and the guard interval. The output of the delay is applied to a subtractor 1204 where it is subtracted from the input signal, the difference version being scaled by a factor $\alpha_2$, the scaled signal being added in an adder 128 to the output from delay unit 1202, the output from the adder being applied to the input of delay unit 1202 and also being provided as an output signal.

The delay line is organised as two logical buffers, a coarse logical buffer and a fine logical buffer. The coarse logical buffer depending on the guard interval should be able to address up to 1280 complex coarse samples while the logical fine buffer is up to 224 complex samples. Each sample are 12 bits real and imaginary parts. For the implementation, the delay line consists in a one single port physical memory of 1504 words of 24 bits (complex samples). Table 1 summarises the number of complex samples for both logical buffers.

Table 1

| Δ | 1/32 | | 1/16 | | 1/8 | | 1/4 | |
|---|---|---|---|---|---|---|---|---|
| mode | 2K | 8K | 2K | 8K | 2K | 8K | 2K | 8K |
| Coarse buffer | 1056 | 1056 | 1088 | 1088 | 1152 | 1152 | 1280 | 1280 |
| Fine buffer | 128 | 224 | 128 | 224 | 128 | 224 | 128 | 224 |
| Total buffer | 1184 | 1280 | 1216 | 1312 | 1280 | 1376 | 1408 | 1504 |

After the inter symbol filter 84, the coarse adaptive slicer 86 and pulse processor 90 operate in parallel with the fine adaptive slicer 88 and pulse processor 92 units. Only the coarse units are described below. The fine units are identical but process all samples within a fine window. The coarse adaptive slicing operates as follows.

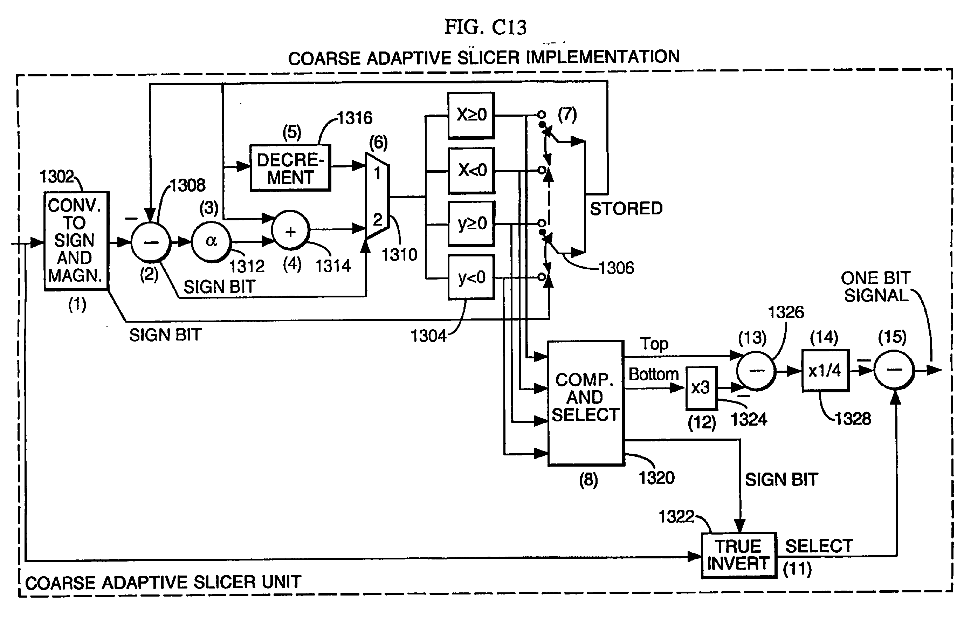

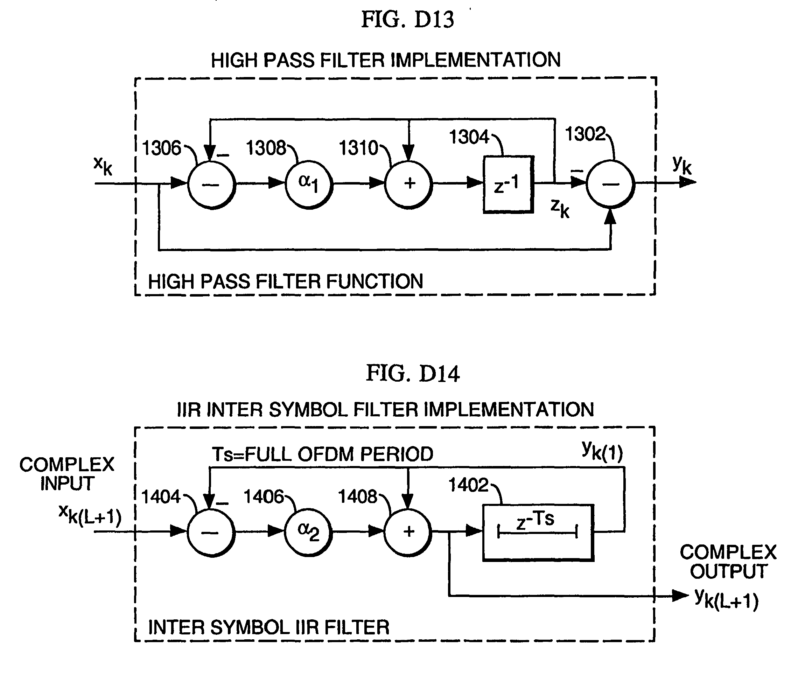

Referring back to Figure 6, the shape of the pulse from the filters may not be optimum because there may be local oscillator frequency error in the down-converter. Such an error causes the complex pulse to be rotated from its nominal position on the real axis to another position in the Argand diagram, so that the argument of the pulse can take any value. In addition, the modulus of the pulse can vary, and the shape of the pulse can vary in view of multipath in the propagation. The basis of the method shown in Figure 6 is that, if the plane of the argument of the symbol pulse is close to the real or imaginary axis, than that signal component represents a good approximation to the signal. Thus, referring to Figure 13, the input signal is converted to a sign and magnitude value in converter 1302, and the output is applied via a filtering mechanism to registers 1304 storing the magnitude values on the 4 axes. The sign bit from converter 1302 controls switches 1306 to select either the negative or positive part of the axes for application to a subtractor 1308 where the stored value is compared with the input signal, the sign of the comparison being applied to a multiplexer unit 1310. The output of the subtractor 1308 is applied to a scaler 1312 and thence to an adder 1314 where the scaled input signal is added to the stored value, and the updated value or the previous stored value is chosen by multiplexer 1310, in accordance with the result of the subtraction in unit 1308. A decrementing circuit 1316 is provided which subtracts 1 from the stored magnitude every 512 clock cycles at 10 MHz in 2 K mode and every 2,048 clock cycles at 9 MHz in 8 K mode. The scaler 1312 scales by a factor 1/4.

The four stored values representative of the peak for the four axes (X≥0, X < 0, Y≥0, Y<0) are compared at 1320 and the greater axis in magnitude (Top) is chosen. This determines whether the real or imaginary component has the greater peak magnitude and controls the selection either of all the real samples from the input if X≥0 or X < 0 axes are chosen or all are imaginary otherwise. Also the sign of the greater axis in magnitude is used at 1322 to control the inversion of the selected input samples in such a way that the output of the True/Invert unit always provides a positive rectified value. At the same time, the positive axis (X≥0 or Y≥0) with the greater magnitude (Top) has subtracted three times (12) the value of the axis labelled Bottom this axis corresponding to the opposite direction of the axis Top (units 1324, 1326), the result of the subtraction being divided by 4 at 1328. This result is then subtracted at 1330 from the rectified selected input sample and the sign bit of the subtraction provides a One Bit Signal to the coarse pulse processor unit 90.

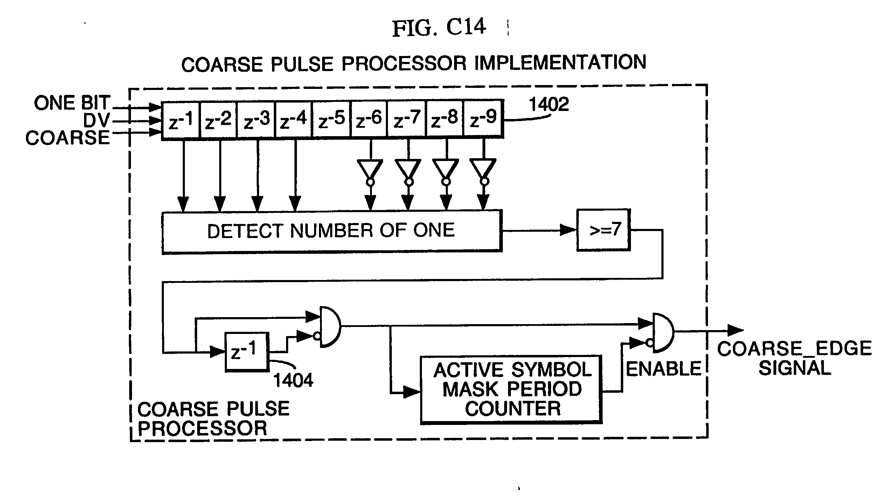

The coarse pulse processor unit 90 operates only on coarse samples takes the one bit signal coming from the coarse adaptive slicer unit and produces a single short pulse from the rising edge of the symbol pulse as shown in figure 14. A majority logic 1402 detects the rising edge of the input pulse, and produces by a monostable 1404, a pulse in the region of the rising edge of the pulse, which is provided as an output single clock pulse. The coarse pulse processor logic also prevents any further pulses from being conveyed to the output until the region of the next symbol pulse has been reached. To do so, an Active Period Symbol counter 1406 is free-incrementing up to its maximum. Only when the free-running counter has reached its maximum, then a pulse from monostable 1404 is permitted, presented to the output (the *Coarse_Edge* signal). This single pulse also reinitiates the counting process of the free-running counter. When the maximum is not reached, any new incoming single pulse is ignored, thus preventing single pulses to be closer than the active period TA.

The symbol counter unit 94 receives the *Edge_Fine, and Edge_Coarse* signals coming respectively from the fine and coarse pulse processor units 90, 92. The symbol counter unit 94 comprises an upper fine counter 1502 for receiving *Edge_Fine* signal, a lower counter 1504 receiving a clock signal, and an upper coarse counter 1506 receiving an *Edge_Coarse* signal. The lower counter 1504, when it completes a whole number of count cycles in a symbol period, provides an enable signal so that the coarse and fine stages advance by one each time the lower counter 1504 completes a count cycle. In 2 k mode, the lower counter counts over the range 0 to 127 while in 8K mode over the range 0 to 511. Lower counter 1504 simply counts the incoming 18MHz clock pulse and is never reset. At every *Edge_Fine* pulse the lower counter value is stored in a register 1508. The output of this register Vout is interpreted as a signal for controlling the frequency of the control oscillator 8 (Figure 3).

The upper fine counter 1502 counts from 0 to 32, 0 to 33, 0 to 35 or 0 to 39 depending on whether the guard interval is 1/32, 1/16, 1/8 or 1/4. This upper fine counter is reset either by the *Edge_Fine* signal or by the upper count completing its count range.

When in 2k mode the upper fine stage value is 2, 4, 8, or 16 for a guard interval of 1/32, 1/16, 1/8 or 1/4 then the starting signal START is asserted high otherwise low and provided to FFT unit 24. In 8K mode only the upper fine stage value is 2, 4, 8, or 16 for a guard interval of 1/32, 1116, 1/8 or 1/4 then the starting signal is asserted high. A Hold Off logic 1510 just prevents two consecutive START signals to be present within a time period less than an active period.

As with the upper fine counter 1502, the upper coarse counter 1506 counts from 0 to 32, 0 to 33 or 0 to 39 depending on whether the guard interval is 1/32, 1/6, 1/8 or 1/4. This upper counter is reset either when it is completing its count range or an Edge Coarse event occurs. The fine window is generated from the upper coarse counter values and is specified as in Table 2.

Table 2

| Δ | 1/32 | 1/16 | 1/8 | 1/4 |
|---|---|---|---|---|
| 2K mode | 30 to 0 | 31 to 0 | 33 to 0 | 37 to 0 |
| 8K mode | 0 | 0 | 0 | 0 |

Features of the invention, at least in the preferred embodiment:

1) This sub-sampling version of the timing synchronisation leads to 61K bits of storage elements instead of 410K bits with the full resolution version of the timing synchronisation.
2) To have two processes working in parallel, a coarse process and a fine process
3) Use only a sub-set of incoming data by sub-sampling to determine a small region of interest.
4) To have in this small region of interest a full resolution to keep good performance.

DEMODULATING DIGITAL VIDEO BROADCAST SIGNALS

This invention relates to demodulating digital video broadcast (DVB) signals.

There are currently two major types of DVB, namely, terrestrial broadcasting and satellite/cable broadcasting. The invention is particularly, though not exclusively concerned with terrestrial broadcasting, which has special problems, particularly in communication channel impairment, arising from adjacent television channels, multipath, and co-channel interference, for example. A type of transmission which has been developed to meet these problems is known as Coded Orthogonal Frequency Division Multiplexing (COFDM) - see for example "Explaining Some of the Magic of COFDM" Stott, J.H. - Proceedings of 20th International Television Symposium, Montreux, June 1997. In COFDM, transmitted data is transmitted over a large number of carrier frequencies (1705 or 6817 for DVB) occupying a bandwidth of several MHz in the UHF spectrum, spaced (by the inverse of the active symbol period) so as to be orthogonal with each other; the data is modulated as QPSK or QAM and convolutionally coded, to enable soft-decision (Viterbi) decoding. Metrics for COFDM include Channel State Information (CSI) which represents the degree of confidence in each carrier for reliably transmitting data.

Modulation and Demodulation of the carriers may be carried out by a Fast Fourier Transform (FFT) algorithm performing Discrete Fourier Transform operations. Naturally, various practical problems arise in demodulation, firstly in translating the transmitted signal to a frequency at which demodulation can be carried out, and secondly by accurately demodulating the data from a large number of carriers in a demodulator which is not overly complex or expensive, which involves *inter alia* synchronising the demodulator (receiver) in time to the incoming signal. This is important for the proper execution of the FFT algorithms.

The data signal on each carrier has a relatively long symbol period and this, in part, gives the signal its good performance in conditions of multipath propagation. The multipath performance is further enhanced by the inclusion of a guard interval in which a portion of the modulated signal waveform taken from the end of each symbol is also included at the beginning of the symbol period. Different fractions of the basic symbol period, can be used in this way to provide immunity to multipath distortion of increasingly long delays.

The principal requirement for synchronisation in a receiver is to obtain from the signal waveform a reliable time synchronisation pulse related to the start of the symbol period. Such a pulse is then used to start, at the correct position in the waveform, the process of Fourier Transformation which accomplishes a major portion of the demodulation process. A second requirement for synchronisation is to lock a digital sampling clock for analog to digital conversion in the receiver to an appropriately chosen harmonic of the symbol period. However, the modulated OFDM waveform produced by adding together all the modulated carriers is essentially noise-like in nature and contains no obvious features such as regular pulses which could be used to synchronise the circuitry receiver. Because of this, techniques for synchronisation are based on correlation of the signal with a version of itself delayed by the basic symbol period. The similarity between the portion included to form the guard interval and the final part of the basic symbol is then shown as a region of net correlation while the remainder of the symbol period shows no correlation. Even so, the correlated waveform still reflects the noise-like nature of the signal waveform and can be impaired by signal distortions, so it is necessary to process the signal further to obtain reliable synchronisation.

British patent application GB-A-2037155 describes time synchronisation involving the use of correlation and a filter which exploits the periodicity of the waveform to form a complex symbol pulse. The modulus of the pulse signal is used to derive a pulse related to the start of the symbol period and a signal to control a sampling clock frequency in the demodulator.

An implementation of such an arrangement in the 8K mode of COFDM would require about 369Kbits of memory, which is far too great for implementation in a single chip.

It is an object of the present invention to provide a demodulator for digital terrestrial broadcast signals which can demodulate data transmitted by a COFDM system but which may be manufactured simply and inexpensively, preferably in a single integrated circuit chip.

The present invention is based on the recognition that in addition to timing synchronisation, correct demodulation requires *inter alia* both automatic frequency control (AFC) and channel equalisation (CE), both of which have memory requirements, but neither of which processes can be initiated until the timing synchronisation process is locked. The present invention envisages using the memory intended for use by AFC and/or CE in an initial hunt mode to establish synchronisation where a large amount of memory is required to hunt over a wide timing range , and then subsequently maintaining synchronisation in a zoom mode, where only a narrow timing range about the synchronisation point is checked for timing variation, requiring a small amount of memory. In the zoom mode, AFC and CE may come into operation, making use of the memory no longer required by timing. Should synchronisation be lost in the zoom mode, the system reverts to hunt mode, with suspension of AFC and CE.

The present invention provides in a first aspect, apparatus for demodulating digital video broadcast signals comprising data modulated on a multiplicity of spaced carrier frequencies, including:

conversion means for converting the broadcast signal to a series of digital samples in complex format, transform means for analysing the digital sample values to provide a series of data symbol values for each carrier frequency and signal processing means including channel equalisation means for receiving the signal values and providing an output for decoding, automatic frequency control means for controlling the frequencies of the digital sampling signals applied to said transform means, and

timing synchronisation means for synchronising the transform means with the symbol periods of the broadcast signal, including correlation means for receiving said digital signal values and comprising delay means having a time period equal to a symbol period, and multiplier means for receiving the digital signal values and a version thereof delayed by said delay means, to form a complex product signal, and means for processing the complex product signal to derive timing synchronisation pulses, wherein the timing synchronisation means is operable in an initial hunt mode for analysing said digital sample values over a relatively wide timing range to establish synchronisation, and then operable in a zoom mode for analysing the digital sample values over a relatively narrow range where the synchronisation point pulse is expected.

Usually, the relatively wide timing range will be a symbol period, preferably a full OFDM sampling period.

In a further aspect, the invention provides a method of demodulating digital video broadcast signals comprising data modulated on a multiplicity of spaced carrier frequencies, including:

converting the broadcast signal to a series of digital sample values in complex format, transforming the digital sample values to a series of data symbol values for each carrier frequency.

synchronising the transform means with the symbol periods of the broadcast signal, including correlating said digital signal values by multiplying the digital signal values and a version thereof delayed by a time period equal to a symbol period, to form a complex product signal, and processing the complex product signal to derive timing synchronisation pulses, wherein the timing synchronisation is carried out in an initial hunt mode, analysing said digital sample values over a relatively wide timing range to establish synchronisation,

and the timing synchronisation then being carried out in a zoom mode, analysing the digital sample values over a relatively narrow range about the synchronisation point, and processing the data symbol values, including channel equalising the data symbol values to provide an output for decoding, and automatically controlling the frequencies of the digital sampling signals applied to said transform means.

BRIEF DESCRIPTION OF THE DRAWINGS

A preferred embodiment of the invention will now be described with reference to the accompanying drawings, in which:-

Figure D1 is a schematic block diagram of a digital terrestrial front end converter incorporating the present invention;
Figure D2 is a more detailed block diagram of demodulating apparatus according to the invention forming part of the converter of figure D1;
Figure D3 is a more detailed block diagram of automatic frequency control and channel equalisation units of Figure D2;
Figure D4 is a diagram of adjacent OFDM symbols having active and guard intervals;
Figure D5 is a block diagram of a correlator unit for extracting timing information, together with waveform diagrams showing its principle of operation;
Figure D6 is a schematic diagram of a complex pulse recovered from the correlator;
Figure D7 is a block diagram together with appropriate waveform diagrams of one form of timing synchronisation employed for carrying out the present invention;
Figure D8 and D9 are diagrams illustrating the principle underlying the present invention;
Figures D10 and D11 are block diagrams illustrating memory usage in accordance within the preferred embodiment of timing synchronisation apparatus of the present invention;
Figure D12 is a block diagram of timing synchronisation apparatus according to the present invention;
Figure D13 is a schematic block diagram of a high pass filter used in time synchronisation;
Figure D14 is a schematic block diagram of an inter symbol filter used in the timing synchronisation;
Figure D15 is a schematic block diagram of an adaptive slicer used in the timing synchronisation;
Figure D16 is a schematic block diagram of a pulse processor used in the timing synchronisation; and
Figure D17 is a schematic block diagram of a symbol counter used in the timing synchronisation.

DESCRIPTION OF THE PREFERRED EMBODIMENT

The preferred embodiment of the present invention comprises a front end for digital terrestrial television transmitted according to the DVB-T specification. The front end consists of two separate components. First, an analog down-converter that converts the input signal from UHF to a low IF. Second, an integrated circuit chip that accepts the analog signal from the down-converter and performs the required DSP operations, which include synchronisation and demodulation, to form a stream of soft decisions suitable for presentation to an FEC decoder (Forward Error Correction decoder).

Full compliance to the DVB-T specification means that the chip is capable of decoding signals transmitted in the following modes:

1) A signal that contains either 1705 or 6817 active carriers, commonly referred to as 2K and 8K respectively. The chip includes the functionality and memory required to perform the FFT algorithm in both modes.
2) Non-hierarchical QPSK, 16-QAM and 64-QAM constellations.
3) Hierarchical 16-QAM and 64-QAM constellations, either uniform or non-uniform with the possible scale factors $\alpha$=2 and $\alpha$=4.
4) Guard intervals 1/4, 1/8, 1/16 and 1/32 of the OFDM symbol length.
5) Viterbi code rates 1/2, 2/3, 3/4, 5/6 and 7/8.

Referring now to figure 1, a block diagram of the front end system, a down-converter 2 receives the input UHF broadcast signal from an antenna 4 and converts the carrier signal to a first IF frequency of 30-40 MHz and then to a second IF frequency of 4.57 MHz. Since the bandwidth of the modulated data is about 7.6 MHz, this second IF signal is sufficiently low in frequency to present the signal as a base band signal to a demodulator chip 6. Demodulator chip digitises the incoming signal at a rate determined by a voltage controlled oscillator 8, and provides an Automatic Frequency Control on a line 9 to down-converter 2. The output of demodulator 6 represents demodulated data and is fed to a FEC decoder 10 (Forward Error Correction or Viterbi decoder) for recovering the data. The decoded data is fed to a transport stream demultiplexer 12 and then to an audio-visual decoder 14. The front end is controlled by a system microcontroller 16.

Referring now to figure 2, this shows the demodulator chip 6 in more detail. The chip itself is shown schematically in figure 3. The low second IF is fed to an analog digital converter which samples the IF signal at a frequency of 18.29 MHz (x 4 the second IF frequency of 4.57 MHz), in an analog to digital converter 20. The digital output samples are fed to a real to complex converter 22 which converts the digital samples to complex number values in order to provide a complex signal centred on zero frequency. This signal is fed to a Fast Fourier Transform device (FFT) 24 and to a timing synchronisation unit 26 which derives timing synchronisation pulse from the complex input signal which is fed on line 261 to FFT 24. A frequency error signal is fed to a digital to analog converter 28 to supply an analog control voltage to a voltage controlled oscillator 8, which provides a sampling clock signal on line 262 to analog to digital converter 20, and the remaining units in the signal processing chain.

The FFT device 24 has four modes of operation. Firstly, it is capable of performing either a 2048 point or an 8192 point transform. Second, it is capable of performing the transform in either direction. The inverse FFT functionality is provided so that the integrated circuit may be used in applications requiring OFDM modulation. In any event, the FFT performs a series of discrete Fourier transforms on each carrier frequency to provide at an output the data symbols for each carrier frequency. These output signals are corrected in phase at a common phase error generator unit 30 and then passed to a channel equaliser 32, a channel state information unit 34 and a deinterleaver 36. The signal thus processed is then passed at an output from the demodulator to forward error correction unit 10. The phase error correction block 30 calculates the common phase error of the signal and applies the necessary correction. The channel equaliser 32 first performs linear temporal equalisation followed by frequency equalisation using a high order interpolating filter. The equaliser outputs an equalised constellation to the channel state information unit 34. Unit 34 generates 3 or 4 bit soft decisions which are suitable for presentation to a Viterbi decoder. Deinterleaver 36 performs firstly symbol deinterleaving followed by bit deinterleaving.

In addition, the output signals from FFT 24 are passed to a frequency synchronisation unit 38 which converts it to a control signal on line 9 for automatic frequency control, which acts upon a local oscillator in down-converter unit 2 for adjusting the frequency of the first or second IF. As an alternative, unit 38 may control a DDFS unit 39 (indicated in dotted lines) to compensate digitally for the frequency drift by centering the signal around 0Hz.

In addition, the output of FFT 24 is fed to a frame synchronisation unit 40. A microcontroller interface 42 is provided, and in addition RAM memory 44 is provided to which all the units 22, 24, 30-36 have access to in order to provide their required operations.

Temporal Response versus Noise Averaging in Channel Equaliser 32

The signal from the FFT is affected by all the impairments caused by the channel; for example, in the presence of a single echo, the FFT output will suffer from frequency selective fading. the purpose of the channel equaliser 32 is to rotate and scale the constellation so that the constellations on all the carriers are of a known size ( but not necessarily of the same reliability). the process is performed by using the scattered pilot information contained in the COFDM signal.

The scattered pilots provide a reference signal of known amplitude and phase on every third OFDM carrier. Since this scattered pilot information is subject is subject to the same channel impairments as the data carriers, the scattered pilots are noisy.

In the present invention, linear interpolation is performed between two received scattered pilots, and these interpolated values are used as the reference to equalise the data. Since scattered pilots at the same time duration are spaced 4 OFDM symbols apart, a compensating data delay of 3 OFDM symbols must be provided to permit this option.

Automatic Frequency Control (APC) and Common Phase Error (CPE) Correction

The addition of local oscillator phase noise to an OFDM signal has two principal effects:

1) To rotate the received constellation by an amount which is the same for all carriers within one OFDM symbol, but varying randomly from symbol to symbol. This is called the common phase error (CPE) and primarily results from the lower- frequency components of the phase- noise spectrum; and

2) To add Inter-Carrier Interference (ICI) of a random character similar to additive thermal noise. ICI primarily results from the higher frequency components of the phase-noise spectrum. ICI cannot be corrected and must be allowed for in the noise budget. It can be kept small in comparison with thermal noise by suitable local oscillator design.

It is possible to remove the common phase-error component caused by phase noise added in the down-converted by digital processing in the chip. This processing is performed by the common-phase-error correction block 30.

The common-phase-error correction block 30 is able to remove the common phase error because all carriers within a given symbol suffer the same common phase error. By measuring the continual pilots, whose intended phase is the same from symbol to symbol, the common phase error is determined and then subtracted from the phase of all the data cells in the same symbol. There are sufficient continual pilots (which in any case are transmitted with a power approx. 2.5 dB greater than data cells) that the effect of thermal noise on this measurement can be rendered negligible by averaging.

As explained above, AFC is necessary, for strict control over the frequency of the down-converted broadcast signal. This control may be exerted over the local oscillator in the down-converter, or by means of a DDFS 39 prior to the FFT unit 24. In the present invention it is recognised that the frequency error may be determined by computing phase variation between adjacent symbol intervals in continual pilot signals (see our copending application GBP12427A), a first phase difference representing fine frequency error (less than one carrier spacing) and a rate of change of phase difference (second phase difference) being used to determine coarse frequency error (number of whole carrier spacings offset) Thus two delay elements, in which consecutive data symbols are held, are required to compute the second phase difference. In addition, the computed first phase difference is employed for CPE correction.

Referring now to Figure 3, this shows a more detailed block diagram of the common phase error correction circuit 32 and channel equaliser 30. The common phase error correction circuit 30 receives an output from FFT 24 which is applied to first and second delay elements 50, 52, each being 16K memory locations for holding 8K data symbols in complex format. Signals from the inputs and outputs of delay elements 50, 52 are provided to subtraction circuits in a unit 54 in order to derive phase error signals. These phase error signals are employed for fine frequency error correction.. The assessed common phase error is applied to correction circuits 58, 60, the output to correction circuit 60 being applied via a further delay element 62. The signal outputs from memory elements 50, 52 are thus corrected for phase in circuits 58, 60, and are applied to an interpolator 66 in channel equaliser circuit 32. The output circuit from correction circuit 58 is applied directly to the interpolator, but the signal from correction circuit 60 is applied to the interpolator firstly directly at tapping 68 and then via first and second memory elements 70, 72, each of 6252 x 20bits symbols in complex format. Thus, although as explained above a three symbol delay is necessary is order for CE to operate on scattered pilots, only two delay elements are required, since the third delay is provided by element 62.

A significant problem for demodulator integrated circuit 6 is the amount of RAM 42 that the chip requires.

It is necessary to make the best possible use of the RAM. Some of the blocks of memory, such as the FFT and symbol deinterleaver, require fixed amounts of RAM and it is not possible to reduce them (except by reducing the word widths and so degrading the performance). The timing synchronisation however is designed for reducing the amount of memory but without degrading the performance.

Timing Synchronisation

Coded Orthogonal Frequency Division Multiplexing (COFDM) has been specified for terrestrial television as defined in the DVB-T ETSI specification. The OFDM symbol produced by adding all the modulated carriers is essentially noise like in nature and contains no obvious features such as regular pulse which could be used to synchronise the receiver. The addition of the guard interval is the key to the usefulness of COFDM in multipath environment. It is also the key to the proposed synchronisation method. As shown in figure 4, each OFDM symbol is extended by a period $T_G$ (or$\Delta$) (the guard interval) which precedes the useful or active symbol period $T_A$, so that the whole symbol now lasts $T_S$ in total. $T_A$ is the reciprocal of the carrier spacing $F_A$, and is the duration of the time domain signal analysed by the fast Fourier Transform. Each carrier is continuous over the boundary between the guard interval and the active part of the same symbol, keeping the same amplitude and phase. If we consider the signal as complex baseband, with all the carriers not only spaced by $F_A$ but also equal to multiple $F_A$, then the signal in the guard interval is effectively a copy of the segment of the signal occupying the last $T_G$'s worth of the active part. It follows that the signal has the same value at any instant which are separated by $T_A$ but lie within the same symbol.

The similarity between the portion included to form the guard interval and the final part of the basic symbol is then shown as a region of net correlation while the remainder of the symbol period shows no correlation. Because of this, techniques for timing synchronisation are based on correlation of the signal with a version of itself delayed by the active symbol period. A correlator 74 is shown in Figure 5, comprising a one symbol delay 76 and a feed forward path 77 coupled to respective inputs of a complex multiplier 78.

The correlator takes the complex baseband signal Y, delays it by $T_A$ and multiplies the delayed version X with the complex conjugate of Y to form the product XY*. For those instants where the two samples X and Y belong to the same symbol, then the mean of the product XY* is proportional to $\sigma^2$ (the square of the variance); otherwise, the two samples X, Y being independent, the product XY* has zero mean. Because the output XY* of the complex multiplier is noisy (see Figure 5), it is necessary to filter to make visible the underlying pulse structure before the slicing process to detect the symbol pulse.

An implementation is shown in Figure 7. Two types of filter are used. The first filter, a recursive high pass filter 80 is included to remove the arbitrary DC component introduced when an OFDM signal experiences interferences. The second filter, an inter symbol recursive filter 82 reduces the noise component by averaging the signal value from one symbol to another. After these two filters, slicer 84 extracts the timing information in a way that it can be used to control the loop governing the sampling frequency and symbol timing. Because the timing synchronisation process takes place before frequency control, possible frequency offset caused by tuner error may occur. The complex filtered signal product input to slicer 84 is a complex pulse shape signal, as shown in Figure 6. This complex filtered signal product is effectively projected over the real and imaginary axes in slicer 84. The magnitudes of the real and imaginary projections are compared and the larger one is chosen. The selected one is then sliced and further processed to check and isolate the leading edge of the pulse.

This sample pulse is then fed to a pulse processor 86 which generates a single pulse at the leading edge of the pulse and prevents the generation of spurious pulses.

The timing of pulses produced by the pulse processor 86 is compared with the timing of pulses produced from the sampling clock frequency in a symbol counter 88. The comparison produces an error signal "sampling frequency error" applied to oscillator 8 (Figure 2).

The correlation function is performed over a full active period of the OFDM symbol; in 8K mode, a full version of the delay line in the correlator would require up to 8192 complex samples store locations (each of 20 bits) leading to a large memory of 163840 bits.

The inter symbol recursive filter performs its averaging over a full symbol period (active + guard interval period). In 8K mode with a guard interval of one quarter of the active period this results to 10240 complex samples per OFDM symbol, each complex samples of 20 bits, 12 bits for both real and imaginary parts, leading to a memory requirement of 204800 bits. Thus, a full version of the timing algorithm requires about 369 Kbits of memory.

Some architecture trade-offs and some algorithm alterations in the timing synchronisation are necessary for the sole purpose of reducing this huge amount of memory but without degrading the performance.

To reduce dramatically this memory and still keeping the same performance, the timing synchronisation in accordance with the invention consists of two processes, an initial HUNT and a subsequent ZOOM process, as illustrated in Figure 8.

The estimation of the frequency offset in AFC requires two OFDM symbol delays of memory, each memory of 6911 words of 20 bits whereas the Channel Equaliser for the channel response estimation requires two OFDM symbol memories, each of 6252 words of 20 bits. As the Frequency Synchronisation and the Channel Equaliser units cannot work properly until the Timing Synchronisation has reached its steady state, these memories are to the timing synchronisation process in order to perform the beginning of the Timing Synchronisation operations. Once the Timing Synchronisation process has reached its perform convergence point the Timing processing will zoom only around the region of interest where the rising edge of the correlated signal is supposed to be located, resulting in a much smaller memory requirement, the frequency synchronisation and the channel equaliser memories being given back to their respective units. If the timing synchronisation gets lost (unlock state), then the Frequency Synchronisation and Channel Equalisation memories would be reallocated to the Timing Synchronisation process. The zoom technique employed for the Timing Synchronisation process is illustrated in Figure 9.

The Timing Synchronisation process according to the invention consists in two states, the HUNT timing synchronisation state, and the ZOOM timing synchronisation state. In the HUNT state, the timing process is not locked, and the timing process tracks the rising edge of a correlated signal pulse. The state machine moves from HUNT to ZOOM when ALPHA consecutive pulse lock events occur otherwise stay in the HUNT state. In the ZOOM state, the timing process is pulse locked (the guard interval is properly detected and does not move). In ZOOM state, the state machine goes back to HUNT state when DELTA consecutive pulse unlock event occurs. In practice, ALPHA and DELTA are usually less than 10, say 4 or 5, and are preferably programmable.

In the HUNT state, the timing synchronisation process is unlocked and a rising edge pulse is tracked in the correlation signal. The timing process performs correlation and the filtering over the full OFDM signal with all the necessary memories located in the Frequency Synchronisation and Channel Equaliser units. The full 8K memory needed for the correlation operation is allocated to the first delay element 50 (Figure 10) and a part of the second delay element 52 of the frequency synchronisation while the 10K memory needed for recursive inter symbol filtering is allocated to the first delay element 70 and a part of the second delay element 72 of the channel equaliser unit.

Only after ALPHA consecutive events confirming that the timing synchronisation process has properly detected the rising edge of the correlated signal (Pulse locked condition) than the timing process moves from HUNT to ZOOM state, otherwise the timing stays in the HUNT state.

In the ZOOM state mode (Figure 11), the timing synchronisation is pulse locked since the region of interest where the rising edge of the pulse is sitting is properly detected. In this mode, all the memories are given back to their respective units, the frequency synchronisation and channel equaliser. Only two small buffers 92, 94 each of 384 words of 20 bits for the correlation and the inter symbol filtering reside in the timing synchronisation unit. After DELTA consecutive loss of pulse synchronisation, the timing synchronisation process goes back to the HUNT state mode where the Frequency Synchronisation and Channel Equaliser memories are reallocated to the timing process. Figure 11 illustrates the dataflow processing with the memory usage when in ZOOM state mode.

The preferred embodiment as shown in Figure 12 includes a correlator 74, operating on a full version (HUNT state) or only on a subset (ZOOM state) of the signal (3 time slots - 384 samples), performs the correlation between the delayed version of the noisy-like OFDM signal and its complex conjugate.

The high pass recursive filter 80 operating on all samples removes the offset caused by interference. This is followed by a IIR symbol filter 82 operating over a full version (HUNT state) or only over a subset (ZOOM state) of the signal which exploits the periodic nature of the waveform to suppress noise and other impairments to produce a rectangular pulse, the duration of which is related to the guard interval.

Then the adaptive slicer 84 projects the incoming complex input along the four axes (real, -real, imaginary, -imaginary), compares the four axis values, choose the larger one and then slices its at a predetermined value. The OneBit signals from the adaptive slicer unit is finally passed to the pulse processor unit 86 which check and isolate the desired leading edge of the correlation pulse. Finally, the *Edge_Pulse* signal produced by the pulse processor unit is presented to the symbol counter 88. The role of the symbol counter is to obtain both the sampling frequency and the symbol timing synchronisation. The symbol counter provides a zoom window signal on line 90, the Start pulse for the FFT processing and the sampling frequency error for external analog oscillator.

The correlator 74 performs the correlation between the delayed version of the noisy-like OFDM signal and its complex conjugate. In HUNT state, the correlator considers all the signal and gets the direct samples from its input and the delayed version of the signal from the Frequency Synchronisation unit memories 52, 54 (Figure 10). In the ZOOM state, the correlator considers only subset of the signal, subset defined by the zoom window and gets direct samples from its input and its delayed signal from its internal small buffer.

After the correlator unit 74, the high pass filter unit 80 consists of an intra symbol recursive low pass filter which extracts the average level of the complex product signal and a subtractor which subtracts the average level from the complex input signal. Referring to Figure 13, the high pass filter comprises a subtractor 1302 for subtracting the input signal from an averaged version of the input signal, the averaged value being provided by a delay element 1304 which provides an output both to subtractor unit 1302 and to a further subtractor unit 1306 coupled to receive the input signal and providing a difference value to a constant multiplier $\alpha_1$ (1/8192 in 2 K mode and 1/32768 in 8 K mode) 1108, the scaled version being provided to an adder 1310 where it is added with the output of delayed unit 1304, thereby providing a long term average complex input signal.

The high pass filter unit 80 is followed by the inter symbol IIR filter unit 84 which suppresses noise to produce a recognisable pulse. This filter works on the full symbol (HUNT mode), or a subset (ZOOM mode) and implements the following equation from symbol to symbol for incoming complex samples:

$$y_k(l+1) = \alpha_2(\chi_k(l+1) - y_k(l)) + y_k(l)$$

Where *k* represents the temporal index and *l* the symbol number.

Referring to Figure 14, the intersymbol IIR filter unit 82 comprises a delay line 1402 having a full one symbol delay, representing the active OFDM symbol pulse and the guard interval. The output of the delay is applied to a subtractor 1404 where it is subtracted from the input signal, the difference version being scaled by a factor $\alpha_2$, the scaled signal being added in an adder 1408 to the output from delay unit 1402, the output from the adder being applied to the input of delay unit 1402 and also being provided as an output signal.

The delay line is organised as a first buffer 70, 72 (Figure 10) in the HUNT mode of 10K. In the ZOOM mode (Figure 11) the buffer is organised as a buffer 94 of 384 words, each of 20 bits.

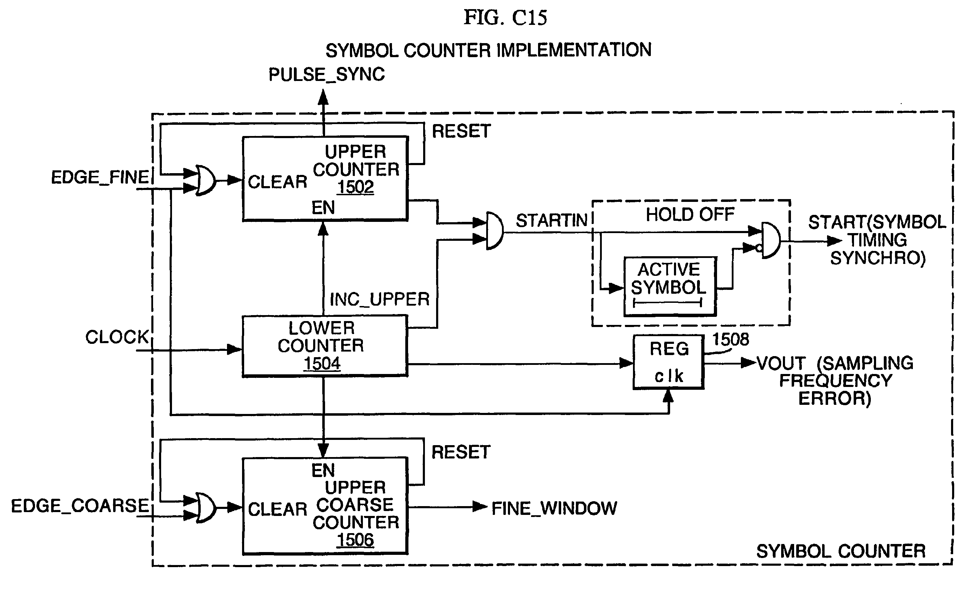

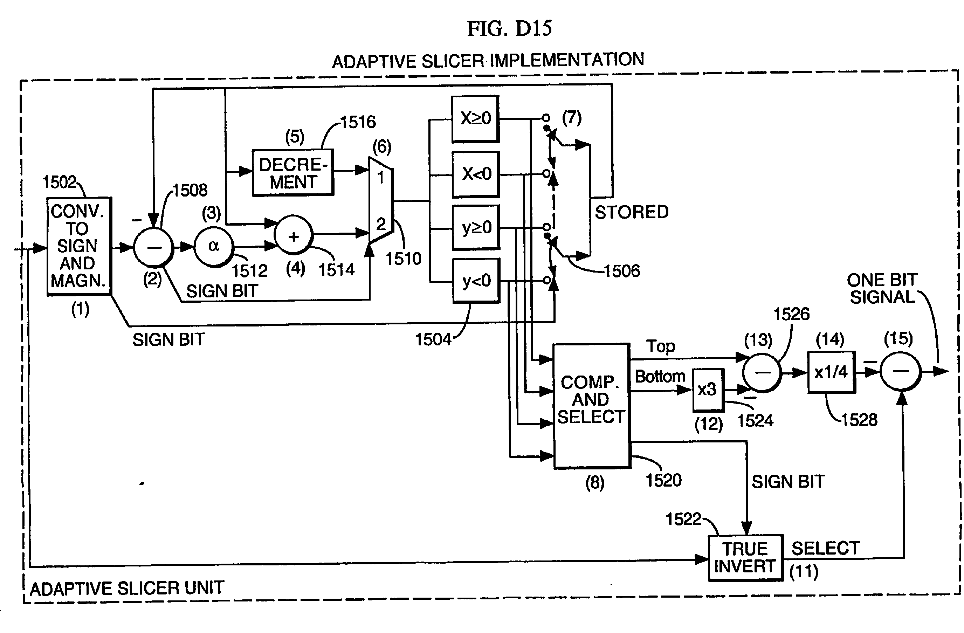

Referring back to Figure 6, the shape of the pulse from the filters may not be optimum because there may be local oscillator frequency error in the down-converter. Such an error causes the complex pulse to be rotated from its nominal position on the real axis to another position in the Argand diagram, so that the argument of the pulse can take any value. In addition, the modulus of the pulse can vary, and the shape of the pulse can vary in view of multipath in the propagation. The basis of the method shown in Figure 6 is that, if the plane of the argument of the symbol pulse is close to the real or imaginary axis, than that signal component represents a good approximation to the signal. Thus, referring to Figure 15, the input signal is converted to a sign and magnitude value in converter 1502, and the output is applied via a filtering mechanism to registers 1504 storing the magnitude values on the 4 axes. The sign bit from converter 1502 controls switches 1506 to select either the negative or positive part of the axes for application to a subtractor 1508 where the stored value is compared with the input signal, the sign of the comparison being applied to a multiplexer unit 1510. The output of the subtractor 1508 is applied to a scaler 1512 and thence to an adder 1514 where the scaled input signal is added to the stored value, and the updated value or the previous stored value is chosen by multiplexer 1510, in accordance with the result of the subtraction in unit 1508. A decrementing circuit 1516 is provided which subtracts 1 from the stored magnitude every 512 clock cycles at 10 MHz in 2 K mode and every 2,048 clock cycles at 9 MHz in 8 K mode. The scaler 1512 scales by a factor 1/4.

The four stored values representative of the peak for the four axes (X≥0, X < 0, Y≥0, Y<0) are compared at 1520 and the greater axis in magnitude (Top) is chosen. This determines whether the real or imaginary component has the greater peak magnitude and controls the selection either of all the real samples from the input if X≥0 or X < 0 axes are chosen or all are imaginary otherwise. Also the sign of the greater axis in magnitude is used at 1522 to control the inversion of the selected input samples in such a way that the output of the True/Invert unit always provides a positive rectified value. At the same time, the positive axis (X≥0 or Y≥0) with the greater magnitude (Top) has subtracted three times (12) the value of the axis labelled Bottom, this axis corresponding to the opposite direction of the axis Top (units 1524, 1526), the result of the subtraction being divided by 4 at 1528. This result is then subtracted at 1530 from the rectified selected input sample and the sign bit of the subtraction provides a One Bit Signal to the pulse processor unit 86.

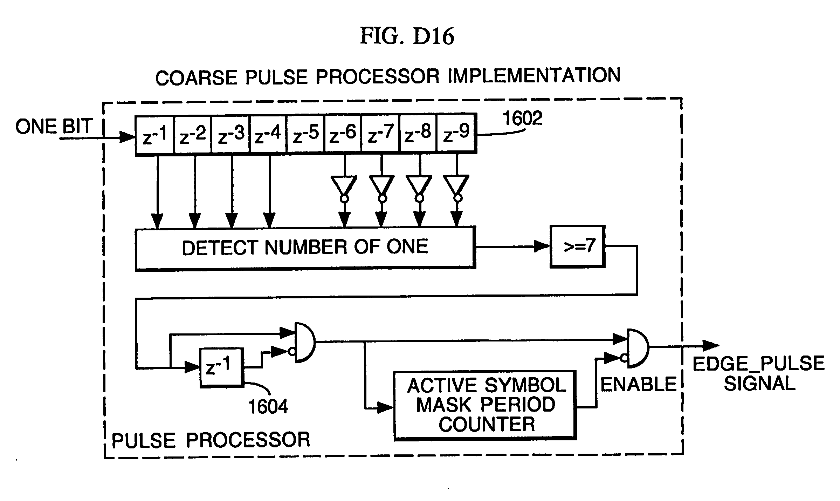

The pulse processor unit 86 takes the one bit signal coming from the adaptive slicer unit and produces a single short pulse from the rising edge of the symbol pulse as shown in figure 16. A majority logic 1602 detects the rising edge of the input pulse, and produces by a monostable 1604, a pulse in the region of the rising edge of the pulse, which is provided as an output single clock pulse. The pulse processor logic also prevents any further pulses from being conveyed to the output until the region of the next symbol pulse has been reached. To do so, an Active Period Symbol counter 1606 is free-incrementing up to its maximum. Only when the free-running counter has reached its maximum is a pulse from monostable 1604 presented to the output (the *Edge-Pulse* signal). This single pulse also reinitiates the counting process of the free-running counter. When the maximum is not reached, any new incoming single pulse is ignored, thus preventing single pulses to be closer than the active period TA.

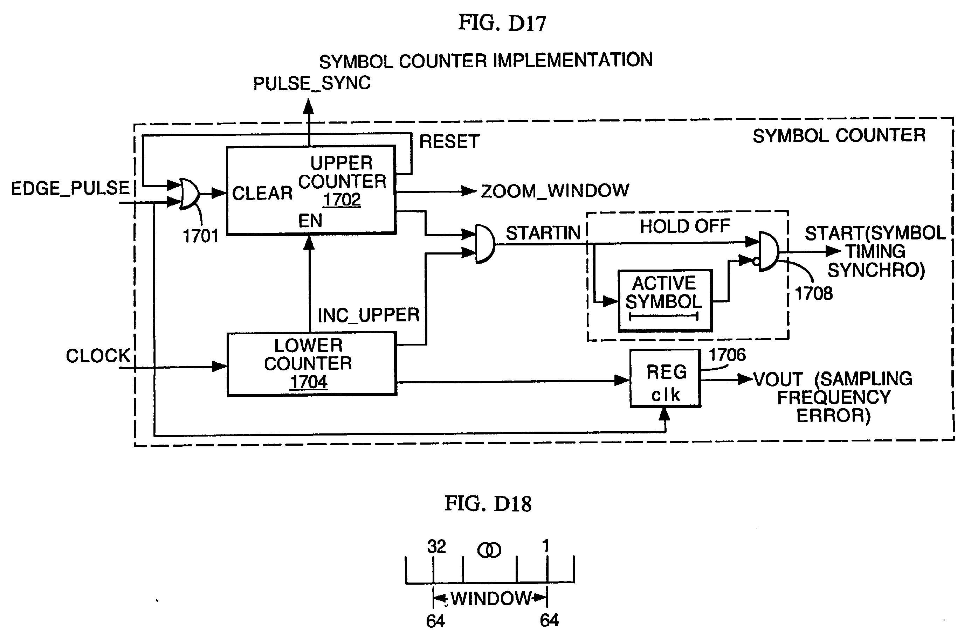

The symbol counter unit 88 receives the *Edge_Pulse* signal from the pulse processor unit 86. The symbol counter unit 88 comprises (Figure 17) an upper counter 1702 for receiving *Edge_Pulse* signal, and a lower counter 1704 receiving a clock signal. Upper counter 1704 provides a *Zoom-Window* signal for defining a zoom window in the ZOOM mode. Upper counter 1704 provides a Pulse Sync signal when timing lock is achieved.

The lower counter 1704 completes a whole number of count cycles in a symbol period, while the upper counter advance by one each time the lower stage completes a count cycle. The lower stage counts over the range 0 to 127, simply incrementing at every incoming CLK18 clock pulse and never reset. At every Edge_Pulse, the lower counter content is stored in a register 1706. The output of this register Vout is interpreted as a signal for controlling the frequency of the control oscillator.

The upper counter 1704 counts from 0 to 32, 0 to 33, 0 to 35 or 0 to 39 in 2K mode while from 0 to 131, 0 to 135, 0 to 143 or 0 to 159 in 8K mode depending on whether the guard interval is 1/32, 1/16, 1/8 or 1/4. In Zoom state mode, this upper counter is only reset when it is completing its count range, whereas in Hunt state mode, this upper counter is reset when it is completing its count range or when a PULSE START occurs.

The Zoom Window provided by the signal Zoom_Window is defined by the upper counter value which is specified in Table 1. This Zoom Window is only relevant for the synchronisation process only in Zoom state mode.

The PULSE_SYNC signal specified if the demodulator is properly locked to the beginning of the OFDM symbol otherwise not. This signal is updated by the Edge_Pulse signal. In Zoom state mode, only if the upper counter content and the lower counter are in the range specified in Table 1 when a Edge_Pulse occurs than the PULSE_SYNC signal is asserted high other low. When in HUNT state mode, only if the upper counter content is zero when a Edge_Pulse occurs than the PULSE-SYNC signal is asserted high otherwise low.

The signals Zoom_Window and Pulse_Sync are processed in a counter means (not shown) so that a change of state from HUNT to ZOOM only occurs afer ALPHA consecutive Pulse_Sync signals are provided (or Pulse_Sync exists in ALPHA consecutive symbol periods). Similarly a change of state from ZOOM to HUNT only occurs after loss of the Signal Zoom_Window for DELTA consecutive symbol intervals. As an example the counter means is arranged such that both ALPHA and DELTA are equal to three.

Table 1

| Δ | | 1/32 | 1/16 | 1/8 | 1/4 |
|---|---|---|---|---|---|
| 2K mode | upper counter (Zoom Window range) | 32 to 1 | 33 to 1 | 35 to 1 | 39 to 1 |
| | lower counter | lower ≥ 64 when upper= 32 lower < 64 when upper = 1 | lower ≥ 64 when upper=33 lower < 64 when upper = 1 | lower ≥ 64 when upper=35 lower < 64 when upper =1 | lower ≥ 64 when upper=39 lower < 64 when upper = 1 |
| 8K mode | upper counter (Zoom Window range) | 131 to 1 | 135 to 1 | 145 to 1 | 159 to 1 |
| | lower counter | lower ≥ 64 when upper= 131 lower < 64 when upper = 1 | lower ≥64 when upper= 135 lower < 64 when upper = 1 | lower ≥64 when upper= 145 lower < 64 when upper =1 | lower≥ 64 when upper= 159 lower < 64 when upper = 1 |

When in 2K mode the upper stage value is 2, 4, 8 or 16 for a guard interval of 1/32, 1/16, 1/8 or 1/4 then the starting signal is asserted high otherwise low while in 8K mode only, the upper stage value is 8, 16, 32 or 64 for a guard interval of 1/32, 1/16, 1/8 or 1/4 then the starting signal is asserted high. Hold Off logic 1708 prevents two consecutive START signals to be present within a time period less than an active period.

Thus in operation, in the initial hunt mode, the edge of the pulse from filter 82, 84 is detected in slicer 84, to generate in pulse processor 86 and Edge_Pulse signal which is applied to OR gate 1701 of symbol counter 88. This clears counter 1702 , to provide a START signal from Hold Off circuit 1708. In addition a Pulse_Sync signal is generated to indicate lock has been achieved, but this is not available for ALPHA consecutive symbol intervals in order that a reliable lock is achieved.

The Edge_Pulse is also applied to register 1706 to set the register at the current value of the lower counter 1704, representing sampling frequency error. Thus the clock oscillator 8 is controlled in a control loop, such that a value of 0 is a large negative signal and a value of 127 is a large positive signal. A count of 64 gives zero frequency error, so that ultimately the loop will settle so that the average position of the incoming symbol pulses coincides with the count 64 in the lower counter. Thus coarse lock is achieved rapidly from the upper counter, and fine lock gradually by the action of the control loop.

The lower counter 1704 received the 18MHz clock signal. The count of upper counter 1702 is adjusted for the particular mode. Thus when coarse lock has been achieved, and the Pulse_Sync signal is stable, a signal Zoom_Window is issued by counter 1702. Referring to Table 1, this signal occupies three count values of the upper counter, e.g. 32, 0, 1 for the 2K mode, 1/32 guard interval. In addition, this window is generated only when the lower counter is above its mid point of 64 in the interval 32 and below its mode point in interval 1, as indicated in Figure 18. In the zoom mode, as previously indicated, the timing circuitry operates on just 3 symbols, a fraction of the incoming symbols, and therefore the memory requirements is reduced to buffers 90, 92. Timing lock is retained as long s the Edge_Pulse signal continues to arrive within the window defined as shown in Figure 18.

DEMODULATING DIGITAL VIDEO BROADCAST SIGNALS

This invention relates to demodulating digital video broadcast (DVB) signals.

There are currently two major types of DVB, namely, terrestrial broadcasting and satellite/cable broadcasting. The invention is particularly, though not exclusively concerned with terrestrial broadcasting, which has special problems, particularly in communication channel impairment, arising from adjacent television channels, multipath, and co-channel interference, for example. A type of transmission which has been developed to meet these problems is known as Coded Orthogonal Frequency Division Multiplexing (COFDM) - see for example "Explaining Some of the Magic of COFDM" Stott, J.H. - Proceedings of 20th International Television Symposium, Montreux, June 1997. In COFDM, transmitted data is transmitted over a large number of carrier frequencies (1705 or 6817 for DVB), spaced (by the inverse of the active symbol period) so as to be orthogonal with each other; the data is convolutionally coded, to enable soft-decision (Viterbi) decoding. Metrics for COFDM include Channel State Information (CSI) which represents the degree of confidence in each carrier for reliably transmitting data.

Modulation and Demodulation of the carriers may be carried out by a Fast Fourier Transform (FFT) algorithm performing Discrete Fourier Transform operations. Naturally, various practical problems arise in demodulation in a receiver, firstly in down-converting the transmitted signal in a tuner to a frequency at which demodulation can be carried out, and secondly by accurately demodulating the data from a large number of carriers in a demodulator which is not overly complex or expensive.

In the receiver, frequency offsets may appear after the tuner down-conversation due to oscillator tolerance. Such frequency offset is lethal for signal recovery and frequency has therefore to be tracked by Automatic Frequency Control (AFC). In addition, oscillator phase noise introduces a so-called Common Phase Error (CPE) term, which is a phase offset all carriers bear, and that varies randomly from symbol to symbol. This effect has also to be compensated. Finally, the channel response may not be flat, due to echoes, interferers, and a Channel Equaliser is required to correct for such channel imperfections.

An important consideration in designing a demodulator for incorporation in an integrated circuit chip is reducing the requirements for memory. Bearing in mind the chip may only contain about 1 M Bit of memory, and that signal values for up to about 7000 carrier frequencies may be processed in the chip, this requires tight control over the use of available memory. Certain operations such as Fourier transformation and symbol interleaving require fixed amounts of memory (about 50% of the total). However, other operations such as timing synchronisation, common phase error (CPE) correction, and Channel Equalisation (CE) require some memory but the amount of memory is not fixed.

SUMMARY OF THE INVENTION

Accordingly, the present invention provides apparatus for demodulating a digital video broadcast signal comprising data modulated on a multiplicity of spaced carrier frequencies, the apparatus including:

transform means for analysing the broadcast signal to provide a series of symbol values for each of the multiplicity of carrier frequencies,
automatic frequency control means for controlling the frequency of said series of signal values in dependence on a common phase error signal from said series of symbol values,
first and second delay means coupled in series to receive said series of symbol values from said transform means, and means for deriving from symbol values in the first and second delay means a common phase error signal,
first and second common phase error correction (CPE) means for receiving said common phase error signal, for correcting said symbol values from said transform means, the output of the first delay means being applied to the first CPE means and the output of the second delay means being applied to said second CPE means,
channel equalisation means for compensating for communication channel impairments for receiving directly the phase error corrected signals from said first CPE means, and third and fourth delay means connected in series and connected to receive the output from said second CPE means and applying delayed versions of the same to the channel equalisation means.

In a more specific aspect, the invention provides apparatus for demodulating digital video broadcast signals comprising data modulated on a multiplicity of spaced carrier frequencies, including:

down-conversion means for converting an input broadcast signal to a frequency sufficiently low to enable analog to digital conversion of the signal;
analog to digital conversion means for converting the broadcast signal to a series of digital samples, real to complex conversion means for converting each digital sample to a complex number value, Fourier Transform means for analysing the complex number values to provide a series of symbol values for each carrier frequency, frequency control means, comprising means responsive to the output of said Fourier Transform means for producing a signal for controlling the frequency of the signal formed by said complex number values, wherein the frequency control means derives a common phase error signal from said series of symbol values,
first and second delay means coupled in series to receive said series of symbol values from said transform means, and for providing delayed versions to said automatic frequency control means,
first and second common phase error correction (CPE) means for receiving said common phase error signal, for correcting said symbol values from said transform means, the output of the first delay means being applied to the first CPE means and the output of the second delay means being applied to said second CPE means,
channel equalisation means for compensating for communication channel impairments for receiving directly the phase error corrected signals from said first CPE means, and third and fourth delay means connected in series and connected to receive the output from said second CPE means and applying delayed versions of the same to the channel equalisation means.

In accordance with the invention, the input broadcast signal which is normally a UHF signal, say 700 MHz, is down converted, preferably in two stages, firstly to about 30-40 MHz and secondly to about 4.5 MHz. Since the bandwidth of the signal is about 7.6 MHz, an IF frequency of 4.5 MHZ represents essentially a DC or base band signal which can then be sampled by means of an analog to digital converter. Subsequent to analog to digital conversion, the sampled signal is converted to complex number values, in order to represent a true DC signal centred on 0Hz. This facilitates the operation of the Fourier transform device which as mentioned above is normally an FFT performing a DFT on each carrier signal. The result of the transform is a series of data symbol values for the symbols encoded on each carrier wave.
The data is processed, principally for channel equalisation and for weighting the contribution of each channel by the derived Channel State Information.
Another signal processing employed is correction for common phase error. As will become clear below, phase error in COFDM signals is present in two components, a random component and a component which is common to all carriers, arising from local oscillator phase noise. Such common phase error may be removed by a technique as described in more detail below.
The process of demodulation requires very accurate tracking of the input signal and to this end automatic frequency control and timing control are desirable. Timing control is necessary in order to ensure that the timing window for the FFT is correctly positioned in relation to the input waveforms. Thus, the sampling by the ADC must be synchronised with the input wave forms. For an input signal centred on 4.57 MHz, an ADC operating frequency of 18.29 MHz (4.57 x 4) is preferred. The ADC is maintained in synchronisation by a loop control wherein the complex signal value at the input of the FFT is applied to a time synchronisation unit whose output is converted in a digital to analog converter (DAC) to an analog value, which is employed to control a voltage controlled oscillator providing a clock signal to the ADC.
Automatic frequency control (AFC) is necessary to maintain the demodulation process in synchronisation with down-conversion, otherwise a gradually increasing phase error occurs in the recovered signals. To this end, a signal derived subsequent to the FFT, from the demodulated signals may be fed back to the local oscillator for IF generation in order to maintain frequency synchronisation. However, such control has disadvantages of complication in that a control signal must be fed back to the IF generation means and the control signal must adjust the reference crystal within the search range of the AFC. As an alternative therefore, AFC may be provided as a digital control applied to a digital frequency shifter coupled the input of the FFT device. The process of automatic frequency control (AFC) is described in more detail below. However, it will be shown that AFC requires a coarse control and a fine control. The fine control is dependent upon measuring the phase difference (first difference) between two adjacent continual pilot signal samples, whereas the coarse control requires the determination of rate of change of phase (or second difference) i.e., the difference between two consecutive phase differences between adjacent samples.

BRIEF DESCRIPTION OF THE DRAWINGS

A preferred embodiment of the invention will now be described with reference to the accompanying drawings, in which:-

Figure E1 is a schematic block diagram of a digital terrestrial front end converter incorporating the present invention;
Figure E2 is a more detailed block diagram of demodulating apparatus according to the invention forming part of the converter of figure E1;
Figure E3 is a schematic view of a chip incorporating the apparatus of Figure E2; and
Figure E4 is a block diagram of one method, not preferred, of automatic frequency control/common phase error/ channel equalisation estimation and recovery; and
Figure E5 is a schematic block diagram of a preferred embodiment of the invention for automatic frequency control, common phase error correction and channel equalisation.

DESCRIPTION OF THE PREFERRED EMBODIMENT

The preferred embodiment of the present invention comprises a front end for digital terrestrial television transmitted according to the DVB-T specification. The front end consists of two separate components. First, an analog down-converter that converts the input signal from UHF to a low IF. Second, an integrated circuit chip that accepts the analog signal from the down-converter and performs the required DSP operations, which include synchronisation and demodulation, to form a stream of soft decisions suitable for presentation to an FEC decoder (Forward Error Correction decoder).

Full compliance to the DVB-T specification means that the chip is capable of decoding signals transmitted in the following modes:

1) A signal that contains either 1705 or 6817 active carriers, commonly referred to as 2K and 8K respectively. The chip includes the functionality and memory required to perform the FFT algorithm in both modes.
2) Non-hierarchical QPSK, 16-QAM and 64-QAM constellations.
3) Hierarchical 16-QAM and 64-QAM constellations, either uniform or non-uniform with the possible scale factors $\alpha=2$ and $\alpha=4$.
4) Guard intervals 1/4, 1/8, 1/16 and 1/32 of the OFDM symbol length.
5) Viterbi code rates 1/2, 2/3, 3/4, 5/6 and 7/8.

Referring now to figure 1, a block diagram of the front end system, a down-converter 2 receives the input UHF broadcast signal from an antenna 4 and converts the carrier signal to a first IF frequency of 30-40 MHz and then to a second IF frequency of 4.57 MHz. Since the bandwidth of the modulated data is about 7.6 MHz, this second IF signal is sufficiently low in frequency to present the signal as a base band signal to a demodulator chip 6. Demodulator chip digitises the incoming signal at a rate determined by a voltage controlled oscillator 8, and provides an Automatic Frequency Control on a line 9 to down-converter 2. The output of demodulator 6 represents demodulated data and is fed to a FEC decoder 10 (Forward Error Correction or Viterbi decoder) for recovering the data. The decoded data is fed to a transport stream demultiplexer 12 and then to an audio-visual decoder 14. The front end is controlled by a system microcontroller 16.

Referring now to figure 2, this shows the demodulator chip 6 in more detail. The chip itself is shown schematically in figure 3. The low second IF is fed to an analog digital converter which samples the IF signal at a frequency of 18.29 MHz (x 4 the second IF frequency of 4.57 MHz), in an analog to digital converter 20. The digital output samples are fed to a real to complex converter 22 which converts the digital samples to complex number values in order to provide a complex signal centred on zero frequency. This signal is fed to a Fast Fourier Transform device (FFT) 24 and to a timing synchronisation unit 26 which derives a value from the complex input signal which is fed to a digital to analog converter 28 to supply an analog control voltage to a voltage controlled oscillator 8, which provides a sampling clock signal to analog to digital converter 20.

The FFT device 24 has four modes of operation. Firstly, it is capable of performing either a 2048 point or an 8192 point transform. Second, it is capable of performing the transform in either direction. The inverse FFT functionality is provided so that the integrated circuit may be used in applications requiring OFDM modulation. In any event, the FFT performs a series of discrete Fourier transforms on each carrier frequency to provide at an output the data symbols for each carrier frequency. These output signals are corrected in phase at a common phase error generator unit 30 and then passed to a channel equaliser 32, a channel state information correction unit 34 and a deinterleaver 36. The signal thus processed is then passed at an output from the demodulator to forward error correction unit 10. The phase error correction block 30 calculates the common phase error of the signal and applies the necessary correction. The channel equaliser 32 first performs linear temporal equalisation followed by frequency equalisation using a high order interpolating filter. The equaliser outputs an equalised constellation to the channel state information unit 34. Unit 34 generates 3 or 4 bit soft decisions which are suitable for presentation to a Viterbi decoder. Deinterleaver 36 performs firstly symbol deinterleaving followed by bit deinterleaving.

In addition, the output signals from FFT 24 are passed to a frequency synchronisation unit 38 which converts it to a control signal for automatic frequency control, which acts upon a local oscillator in down-converter unit 2 for adjusting the frequency of the first or second IF.

In addition, the output of FFT 24 is fed to a frame synchronisation unit 40 whose outputs are fed forward to units 10, 12 and 14 (Fig. 1). A microcontroller interface 42 is provided, and in addition RAM memory 44 is provided to which all the units 22, 24, 30-36 have access to in order to provide their required operations.

Channel Impairments

The front end architecture of Figure 1 must provide the best possible performance under actual operating conditions. There are several key types of channel impairments that the front end must be adept at dealing with, as follows:

1) Adjacent analog television signals. In multi-frequency networks OFDM signals may be transmitted in adjacent channels to PAL signals that could be 30dB higher in power. Therefore, special care must be taken when designing the IF filtering scheme in the down-converter, in particular by providing a high pass filter for the second IF having a stop band from 0 Hz to a certain higher frequency.
2) Co-channel analog television interference. This will be particularly significant in interleaved frequency networks.

3) Delayed signal interference, either due to reflections from natural obstacles, or created by the network itself as is the case with single frequency networks. Such interference causes frequency selective fading which may completely erase, or significantly affect the reliability of, the bits of information carried by some of the OFDM carriers. This is compensated for in Channel State Information block 34.

4) Narrow-band interference coming from intermodulation products due to nonlinearities in the transmission chain may also corrupt the bits of information carried by some of the OFDM carriers but in a different way from the frequency selective fading.

5) Co-channel interference from artificial-sources such as radio microphones operating in the UHF frequency.

6) and of course thermal noise, as is present in every transmission system.

The down-converter 4 must cope with the specific requirements of COFDM whilst operating in the channel conditions described above. This means:

1) The IF must ensure the proper rejection of adjacent channel analog television signals.

2) The gain distribution must preserve linearity in order not to create intermodulation products between the OFDM carriers, thus creating a self-interference effect on the signal, and

3) The synthesiser phase-noise characteristics must be compatible with 64-QAM operation.

Memory Budget

A significant problem for demodulator integrated circuit 6 is the amount of RAM 42 that the chip requires.

TABLE 1 - Proportion of RAM used

| Architecture component | % RAM |
|---|---|
| Timing synchronisation | 6 % |
| Frequency synchronisation | 11%/20% |
| FFT | 34% |
| Common phase error correction | 11%/10% |
| Channel equalisation | 25% |
| Channel State Information | 4% |
| Deinterleaver | 11 % |

It is necessary to make the best possible use of the RAM. Some of the blocks of memory, such as the FFT and symbol deinterleaver, require fixed amounts of RAM and it is not possible to reduce them (except by reducing the word widths and so degrading the performance). Other blocks, for example, the timing synchronisation, required some algorithmic alterations for the sole purpose of reducing the amount of memory but without degrading the performance. A technique that is employed to make best use of the available memory is to "reuse" some of the memories. The data delay required to implement AFC and common-phase-error correction doubles as the first data delay in the channel equaliser. This means that only two additional data delays were required to implement full linear temporal equalisation.

Table 1 shows the final allocations of RAM that were made in the chip. As this table shows, the highest memory usage is in the FFT circuitry and the smallest is in the timing synchronisation circuitry.

Analog versus Digital AFC

One of the processes that is required in the synchronisation of the demodulator is to obtain frequency synchronisation. There is a choice as to whether to apply the required frequency shift as an analog correction in the down-converter 2, or as a digital frequency shift in the demodulator chip.

Analog frequency correction

If the frequency correction is implemented by adjusting the frequency of the reference crystal in the down-converter 2, then a control signal on line 9 is provided from the output of the integrated circuit 6 back to the down-converter. This method has the advantage that a SAW filter inside the down-converter can be made as narrow as possible. The disadvantages are twofold. First, the integrated circuit must pass a control signal back to the down-converter. Second, the architecture of the down-converter is made more complicated since the control signal must adjust the reference crystal within the search range of the AFC.

Digital Frequency Correction

If the frequency correction is implemented in the integrated circuit 6, then the architecture of the down-converter 2 is made much simpler since there is no longer any need to have a control signal from the chip 6, and the loop in the down-converter that drives the reference crystal is no longer required. The disadvantage of this method is that the bandwidth of the SAW filter must be increased by the AFC search range. This causes a significant penalty in terms of the adjacent channel protection ratio when the receiver is used in an environment where the existing analogue services are operated in adjacent channels to digital services. The architecture described will permit both analog and digital correction.

Temporal Response versus Noise Averaging in Channel Equaliser 32

The signal from the FFT is affected by all the impairments caused by the channel; for example, in the presence of a single echo, the FFT output will suffer from frequency selective fading. The purpose of the channel equaliser 32 is to rotate and scale the constellation so that the constellations on all the carriers are of a known size (but not necessarily of the same reliability). the process is performed by using the scattered pilot information contained in the COFDM signal. The scattered pilots provide a reference signal of known amplitude and phase on every third OFDM carrier (see Figure 11, sec 4.5.3, ETS 300 744, ETSI November 1996). Since this scattered pilot information is subject is subject to the same channel impairments as the data carriers, the scattered pilots are noisy.

In the present invention, temporal linear interpolation is performed between two received scattered pilots, and these interpolated values are used as the reference for frequency equalisation of the data. Since scattered pilots at the same time duration are spaced 4 OFDM symbols apart, a compensating data delay of 3 OFDM symbols must be provided to permit this option.

Common Phase Error Correction versus Down Converter Performance

The down converter performance has a different set of requirements from those demanded by down-converters suitable for analog television. For example, in a down-converter for analogue television, particular attention must be given to the group delay-characteristics. However COFDM has been specially designed to be robust to this type of distortion, and so the group delay is much less important.

Another difference between the two requirements is in the local oscillator phase noise performance. The addition of local oscillator phase noise to an OFDM signal has two principal effects:

1) To rotate the received constellation by an amount which is the same for all carriers within one OFDM symbol, but varying randomly from symbol to symbol. This is called the common phase error (CPE) and primarily results from the lower- frequency components of the phase- noise spectrum; and

2) To add Inter-Carrier Interference (ICI) of a random character similar to additive thermal noise. ICI primarily results from the higher frequency components of the phase-noise spectrum. ICI cannot be corrected and must be allowed for in the noise budget. It can be kept small in comparison with thermal noise by suitable local oscillator design.

It is possible to remove the common phase-error component caused by phase noise added in the down-converted by digital processing in the chip. This processing is performed by the common-phase-error correction block 30.

The common-phase-error correction block 30 is able to remove the common phase error because all carriers within a given symbol suffer the same common phase error. By measuring the continual pilots, whose intended phase is the same from symbol to symbol, the common phase error is determined and then subtracted from the phase of all the data cells in the same symbol. There are sufficient continual pilots (which in any case are transmitted with a power approx. 2.5 dB greater than data cells) that the effect of thermal noise on this measurement can be rendered negligible by averaging.

There are essentially three components required to implement common-phase-error correction in the chip. These are:

1) A complex symbol data delay; since the common phase error varies randomly from symbol to symbol, it must be applied to the symbol from which it was calculated. Furthermore, it is not possible to calculate the common phase error until the whole symbol has been received.

2) The digital circuitry required to calculate the common phase error based on the received data.

3) A phase-to-complex-number look-up table. This is required since the common phase error value that is calculated will be a phase value. In order to apply the correction to the signal, the signal must be multiplied by a complex number equal to the complex representation of the phase.

These three factors, which together form the "cost" of implementing the feature on the chip, must be balanced against the cost of improving the performance of the down-converter so that the phase-noise it introduces is negligible.

Common phase error correction is in practice combined with generation of the control signal in unit 38 for automatic frequency control. Both measurements are based on the phase rotation between one symbol and the next, measured on the continual pilots (CP's).

If a constant AFC error is present, there will be a constant change of rotation between successive symbols, proportional to the frequency error. Low frequency phase-noise will have a similar effect; rotating all of the carriers by the same angle, but this angle will vary from symbol to symbol in a random manner. In both cases it is desirable to attempt to correct the phase error on the current symbol by applying the opposite phase rotation to all carriers - this process is known as common-phase-error correction.

In addition to the phase rotation effect, an AFC error will also cause inter-carrier interference (ICI) which cannot be corrected for - for this reason it is also necessary to feed back an error signal to drive the frequency error to zero. This error signal can be applied to either in the analog domain as the local-oscillator control voltage, or in the digital domain to a DDFS which must be situated before the FFT. In either case an appropriate loop filter is included.

The measurement of phase rotations can only resolve AFC errors of up to roughly one half of the carrier spacing in either direction. In practice, during acquisition the AFC error is likely to be much greater than this. For this reason the AFC measurement also includes a "coarse" part, which measures the number of whole carriers by which the frequency is wrong. This is done using a pattern-matching approach looking for continual pilots.

The frequency offset is divided in two parts.

1) Coarse Frequency Offset: A multiple of the carrier spacing
2) Fine Frequency Offset: A frequency offset less than the carrier spacing.

The OFDM signal is formed with a group of four different types of carriers, which are data carriers, continual pilots, scattered pilot and TPS pilots. Their positions are well defined by DVB-T specification. The continual pilots are always transmitted at the same position from OFDM symbol to OFDM symbol, for each OFDM symbol, continual pilots transmit exactly the same known information (see Table 9, sec 4.5.4, ETS 300744, ETSI November 1996).

A fixed frequency offset rotates all carriers with the same phase from symbol to symbol. Therefore, the first phase difference between two carriers at the same index k belonging to two consecutive OFDM symbol gives the amount of frequency offset modulo $\pi$. This can be shown as follows:-

Symbol m, with N carriers, on a frequency $F_0$ lasting $T_T$ with a carrier spacing of $w_s$ may be written:

$$s(t) = \sum_{k=0}^{N-1} R_{k,m} e^{j(w_0 t + k w_s (t - m T_T))} \qquad m T_T < t < m T_T + T_s \tag{1}$$

The symbol is assumed to be integrated on Ts whereas it is sent through the Channel during $T_T = T_s + T_{Guard}$. Assuming a frequency offset of $\Delta w_0 = n w_s + \delta w_0$, the $l$ output of the FFT equals:

$$Y_{l,m} = \frac{1}{T_s} \int_{m T_T}^{m T_T + T_s} r(t) e^{-j((w_0 + \Delta w_0)t + l w_s (t - m T_T))} dt \tag{2}$$

Which gives for carrier 1 of symbol m

$$Y_{l,m} = \underbrace{e^{-j\delta w_0 T_s/2} \cdot e^{-j(nw_s + \delta w_0)mT_T}}_{\text{Constant Phase Rotation}} \underbrace{\sum_{k=0}^{N-1} R_{k,m}(-1)^{(k-l-n)}\sin c(k-l-n-\delta w_0/w_s)}_{\text{Inter Carrier Interference Term}}$$

Phase difference for each carrier between consecutive symbols: $\phi = e^{-j(nw_s + \delta w_0)T_T}$

Thus, all carriers are rotated with the same phase from symbol to symbol. It is possible to derive the first phase difference by providing a one symbol delay, and measuring the phase difference in a continual pilot between adjacent symbol time intervals.

As continual pilots always carry the same information, then this difference is constant with time. Therefore, the second difference (the difference of the difference) shall be zero for all continual pilots, and random values for all carriers (as data on these carriers are changing from symbol to symbol).

Applying the second phase difference, (the difference of the difference between two consecutive symbols at carrier index k) should lead to a pull phase value whatever the frequency offset is. For all the carriers that are not continual pilots, this value shall be a random value. It is possible to determine the second phase difference by providing two symbols delay, so as to measure two phase differences in a continual pilot between adjacent symbol intervals. Thus, the difference between the two phase differences is determined to provide the second phase difference.

Each OFDM symbol carries 2k or 8k carriers. Continual pilots (45 or 177) always lie at the same index and are spaced roughly 40 carrier intervals apart (from 0 to 2047 or 0 to 8191). Therefore, knowing the theoretical positions of the continual pilots, it is possible to search around the theoretical positions of the continual pilots to locate these zeros in second difference in phase.

To achieve this, a bank of recursive filters is employed that accumulates the phase difference for each carrier around the theoretical position for a continual pilot signal.

Referring now to Figure 4, this shows one method of implementing Automatic Frequency Control (AFC), Common Phase Error (CPE) correction and Channel Equalisation (CE) on an incoming signal so that the three algorithms are sequentially executed, independently of the other. Hence, after acquiring AFC lock, CPE is corrected, and then the Channel is Equalised. CPE corrections must be carried out prior to CE, as rapid variations introduced by the common phase error cannot be handled in the channel equalisation.

A signal output from FFT device 24, comprising data symbols for each carrier frequency, in complex number format, is converted to a phase angle value in C2P converter unit 60 and then fed to AFC unit 38. The phase signals are applied to first and second delay elements 62, 64, each comprising 8K of real memory - required for the various carrier frequencies to store two adjacent OFDM symbols. Continual pilot signals from the inputs and outputs of delay elements 62, 64 are provided to algorithm unit 66 in order to derive phase error signals (first difference) in subtractors 67, for determination of fine frequency error. In addition, the difference (second difference) between the phase error signals is determined in a subtractor 69 for determination of coarse frequency error. The phase error (first difference) is applied on line 68 to common phase error correction unit 30. Because the phase error on line 68 can only be provided after one symbol delay, it is necessary to provide a corresponding delay at the input of the CPE. CPE correction is carried out on the complex symbol from FFT 24, and a delay element 70 comprising 8K of Complex memory (16K of real memory) is provided at the input of CPE unit 30. Thus, delay element 70 has 8K of real memory for storing the real part of the complex symbols, and 8K of real memory for storing the imaginary part of the complex symbols. The output from CPE unit 30 comprising symbols in complex format being corrected for common phase error, is applied to channel equalisation unit 32. Channel estimation is carried out in unit 72, and the algorithm, employing linear temporal interpolation on scattered pilots requires three symbol delays as explained above. Three 8K complex memories as delay units 74, 76, 78 are therefore provided. A divider 79 divides the symbol values by the estimated equalisation factor.

In this implementation, ten 8K real memories are required, i.e. 800 K bits. This is an excessive amount of memory, bearing in mind that the chip may only contain 1 Mbit of memory.

In a preferred embodiment of the invention therefore, as will now be described with reference to Figure 5, the memory requirement is reduced. The embodiment of Figure 5 is formed in an ASIC, and it is therefore possible to mix different blocks of the ASIC so that they share the same memory for different processes. In addition, in an ASIC it is possible to increase the clock speed, so that ASIC block speeds can be increased to perform more operations on the incoming data. In Figure 5, similar elements to those of Figure 4 are denoted by the same reference numerals. Data symbols in complex number format from FFT 24 are fed to first and second delay elements 80, 82, each comprising 8K of complex memory (16K bits), and thence to a common phase error correction unit 301. Tappings 84 provide one element delayed symbols to a further CPE unit 302 and provide the continual pilot values to a complex to phase angle converter C2P unit 60. Unit 60 also receives continual pilot values directly from the output of FFT 24, and from tapping 86 of delay elements 82. The output of C2P unit 60 is applied to AFC algorithm unit 66 for determination of first and second phase differences. The output of unit 60 on line 68, representing the first phase difference or common phase error, is applied directly to CPE unit 302 and, via a delay element 90, to CPE unit 301. The output of CPE unit 301 is applied to third and fourth delay elements 92, 94, each comprised 8K of complex memory, tapping points 100 being connected to Channel Estimation unit 72. The output of CPE unit 302 is applied directly to CE unit 72.

In operation, the AFC algorithm is first executed, requiring inputs from FFT 24, and tapping points 84, 86. Three sets of data are thus applied to C2P unit 60, as compared with a single set of data in Figure 4. This issue is solved by increasing the clocking speed of C2P unit 60 by a factor of 4. The common phase error provided on line 68 is applied to CPE unit 302, which applies a corrected version of the data symbols, delayed by delay elements 80, to the input of CE unit 72. In addition, CPE unit 301 receives the common phase error signal, delayed by one symbol interval in unit 90, and applies a phase error correction to symbols from delay elements 80, 82, which are thus delayed by two symbol intervals. The corrected symbols output from CPE unit 301 are applied directly to CE unit 72 via tappings 96, and from delay elements 92, 94 via tappings 98,100. It may thus be seen CPE units 301, 302 and delay elements 80,82,92,94, provide an equivalent function to CPE unit 30 and memory elements 70,74,76 and 78 of Figure 4. Using a clock having a faster rate of x 4 accommodates the problem that the arrangement of Figure 5 employs a larger hardware over head.

The overall impact is that instead of having 10 Real memories, only 8 are required. Therefore, the gain is of 20% , or in terms of number of bits, it is a 160Kb saving. Therefore, by applying such memory sharing, the overall memory size requirement for the chip is currently significantly reduced.

It is possible to reduce again significantly the memory size by looking in more depth into the OFDM ETSI specification.

Focusing on the 8K mode, as this is the most stringent, in the 8K mode, the FFT generate 8192 complex carriers for each OFDM symbols. However, only 6817 out of them are used by the transmitter, the remaining ones being set to 0, to ensure correct interference immunity. Therefore, an 8Kb memory is not needed, only 6817. On top of that, and with reference to the ETSI specification, among the 6817 carriers, only 6048 carriers transport Data. The remaining carriers are there to help the receiver.

Therefore, the result of the equaliser is only interesting for 6048 carriers out of 6817. Therefore, one should only store the useful data for 6048 carriers in the channel equaliser delay line.

Finally, here is what is needed:

· 4 Memories of 6817x10 bits = 272680 bits of storage
· Memories of 6048x10 bits = 241920 bits of storage

We then need 514.6kb of memories, instead of the original 800kb. Which gives a saving of 37%.

## DEMODULATING DIGITAL VIDEO BROADCAST SIGNALS

This invention relates to demodulating digital video broadcast (DVB) signals.

There are currently two major types of DVB, namely, terrestrial broadcasting and satellite/cable broadcasting. The invention is particularly, though not exclusively concerned with terrestrial broadcasting, which has special problems, particularly in communication channel impairment, arising from adjacent television channels, multipath and co-channel interference, for example. A type of transmission which has been developed to meet these problems is known as Coded Orthogonal Frequency Division Multiplexing (COFDM) - see for example "Explaining Some of the Magic of COFDM" Stott, J.H. - "Proceedings of 20th International Television Symposium, Montreux, June 1997. In COFDM, transmitted data is transmitted over a large number of carrier frequencies (1705 or 6817 for DVB), spaced (by the inverse of the active symbol period) so as to be orthogonal with each other; the data is convolutionally coded, to enable soft-decision (Viterbi) decoding. Metrics for COFDM include Channel State Information (CSI) which represents the degree of confidence in each channel for reliably transmitting data.

Modulation and Demodulation of the carriers may be carried out by a Fast Fourier Transform (FFT) algorithm performing Discrete Fourier Transform operations.

Subsequent to demodulation, signal processing corrections are carried out such as channel equalisation, channel state information correction, phase error correction, and automatic frequency control. The demodulated and corrected signal may then be decoded in an FEC (forward error correction decoder) for recovery of data.

Automatic frequency control is important, since frequency offsets may appear after down-conversion to an intermediate frequency, because of variations in local oscillator frequency. Such frequency offsets are lethal for frequency recovery, and must therefore be reduced to a minimum.

In regard to phase error correction, a principal problem is that of local oscillator phase-noise. The addition of local oscillator phase noise to an COFDM signal has two notable effects;

1) To rotate the received constellation by an amount which is the same for all the carriers within any one OFDM symbol, but varying randomly from symbol to symbol. This is called the Common Phase Error (CPE), and primarily results from the lower-frequency components of the phase-noise spectrum; and

2) To add Inter-Carrier Interference (ICI) of a random character similar to additive thermal noise. ICI primarily results from the higher-frequency components of the phase-noise spectrum. ICI cannot be corrected and must be allowed for in the noise budget. It can be kept small in comparison with thermal noise by suitable local oscillator design.

GB-A-2307155 describes (see Sec 2.1, p.7 and Fig. 11) an arrangement for automatic frequency control wherein it is recognised that the phase of the retrieved signals in OFDM is proportional to frequency error, and therefore a signal representing phase can be used to control the frequency of a local oscillator.

SUMMARY OF THE INVENTION

It is an object of the present invention to provide a method of automatic frequency control in a receiver for COFDM signals.

The invention is based on the recognition that, although the phase variation between adjacent symbols in COFDM is random, for continual pilot signals, as defined in the ETSI Specification, the phase variation of the signals is constant between adjacent symbol intervals. The phase difference between adjacent symbol intervals in the continual pilot signals is primarily of use for common phase error correction, but it may also be employed for automatic frequency control since frequency variations are proportional to the change of phase.

Further, in accordance with the invention, it is recognised that frequency control may be split into two separate controls, namely coarse control for frequency offsets of integral numbers of carrier spacing intervals, and fine frequency control for frequency offsets of fractions of a carrier spacing interval.

For frequency offsets less than one carrier interval, the phase change may be used as representing the fine frequency offset. For coarse frequency control, a signal is used representing rate of change of phase. Since the phase variation between adjacent symbol intervals in continual pilots is constant, a second difference of phase error representing rate of change of phase error should be zero. This therefore provides a means of locating the continual pilot where the coarse frequency offset is a plurality of carrier spacings from the nominal position.

The invention provides an apparatus for demodulating digital video broadcast signals comprising data modulated on a multiplicity of spaced carrier frequencies, including:

analog to digital conversion means for providing a series of digital samples of the broadcast signal, transform means for analysing the samples to provide a series of data symbol values for each carrier frequency, signal processing means for processing the series of data signal values including phase-error-correcting means, and automatic frequency control means for controlling the frequency of the signals input to the transform means,

wherein the automatic frequency control means includes coarse frequency control means for controlling the frequency in terms of increments of the carrier spacing frequency, and fine frequency control means for controlling the frequency for values less than a single carrier spacing frequency interval,

wherein the coarse frequency means includes a filter means for assessing a group of a predetermined number (N) of carrier signals on either side of the nominal position of a plurality of predetermined continual pilot signals to determine which signal best represents the continual pilot signal, whereby to determine the coarse frequency error.

As preferred, the rate of change of phase (second difference) of said predetermined number of carrier signals between consecutive symbol intervals is determined, and applied as inputs to the filter means.

Various configurations of filter may be envisaged. It would be possible to provide a separate filter could for each carrier signal or group of carrier signals assessed, which would however be very expensive in terms of hardware. However it is realised in accordance with the invention that the coarse frequency error will normally be the same for all carriers, and hence a filter can be arranged to operate on samples of carriers which are the same spacing from the theoretical position of the pilot in consecutive groups of carriers. Thus usually filtering will be carried out over a number of symbol intervals, and in each symbol interval a plurality of pilot signals are assessed. In accordance with the invention, it is preferred in order to reduce hardware to provide a single filter means with access to a memory store in which the filtered samples for each carrier position are stored and accessed and updated as required; hence a memory store with 2N + 1 locations is required.

Preferably, the filter means comprises a recursive filter for providing an output representative of the accumulated value of a plurality of previous input values for the respective carrier positions, and the minimum value of the accumulated values is selected as representing the continual pilot, and the coarse frequency offset is determined accordingly.

BRIEF DESCRIPTION OF THE DRAWINGS

A preferred embodiment of the invention will now be described with reference to the accompanying drawings, in which:-

Figure F1 is a schematic block diagram of digital terrestrial front end converter incorporating the present invention;
Figure F2 is more detailed block diagram of demodulating apparatus according to the invention forming part of the converter of figure F1;
Figure F3 is a schematic view of a chip incorporating the apparatus of Figure F2;
Figures F4A, F4B and F4C are diagrams illustrating the recovery of coarse frequency error;
Figure F5 is a schematic diagram illustrating apparatus for recovering coarse frequency error;
Figures F6 and F7 are schematic block diagrams of storage mechanisms for storing filter results for coarse error recovery;
Figure F8 is a more detailed block diagram of a common phase error/AFC circuit together with a channel equaliser circuit;
Figure F9 is a detailed block diagram of coarse AFC control, and Figure F9A is an associated waveform diagram;
Figure F10 is a block diagram of a circuit for providing CPE and AFC control from the circuits of Figure F9; and
Figure F11 is a table showing positions of continual pilot signals in the DVB-T 2K and 8K modes.

DESCRIPTION OF THE PREFERRED EMBODIMENTS

The preferred embodiment of the present invention comprises a front end for digital terrestrial television transmitted according to the DVB-T specification. The front end consists of two separate components. First, an analog down-converter that converts the input signal from UHF to a low IF. Second, an integrated circuit that accepts the analog signal from the down-converter and performs the required DSP operations, which include synchronisation and demodulation, to form a stream of soft decisions suitable for presentation to an FEC decoder (Forward Error Correction decoder).
Full compliance to the DVB-T specification means that the chip is capable of decoding signals transmitted in the following modes:

1) A signal that contains either 1705 or 6817 active carriers, commonly referred to as 2K and 8K respectively. The chip includes the functionality and memory required to perform the FFT algorithm in both modes.
2) Non-hierarchical QPSK, 16-QAM and 64-QAM constellations.
3) Hierarchical 16-QAM and 64-QAM constellations, either uniform or non-uniform with the possible scale factors $\alpha=2$ and $\alpha=4$.
4) Guard intervals 1/4, 1/8, 1/16 and 1/32 of the OFDM symbol length.
5) Viterbi code rates 1/2, 2/3, 3/4, 5/6 and 7/8.

Referring now to Figure 1, a block diagram of the front end system, a down-converter 2 receives the input UHF broadcast signal from an antenna 4 and converts the carrier signal to a first IF frequency of 30-40 MHz and then to a second IF frequency of 4.57 MHz. Since the bandwidth of the modulated data is about 7.6 MHz, this second IF signal is sufficiently low in frequency to present the signal as a base band signal to a demodulator chip 6. Demodulator chip digitises the incoming signal at a rate determined by a voltage controlled oscillator 8, and provides an Automatic Frequency Control on a line 9 to down-converter 2. The output of demodulator 6 represents demodulated data and is fed to a FEC decoder 10 (Forward Error Correction or Viterbi decoder) for recovering the data. The decoded data is fed to a transport stream demultiplexer 12 and then to an audio-visual decoder 14. The front end is controlled by a system microcontroller 16.
Referring now to Figure 2, this shows the demodulator chip 6 in more detail. The chip itself is shown schematically in figure 3. The low second IF is fed to an analog digital converter which samples the IF signal at a frequency of 18.29 MHz (x 4 the second IF frequency of 4.57 MHz), in an analog to digital converter 20. The digital output samples are fed to a real to complex converter 22 which converts the digital samples to complex number values in order to provide a complex signal centred on zero frequency. This signal is fed to a Fast Fourier Transform device (FFT) 24 and to a timing synchronisation unit 26 which derives a value from the complex input signal which is fed to a digital to analog converter 28 to supply an analog control voltage to a voltage controlled oscillator 8, which provides a sampling clock signal to analog to digital converter 20.
The FFT device 24 has four modes of operation. Firstly, it is capable of performing either a 2048 point or an 8192 point transform. Second, it is capable of performing the transform in either direction. The inverse FFT functionality is provided so that the integrated circuit may be used in applications requiring OFDM modulation.
In any event, the FFT performs a series of discrete Fourier transforms on each carrier frequency to provide at an output the data symbols for each carrier frequency. These output signals are corrected in phase at a common phase error generator unit 30 and then passed to a channel equaliser 32, a channel state information correction unit 34 and a deinterleaver 36. The signal thus processed is then passed at an output from the demodulator to forward error correction unit 8. The phase error correction block 30 calculates the common phase error of the signal and applies the necessary correction. The channel equaliser 32 first performs linear temporal equalisation followed by frequency equalisation using a high order interpolating filter. The equaliser outputs an equalised constellation to the channel state information unit 34. Unit 34 generates 3 or 4 bit soft decisions which are suitable for presentation to a Viterbi decoder. Deinterleaver 36 performs firstly symbol deinterleaving followed by bit deinterleaving.

In addition, the output signals from FFT 24 are passed to a frequency synchronisation unit 38 and converts it to a control signal for automatic frequency control, which acts upon a local oscillator in down-converter unit 2 for adjusting the frequency of the first or second IF. In a modification, a control signal from unit 38 is fed to a direct digital frequency shifter (DDFS) (indicated in dotted lines). In a further modification, units 30 and 38 are combined.

In addition, the output of FFT 24 is fed to a frame synchronisation unit 40. A microcontroller interface 42 is provided, and in addition RAM memory 44 is provided to which all the units 22, 24, 30-36 have access to in order to provide their required operations.

Analog versus Digital AFC

One of the processes that is required in the synchronisation of the demodulator is to obtain frequency synchronisation. There is a choice as to whether to apply the required frequency shift as an analog correction in the down-converter 2, or as a digital frequency shift in the demodulator chip.

Analog frequency correction

If the frequency correction is implemented by adjusting the frequency of the reference crystal in the down-converter 2, then a control signal on line 9 is provided from the output of the integrated circuit 6 back to the down-converter. This method has the advantage that a SAW filter inside the down-converter can be made as narrow as possible. The disadvantages are twofold. First, the integrated circuit must pass a control signal back to the down-converter. Second, the architecture of the down-converter is made more complicated since the control signal must adjust the reference crystal within the search range of the AFC.

Digital Frequency Correction

If the frequency correction is implemented in the integrated circuit 6 in DDFS 39, then the architecture of the down-converter 2 is made much simpler since there is no longer any need to have a control signal from the chip 6, and the loop in the down-converter that drives the reference crystal is no longer required. The disadvantage of this method is that the bandwidth of the SAW filter must be increased by the AFC search range. This causes a significant penalty in terms of the adjacent channel protection ratio when the receiver is used in an environment where the existing analogue services are operated in adjacent channels to digital services. The architecture described will permit both analog and digital correction.

As regards common phase error correction, this in practice combined with generation of the control signal in unit 38 for automatic frequency control. Both measurements are based on the phase rotation between one symbol and the next, measured on the continual pilots (CP's).

If a constant AFC error is present, there will be a constant change of rotation between successive symbols, proportional to the frequency error. Low frequency phase-noise will have a similar effect; rotating all of the carriers by the same angle, but this angle will vary from symbol to symbol in a random manner. In both cases it is desirable to attempt to correct the phase error on the current symbol by applying the opposite phase rotation to all carriers - this process is known as common-phase-error correction.

In addition to the phase rotation effect, an AFC error will also cause inter-carrier interference (ICI) which cannot be corrected for - for this reason it is also necessary to feed back an error signal to drive the frequency error to zero. This error signal can be applied to either in the analog domain as the local-oscillator control voltage, or in the digital domain to a DDFS which must be situated before the FFT. In either case an appropriate loop filter is included.

The measurement of phase rotations can only resolve AFC errors of up to roughly one half of the carrier spacing in either direction. In practice, during acquisition the AFC error is likely to be much greater than this. For this reason the AFC measurement also includes a "coarse" part, which measures the number of whole carriers by which the frequency is wrong. This is done using a pattern-matching approach looking for the continual pilots.

Referring to figure 4, a frequency offset can therefore be viewed as a shift of all the carriers either to the left of to the right. The frequency offset is divided in two parts, a Coarse Frequency Offset: a multiple of the carrier spacing; and a Fine Frequency Offset: an offset less than the carrier spacing.

The OFDM signal is formed with a group of four different types of carriers, which are data carriers, continual pilots, scattered pilot and TPS pilots. Their positions are well defined by DVB-T specification. The continual pilots are always transmitted at the same defined position from OFDM symbol to OFDM symbol, as shown in Figure 11, which is taken from the ETSI standard for DVB, no. ETS 300 744; for each OFDM symbol; continual pilots transmit exactly the same known reference sequence at a boosted power level relative to data carriers..

A fixed frequency offset rotates all carriers with the same phase from symbol to symbol. Therefore, the first phase difference between two carriers at the same index k belonging to two consecutive OFDM symbol gives the amount of frequency offset modulo $\pi$. This can be shown as follows:-

Symbol m, with N carriers, on a frequency $F_0$ lasting $T_T$ with a carrier spacing of $w_s$ may be written:

$$s(t) = \sum_{k=0}^{N-1} R_{k,m} e^{j(w_0 t + k w_s(t - m T_T))} \qquad m T_T < t < m T_T + T_s$$

$$(1)$$

The symbol is assumed to be integrated on Ts whereas it is sent through the Channel during $T_T = T_s + T_{Guard}$. Assuming a frequency offset of $\Delta w_0 = n w_s + \delta w_0$, the 1 output of the FFT equals:

$$Y_{l,m} = \frac{1}{T_s} \int_{m T_T}^{m T_T + T_s} r(t) e^{-j((w_0 + \Delta w_0)t + l w_s(t - m T_T))} dt$$

$$(2)$$

Which gives for carrier 1 of symbol m

$$Y_{l,m} = \underbrace{e^{-j\delta w_0 T_s/2} \cdot e^{-j(n w_s + \delta w_0) m T_T}}_{\textbf{Constant Phase Rotation}} \underbrace{\sum_{k=0}^{N-1} R_{k,m} (-1)^{(k-l-n)} \operatorname{sinc}(k - l - n - \delta w_0/w_s)}_{\textbf{Inter Carrier Interference Term}}$$

Phase difference for each carrier between consecutive symbols: $\phi = e^{-j(n w_s + \delta w_0)T_T}$

Conclusions: All carriers are rotated with the same phase from symbol to symbol

As continual pilots always carry the same information, then this difference is constant with time. Therefore, the second difference (the difference of the difference) should be zero for all continual pilots, and random values for all data carriers (as data on these carriers are changing from symbol to symbol).

Applying the second phase difference, (the difference of the difference between two consecutive symbols at carrier index k) should lead to a null phase value whatever the frequency offset is. For all the carriers that are not continual pilots, this value shall be a random value.

Each OFDM symbol carries 2k or 8k carriers. Continual pilots (45 or 177) always lie at the same index and are spaced apart as indicated in Figure 11 a variable distance, e.g. in the 8K mode, there is the sequence of carriers 0, 48, 54, 87, 141, 156. Knowing the theoretical positions of the continual pilots, it is possible to search around the theoretical positions of the continual pilots to locate these zeros in second difference in phase. Further it is assumed that the frequency offsets are the same for all continual pilots in the symbol interval.

A bank of recursive filters is employed, each filter accumulating the second phase difference for all carriers in the respective carrier position relative to the theoretical position of the continual pilot signal, as indicated in Figure 5. If a frequency offset of N carriers spacing (usually 47) is to be recovered, accumulator filters are placed around the continual pilot position, N carriers before and N after. These accumulator filters contain the value of the second phase difference. Thus for each continual pilot CP1....CPp, a single bank of 2N+1 filters is employed, each filter (k) accumulating the second phase difference for the carriers occupying the kth position within the search range N either side of the nominal carrier position. Thus, in order to filter the result for better performance, the values of each accumulator filter of index k (between -N and N) shall be added to give an average of the value for that position. Thus, a bank of accumulators contains the average value of the second phase difference, for each carrier of index k (k between -N and N) that lies at a distance of + or -N of every continual pilot. The index of the accumulator containing the smallest value represents the coarse frequency offset.

In order to reduce the number of filters required to a single filter, the accumulated values of the second phase difference for each carrier position may be stored in a suitable storage means and accessed for each new data symbol interval.

One possible implementation of the memory is shown in Figure 6, wherein a row of memory locations is implemented by a chain of flip-flop stages 60. Each stage 60 comprises a plurality of m flip-flops 62 to store a word b0... bm representing the value of a second phase difference. The value of a second phase difference computed in a filter F is provided on line 64, and a pulse is provided on enable line 66 for each carrier under consideration. Line 66 includes a chain of delay elements 68. Thus, in operation, when a band of 2N+1 carriers are analysed for second phase difference, a pulse is applied on line 66 when the first carrier is analysed. Thus, the value of the second phase difference provided on line 94 is stored in the first flip-flop stage in the chain $60_{-N}$. By the time the value for the second phase difference for the second carrier arrives on line 64, the enable pulse has passed through the first delay element in the chain 68 to enable second flip-flop $60_{-N+1}$. Thus, at the end of a sequence, each flip-flop stage will hold a second phase difference for a respective carrier. The sequence is repeated for each carrier being assessed.

However, it is then necessary to determine which flip-flop stage contains the minimum value representing the continual pilot. The derivation of the minimum is not simple, and is expensive in terms of numbers of logic gates.

An alternative and preferred method of storage is to implement the memory store 70, as shown in Figure 7 as RAM, with a row 72 being comprised of 2N +1 memory locations 74 for storing the accumulated second phase difference of each of 2N+1 carriers , and being accessed by a recursive filter F.

However, RAM can only access 1 given address line per clock cycle. Because the continual pilot spacing is not constant, and if N is large (say 47), it is possible to have two or more than two continual pilots that lie in a range of 2N+1 (Figure 11). If each continual pilot position were selected, then (e.g. k=48, 54, Figure 11), then a carrier, e.g. at position 30 would be within the search range for each CP position. requiring two simultaneous updates of the second phase difference. The arrangement of Figure 6 can accommodate such update at two different locations at the same time, but a memory cannot.

Therefore, in accordance with the invention, a subset of the continual pilots is used. This subset shall have the property that no two consecutive pilots are spaced by less than 2N+1 pilots. Thus for example for a search range of $\pm$ 47, the range 2N + 1 = 95, and for k=255, the search will be carried out between 208 and 302. Thus in the 2K mode, the CPs selected are:

0, 141, 255, 432, 531, 636, 759, 873, 969, 1101, 1206, 1323, 1491, 1683. In addition to these, in the 8K mode, we have:

1791, 1896, 2037, 2136, 2235, 2340, 2463, 2577, 2673, 2805, 2910, 3027, 3195, 3387, 3495, 3600, 3741, 3840, 3939, 4044, 4167, 4281, 4377, 4509, 4614, 4731, 4899, 5091, 5199, 5304, 5445, 5544, 5643, 5748, 5871, 5985, 6081, 6213, 6318, 6435, 6603, 6795. Thus it will be seen the groups selected are non-overlapping and essentially contiguous.

It will be understood that in many of groups of carriers searched, there will be more than one CP present. However the process of filtering over many groups will filter out any false selection made in one group.

As normally only one continual pilot is present in the 2N+1 range, then the derivation of the minimum can be easily done "on the fly", by a continuous updating process.

The overall process is the following:

When a continual pilot position is detected, the system enters the SWEEP mode, if it was not already SWEEPING. Then, for 2N+1 carriers, the system is going to accumulate the new value in the register of index k (k grows from -N to N). If the new value is smaller than the local minimum, then the minimum is updated to the register content, and the index of the minimum is set to k.

After 2N + 1 carriers, the mechanism stalls until the next continual pilot arrives. When all the continual pilots have been received, the index of the minimum contains the reliable index of the minimum, which in turn gives the coarse frequency offset.

Referring now back to the specific embodiment and to Figure 8, this shows certain elements of Figure 2 in more detail, in particular the common phase error circuit 30 which is combined with AFC circuit 38, and comprises a complex to phase format converter 50 for converting the symbol values output from FFT unit 50 to a phase format. These converted symbol values are fed into delay elements 52, 54, and subtractor units 55, 56 derive the phase difference between the current signal and that stored in element 52, and the phase difference between the symbols stored in elements 52, 54. These phase differences are used to control phase error correction circuits 180, 182. In addition a subtractor 58 is used to determine the difference between the two signals provided by subtractors 55, 56. The output second difference signal is used for coarse frequency control, as indicated below.

The incoming data are denoted by $c(l,n)$ where $l$ is the symbol number and n is the slot number within the symbol. Note that this is not the same as the carrier number k, because this block must start processing before the nominal position of the first carrier to allow for a coarse frequency error.

The incoming complex values are converted to phase:

$$\theta(l,n) = \frac{1}{2\pi}\arg[c(l,n)]$$

where the argument function is defined such that $-\pi \leq \arg(z) < \pi$.

$c(l,n)$ is also delayed by one and two symbols and converted to phase to give $\theta(l-1,n)$ and $\theta(l-2,n)$ in delay elements 52, 54.

The first difference of phase is calculated for the current and previous symbols in subtractor units 55, 56.

$$\phi(l,n) = [\theta(l,n)-\theta(l-1,n)]\mathrm{mod}1.0$$

$$\phi(l-1,n) = [\theta(l-1,n)-\theta(l-2,n)]\mathrm{mod}1.0$$

The second difference is also calculated in further subtractor unit 58.

$$\psi(l,n) = [\phi(l,n) -\phi(l-1,n)]\mathrm{mod}1.0$$

The differences are calculated modulo 1.0, i.e. they are all between -0.5 and +0.5.

Referring to Figure 9, a recursive filter 80 is shown. The magnitude of the second difference $\psi$(obtained from subtractor unit 58) for each carrier is obtained in unit 82 and applied to filter 80 comprising subtractor 84, scaler 86, summer 88 and memory store 90, and a feedback loop 92 to summer 88 and subtractor 84. A unit 94 determines the smallest value in store 90 and provide as an output the address of the location holding the smallest value, i.e. the carrier spacing offset from the nominal CP position. Store 90 and unit 94 are controlled by an offset counter 96. thus it may be seen that the determination of the minimum is done "on the fly", since as a new carrier is processed, the determined second difference is compared in unit 94, with the previous minimum, and the smaller value is selected.

Store 90 corresponds to the row 72 of the RAM 70 of figure 7.

Thus the coarse AFC uses a bank of recursive filters having an output $\gamma_\Delta(l,n)$ in which each value of $\Delta$ corresponds to a different trial frequency offset. The search range is given by $-47 \leq \Delta \leq 47$. Each filter is updated only when the current slot would contain a continual pilot for its particular value of $\Delta$ (see above). the input to all of the filters is the rectified value of the second difference of phase. This will have a small average value only for the correct offset, because the first difference will be similar each time. The update rule for the output of the filter is:

$$\gamma_\Delta = \begin{cases} (1-R)\gamma_\Delta(l,n-1) + R|\psi(l,n)| & (n-N_0-\Delta) \in C_R \\ \gamma_\Delta(l,n-1) & otherwise \end{cases}$$

where R is the scaling factor applied by scaler 86. Where $C_R$ is a subset of C chosen such that at most one store needs to be updated for each slot as explained above. The store which needs to be updated, if any, is the one for which $\Delta = n-N_0-N_C$, where $N_C \in C_R$.

After all of the filter stores have been updated for a given CP, the coarse AFC output is set to the value of $\Delta$ corresponding to the store containing the smallest value:

$$\Delta_C = \underset{\Delta}{\arg\min} \gamma_\Delta$$

The algorithm can be expressed as follows:

$$\text{if } ((n - N_0 + 47) \in C_R \ \&\& \ \text{sweep} == \text{false})$$
$$\{$$
$$\qquad \Delta = -47;$$
$$\qquad \text{sweep=true;}$$
$$\qquad \gamma_{min} = 0.5;$$
$$\qquad \Delta_{min} = 0;$$
$$\}$$
$$\text{if (sweep)}$$
$$\{$$
$$\qquad \gamma_\Delta = (1 - R)\gamma_\Delta + R|\psi|;$$

$$\qquad \text{if } (\gamma_\Delta < \gamma_{min})$$
$$\qquad \{$$
$$\qquad\qquad \gamma_{min} = \gamma_\Delta;$$
$$\qquad\qquad \Delta_{min} = \Delta;$$
$$\qquad \}$$

$$\qquad \Delta = \Delta + 1;$$
$$\qquad \text{if } (\Delta > 47)$$
$$\qquad \{$$
$$\qquad\qquad \text{sweep=false;}$$
$$\qquad\qquad \Delta_C = \Delta_{min};$$
$$\qquad \}$$
$$\}$$

where the flag *sweep* starts with the value *false*. The important value to be defined from this process is the offset value $\Delta_C$, which represents the coarse frequency offset in terms of number of carrier spacings.

Two methods are used for combining coarse and fine measurement.

METHOD 1:

This method simply adds the two measures together, since the coarse measure is an integer giving the number of whole carriers offset, while the fine measure gives fractions of a carrier.

$$E = \Delta_C + \phi_W$$

METHOD 2:

In this method the fine part is only considered if the coarse value is zero. The coarse value is also clipped to the range -1 to +1:

$$E = \begin{cases} -1 & \Delta_c < 0 \\ \phi_w & \Delta_c \cong 0 \\ 1 & \Delta_c > 0 \end{cases}$$

The frequency error value $E$ is fed into a loop filter, which consists simply of an integrator:

$$v(l) = v(l-1) + E|_{n = N_{max}}$$

The integrator is clocked once per symbol, at the end of the symbol. This value is fed to a DAC which can be used to generate the AFC control voltage if analog AFC is being used. The value is also fed to the DDFS if digital AFC is being used.

Referring now to Figure 10, this shows a circuit for combining the outputs of the fine and coarse error circuits . The input O5 is applied to an accumulator 100 which provides a common-phase-error signal. The signal O5 is also applied to a combining circuit 102 where it is combined with the output O6 from Figure 9 in order to provide a summed signal which is applied to an accumulator 104. The output of accumulator 104 is applied to truncation circuits 106, 108. The output from truncation circuit 108 may be used for digital automatic frequency control where the signal is applied to a DDFS circuit at the input of FFT unit 24; alternatively the output from truncation circuit 106 is applied to a $\Sigma/\triangle$ digital to analog converter circuit 110 in order to provide a signal for analog automatic frequency control where the frequency of a local oscillator in the down-converter stage is controlled.

The present invention presents an optimised way to recover the Coarse frequency Offset. The features of this invention are:

    1) No continual pilot overlapping
    2) Use a subset of the continual pilots
    3) Single RAM storage
    4) On the fly IIR filtering
    5) On the fly minimum search

DEMODULATING DIGITAL VIDEO BROADCAST SIGNALS

This invention relates to demodulating digital video broadcast (DVB) signals.

There are currently two major types of DVB, namely, terrestrial broadcasting and satellite/cable broadcasting. The invention is particularly, though not exclusively concerned with terrestrial broadcasting, which has special problems, particularly in communication channel impairment, arising from adjacent television channels, multipath and co-channel interference, for example. A type of transmission which has been developed to meet these problems is known as Coded Orthogonal Frequency Division Multiplexing (COFDM) - see for example "Explaining Some of the Magic of COFDM" Stott, J.H. - "Proceedings of 20th International Television Symposium, Montreux, June 1997. In COFDM, transmitted data is transmitted over a large number of carrier frequencies (1705 or 6817 for DVB), spaced (by the inverse of the active symbol period) so as to be orthogonal with each other; the data is convolutionally coded, to enable soft-decision (Viterbi) decoding. Metrics for COFDM are more complex than those single carrier modulation in that they include Channel State Information (CSI) which represents the degree of confidence in each channel for reliably transmitting data.

Modulation and Demodulation of the carriers may be carried out by a Fast Fourier Transform (FFT) algorithm performing Discrete Fourier Transform operations.

Subsequent to demodulation, signal processing corrections are carried out such as channel equalisation, channel state information correction, and phase error correction. The demodulated and corrected signal may then be decoded in an FEC (forward error correction decoder) for recovery of data.

In regard to phase error correction, a principal problem is that of local oscillator phase-noise. The addition of local oscillator phase noise to an COFDM signal has two notable effects;

1) To rotate the received constellation by an amount which is the same for all the carriers within any one OFDM symbol, but varying randomly from symbol to symbol. This is called the Common Phase Error (CPE), and primarily results from the lower-frequency components of the phase-noise spectrum; and

2) To add Inter-Carrier Interference (ICI) of a random character similar to additive thermal noise. ICI primarily results from the higher-frequency components of the phase-noise spectrum. ICI cannot be corrected and must be allowed for in the noise budget. It can be kept small in comparison with thermal noise by suitable local oscillator design.

It is an object of the present invention to provide an improved means of removing the common phase error in digital video broadcast signals.

The present invention provides in a first aspect, apparatus for demodulating digital video broadcast signals comprising data modulated on a multiplicity of spaced carrier frequencies, including:

analog to digital conversion means for providing a series of digital samples of the broadcast signal, real to complex conversion means for converting each digital sample to a complex number value, Fourier Transform means for analysing the complex number values to provide a series of data signal values in complex number format for each carrier frequency, and signal processing means for processing the series of data signal values including phase error correcting means,

the phase error correcting means including means for converting the data signal values from a complex number format to a phase angle format, means for determining a common phase error by assessing the phase of continual pilot signals in the broadcast signals and determining the variation in phase of the continual pilot signals between consecutive symbols in the broadcast signals, and means for subtracting the common phase error from the data signal values.

In accordance with the invention, an improved means is provided for accurately demodulating digital video broadcast signals which relieves the necessity for a very accurate down-conversion of the received broadcast signal to intermodulate frequencies.

As preferred, a plurality of said continual pilot signals (there are 45 or 177 available) are arranged to determine the phase error. In addition, a weighting means is employed to give more significance in the averaging process of those values near the average.

In a further aspect, the invention provides an apparatus for demodulating digital broadcast signals comprising data modulated on a multiplicity of spaced carrier frequencies, including:

analog to digital conversion means for providing a series of digital samples of the broadcast signal, Fourier Transform means for analysing the samples to provide a series of data signal values for each carrier frequency, and signal processing means for processing the series of data signal values including phase error correcting means,

the phase error correcting means including, means for determining a common phase error by assessing the phase of continual pilot signals in the broadcast signals and determining the variation in phase of the continual pilot signals between consecutive symbols in the broadcast signals, and means for subtracting the common phase error from the data signal values, wherein the common phase error determining means includes means for averaging the phase of a plurality of said continual pilot signals, and weighting means for applying a weighting to the pilot signals so that more significance is accorded to pilot signals near the average value of phase error.

Thus, it is possible to remove the common phase-error component caused by phase noise added in the down-converter by digital processing in the chip. This processing is performed by the common-phase-error correction block in the architecture.

The common-phase-error correction block is able to remove the common phase error because all carriers within a given symbol suffer the same common phase error. By measuring the continual pilots, whose intended phase is the same from symbol to symbol, the common phase error is determined and then subtracted from the phase of all the data cells in the same symbol. There are sufficient continual pilots (which in any case are transmitted with a power approx. 2.5 dB greater than data cells) that the effect of thermal noise on this measurement can be rendered negligible by averaging.

There are essentially three components required to implement common-phase-error correction in the chip. These are:

1) A one-symbol data delay; since the common phase error varies randomly from symbol to symbol, it must be applied to the symbol from which it was calculated. Furthermore, it is not possible to calculate the common phase error until the whole symbol has been received.

2) The digital circuitry required to calculate the common phase error based on the received data.

3) A phase-to-complex-number look-up table. This is required since the common phase error value that is calculated will be a phase value. In order to apply the correction to the signal, the signal must be multiplied by a complex number equal to the complex representation of the phase.

These three factors, which together form the "cost" of implementing the feature on the chip, must be balanced against the cost of improving the performance of the down-converter so that the phase-noise it introduces is negligible. In our architecture we decided that the cost of including a common phase error correction circuit was substantially less than the cost of eliminating phase-noise in the down-converter, and so the chip includes circuitry to perform common-phase-error correction.

Naturally, strict control is required over the frequencies of the incoming video signals, and to this end automatic frequency control (AFC) is desirable. An AFC signal is preferably derived from the series of data signal values output from the Fourier Transform means, either for control of analog intermediate frequency local oscillator in a down conversion stage, or for digital phase adjustment via a direct digital frequency synthesis (DDFS) unit applied to the input of the Fourier Transform device.

The AFC preferably comprises two parts, a coarse frequency control for providing an integral number of frequency spacings offset, and a fine frequency control for controlling the frequency to less than one spacing.

It has been realised in accordance with the invention, that as regards fine frequency control, the situation is similar to common phase error correction in that a small frequency error is equivalent to a gradually increasing phase error; thus in accordance with the invention the means employed for common phase error correction is also employed for fine AFC.

Accordingly, the present invention provides in a further aspect, apparatus for demodulating digital video broadcast signals comprising data modulated on a multiplicity of spaced carrier frequencies, including:

analog to digital conversion means for providing a series of digital samples of the broadcast signal, Fourier Transform means for analysing the samples to provide a series of data signal values for each carrier frequency, signal processing means for processing the series of data signal values including phase error correcting means, and automatic frequency control means for controlling the frequency of the signals input to the Fourier Transform means,

wherein both the phase error correcting means and the automatic frequency control means employ a common phase error determination means comprising means for assessing the phase of a plurality of continual pilot signals in the broadcast signals and determining the variation in phase of the continual pilot signals between consecutive symbols in the broadcast signals in order to derive a common phase error and a frequency error signal.

Thus, the frequency control employs variation in phase between consecutive symbols (a first difference) for fine frequency control; the changing of such variation (a second difference) is employed for coarse frequency control.

BRIEF DESCRIPTION OF THE DRAWINGS

A preferred embodiment of the invention will now be described with reference to the accompanying drawings, in which:-

Figure G1 is a schematic block diagram of digital terrestrial front end converter incorporating the present invention;
Figure G2 is more detailed block diagram of demodulating apparatus according to the invention forming part of the converter of figure G1;
Figure G3 is a schematic view of a chip incorporating the apparatus of Figure G2;
Figure G4 is a more detailed block diagram of a common phase error/AFC current together with a channel equaliser circuit;
Figure G5 is a detailed block diagram of CPE/fine AFC control;
Figure G6 is a detailed block diagram of coarse AFC control; and
Figure G7 is a block diagram of a circuit for providing CPE and AFC control from the circuits of Figures G5 and G6.

DESCRIPTION OF THE PREFERRED EMBODIMENTS

The preferred embodiment of the present invention comprises a front end for digital terrestrial television transmitted according to the DVB-T specification. The front end consists of two separate components. First, an analog down-converter that converts the input signal from UHF to a low IF. Second, an integrated circuit that accepts the analog signal from the down-converter and performs the required DSP operations, which include synchronisation and demodulation, to form a stream of soft decisions suitable for presentation to an FEC decoder (Forward Error Correction decoder).

Full compliance to the DVB-T specification means that the chip is capable of decoding signals transmitted in the following modes:

1) A signal that contains either 1705 or 6817 active carriers, commonly referred to as 2K and 8K respectively. The chip includes the functionality and memory required to perform the FFT algorithm in both modes.
2) Non-hierarchical QPSK, 16-QAM and 64-QAM constellations.
3) Hierarchical 16-QAM and 64-QAM constellations, either uniform or non-uniform with the possible scale factors $\alpha=2$ and $\alpha=4$.
4) Guard intervals 1/4, 1/8, 1/16 and 1/32 of the OFDM symbol length.
5) Viterbi code rates 1/2, 2/3, 3/4, 5/6 and 7/8.

Referring now to figure 1, a block diagram of the front end system, a down-converter 2 receives the input UHF broadcast signal from an antenna 4 and converts the carrier signal to a first IF frequency of 30-40 MHz and then to a second IF frequency of 4.57 MHz. Since the bandwidth of the modulated data is about 7.6 MHz, this second IF signal is sufficiently low in frequency to present the signal as a base band signal to a demodulator chip 6. Demodulator chip digitises the incoming signal at a rate determined by a voltage controlled oscillator 8, and provides an Automatic Frequency Control on a line 9 to down-converter 2. The output of demodulator 6 represents demodulated data and is fed to a FEC decoder 10 (Forward Error Correction or Viterbi decoder) for recovering the data. The decoded data is fed to a transport stream demultiplexer 12 and then to an audio-visual decoder 14. The front end is controlled by a system microcontroller 16.

Referring now to figure 2, this shows the demodulator chip 6 in more detail. The chip itself is shown schematically in figure 3. The low second IF is fed to an analog digital converter which samples the IF signal at a frequency of 18.29 MHz (x 4 the second IF frequency of 4.57 MHz), in an analog to digital converter 20. The digital output samples are fed to a real to complex converter 22 which converts the digital samples to complex number values in order to provide a complex signal centred on zero frequency. This signal is fed to a Fast Fourier Transform device (FFT) 24 and to a timing synchronisation unit 26 which derives a value from the complex input signal which is fed to a digital to analog converter 28 to supply an analog control voltage to a voltage controlled oscillator 8, which provides a sampling clock signal to analog to digital converter 20.

The FFT device 24 has four modes of operation. Firstly, it is capable of performing either a 2048 point or an 8192 point transform. Second, it is capable of performing the transform in either direction. The inverse FFT functionality is provided so that the integrated circuit may be used in applications requiring OFDM modulation. In any event, the FFT performs a series of discrete Fourier transforms on each carrier frequency to provide at an output the data symbols for each carrier frequency. These output signals are corrected in phase at a common phase error generator unit 30 and then passed to a channel equaliser 32, a channel state information correction unit 34 and a deinterleaver 36. The signal thus processed is then passed at an output from the demodulator to forward error correction unit 8. The phase error correction block 30 calculates the common phase error of the signal and applies the necessary correction. The channel equaliser 32 first performs linear temporal equalisation followed by frequency equalisation using a high order interpolating filter. The equaliser outputs an equalised constellation to the channel state information unit 34. Unit 34 generates 3 or 4 bit soft decisions which are suitable for presentation to a Viterbi decoder. Deinterleaver 36 performs firstly symbol deinterleaving followed by bit deinterleaving.

In addition, the output signals from FFT 24 are passed to a frequency synchronisation unit 38 and converts it to a control signal for automatic frequency control, which acts upon a local oscillator in down-converter unit 2 for adjusting the frequency of the first or second IF.

In addition, the output of FFT 24 is fed to a frame synchronisation unit 40 which is fed forward to units 10, 12 and 14 of Fig. 1. A microcontroller interface 42 is provided, and in addition RAM memory 44 is provided to which all the units 22, 24, 30-36 have access to in order to provide their required operations.

Analog versus Digital AFC

One of the processes that is required in the synchronisation of the demodulator is to obtain frequency synchronisation. There is a choice as to whether to apply the required frequency shift as an analog correction in the down-converter 2, or as a digital frequency shift in the demodulator chip.

Analog frequency correction

If the frequency correction is implemented by adjusting the frequency of the reference crystal in the down-converter 2, then a control signal on line 9 is provided from the output of the integrated circuit 6 back to the down-converter. This method has the advantage that a SAW filter inside the down-converter can be made as narrow as possible. The disadvantages are twofold. First, the integrated circuit must pass a control signal back to the down-converter. Second, the architecture of the down-converter is made more complicated since the control signal must adjust the reference crystal within the search range of the AFC.

Digital Frequency Correction

If the frequency correction is implemented in the integrated circuit 6, then the architecture of the down-converter 2 is made much simpler since there is no longer any need to have a control signal from the chip 6, and the loop in the down-converter that drives the reference crystal is no longer required. The disadvantage of this method is that the bandwidth of the SAW filter must be increased by the AFC search range. This causes a significant penalty in terms of the adjacent channel protection ratio when the receiver is used in an environment where the existing analogue services are operated in adjacent channels to digital services. The architecture described will permit both analog and digital correction.

As regards common phase error correction, this is in practice combined with generation of the control signal in unit 38 for automatic frequency control. Both measurements are based on the phase rotation between one symbol and the next, measured on the continual pilots (CP's).

If a constant AFC error is present, there will be a constant change of rotation between successive symbols, proportional to the frequency error. Low frequency phase-noise will have a similar effect; rotating all of the carriers by the same angle, but this angle will vary from symbol to symbol in a random manner. In both cases it is desirable to attempt to correct the phase error on the current symbol by applying the opposite phase rotation to all carriers - this process is known as common-phase-error correction.

In addition to the phase rotation effect, an AFC error will also cause inter-carrier interference (ICI) which cannot be corrected for - for this reason it is also necessary to feed back an error signal to drive the frequency error to zero. This error signal can be applied to either in the analog domain as the local-oscillator control voltage, or in the digital domain to a DDFS which must be situated before the FFT. In either case an appropriate loop filter is included.

The measurement of phase rotations can only resolve AFC errors of up to roughly one half of the carrier spacing in either direction. In practice, during acquisition the AFC error is likely to be much greater than this. For this reason the AFC measurement also includes a "coarse" part, which measures the number of whole carriers by which the frequency is wrong. This is done using a pattern-matching approach looking for the continual pilots.

Referring to Figures 4 to 7, the output from FFT unit 24, in complex number representation is converted to a phase angle representation in converter unit 50.

The incoming data are denoted by $c(l,n)$ where $l$ is the symbol number and $n$ is the slot number within the symbol. Note that this is not the same as the carrier number $k$, because this block must start processing before the nominal position of the first carrier to allow for a coarse frequency error.

The incoming complex values are converted to phase:

$$\theta(l, n) = \frac{1}{2\pi}\arg[c(l, n)]$$

where the argument function is defined such that $-\pi \leq \arg(z) < \pi$.

$c(l,n)$ is also delayed by one and two symbols and converted to phase to give $\theta(l-l,n)$ and $\theta(l-2,n)$ in delay elements 52, 54.

The first difference of phase is calculated for the current and previous symbols in subtractor units 55, 56.

$$\phi(l,n) = [\theta(l,n)-\theta(l-1,n)]\bmod 1.0$$

$$\phi(l-1,n) = [\theta(l-1,n)-\theta(l-2,n)]\bmod 1.0$$

The second difference is also calculated in further subtractor unit 58.

$$\psi(l,n) = [\phi(l,n) - \phi(l-1,n)]\mathrm{mod}1.0$$

The differences are calculated modulo 1.0, i.e. they are all between -0.5 and +0.5.

Fine AFC measurement

This measurement assumes that the pilots are in the correct slots, i.e. that the AFC error is less than half of the carrier spacing. First an unweighted sum of the first differences is formed, over all of the continual pilots, in accumulator 60 (see Figure 5).

$$\Phi_u(l) = \sum_{(n-N_0) \in C} \phi(l,n)$$

where $C$ is the set of continual pilot positions defined in table 9 of the DVB-T specification, and $N_0$ is the nominal slot number for the first carrier. This sum is divided in divider unit 62 by the number of CP's to give the average phase rotation:

$$\phi_u(l) = \frac{\Phi_u(l)}{N_{CP}}$$

where $N_{CP}$ is the number of continual pilots, i.e. 45 in 2K mode and 177 in 8K mode. Now a weighted average is calculated. Firstly, the deviation of each pilot from the unweighted means is calculated in subtractor 64:

$$\varepsilon(l,n) = \left|\phi(l,n) - \phi_u(l)\right|$$

A weight is derived based on the deviation measure from look-up table 66:

$$w(l,n) = \begin{cases} 0 & \varepsilon(l,n) \geq 2^{-3} \\ 2 & 2^{-4} \leq \varepsilon(l,n) < 2^{-3} \\ 8 & 2^{-5} \leq \varepsilon(l,n) < 2^{-4} \\ 32 & 2^{-6} \leq \varepsilon(l,n) < 2^{-5} \\ 64 & 2^{-7} \leq \varepsilon(l,n) < 2^{-6} \\ 128 & \varepsilon(l,n) < 2^{-7} \end{cases}$$

The weighted sum is now formed in a barrel shifter 68 and accumulator 70:

$$\Phi_w(l) = \sum_{(n-N_0) \in C} w(l,n)\phi(l,n)$$

The sum of the weights is also calculated in accumulator 72:

$$W(l) = \sum_{(n-N_0) \in C} w(l, n)$$

The weighted sum is divided in divider 74 by the sum of the weights to give the weighted mean:

$$\phi_w(l) = \frac{\Phi_w(l)}{W(l)}$$

This forms the fine part of the AFC measurement, and also the common-phase-error difference estimate.

<u>Coarse AFC (Figure 6)</u>

Referring to Figure 6, the coarse AFC employs a bank of recursive filters 80, only one of which is shown. The magnitude of the second difference $\psi$ (obtained from subtractor unit 58) is obtained in unit 82 and applied to filter 80 comprising subtractor 84, shift register 86, summer 88 and store 90, and a feedback loop 92 to summer 88 and subtractor 84. The output of the filter is compared at 94 with the output of an offset converter 96. The smaller value is provided as coarse frequency correction. Thus the coarse AFC uses a bank of the recursive filters $\gamma_\Delta(l,n)$ in which each value of $\Delta$ corresponds to a different trial frequency offset. The search range is given by $-47 \le \Delta \le 47$. Each filter is updated only when the current slot would contain a continual pilot for its particular value of $\Delta$. The input to all of the filters is the rectified value of the second difference of phase. This will have a small average value only for the correct offset, because the first difference will be similar each time. The update rule is:

$$\gamma_\Delta = \begin{cases} (1-R)\gamma_\Delta(l, n-1) + R|\psi(l, n)| & (n-N_0-\Delta) \in C_R \\ \gamma_\Delta(l, n-1) & otherwise \end{cases}$$

where $C_R$ is a subset of C chosen such that at most one store needs to be updated for each slot. The store which needs to be updated, if any, is the one for which $\Delta = n-N_0-N_C$, where $N_C \in C_R$.

After all of the filter stores have been updated for a given CP, the coarse AFC output is set to the value of $\Delta$ corresponding to the store containing the smallest value:

$$\Delta_C = \underset{\Delta}{\arg\min}\, \gamma_\Delta$$

The algorithm can be expressed as follows:

```
if ((n − N₀ + 47) ∈ C_R && sweep == false)
{
        Δ = −47;
        sweep=true;
        γ_min = 0.5;
        Δ_min = 0;
}
if (sweep)
{
        γ_Δ = (1 − R)γ_Δ + R|ψ|;

        if (γ_Δ < γ_min)
        {
                γ_min = γ_Δ;
                Δ_min = Δ;
        }

        Δ = Δ + 1;
        if (Δ > 47)
        {
                sweep=false;
                Δ_c = Δ_min;
        }
}
```

where the flag *sweep* starts with the value *false*.

Two methods are used for combining coarse and fine measurement.

METHOD 1:

This method simply adds the two measures together, since the coarse measure is an integer giving the number of whole carriers offset, while the fine measure gives fractions of a carrier.

$$E = \Delta_c + \phi_w$$

METHOD 2:

In this method the fine part is only considered if the coarse value is zero. The coarse value is also clipped to the range -1 to +1:

$$E = \begin{cases} -1 & \Delta_c < 0 \\ \phi_w & \Delta_c = 0 \\ 1 & \Delta_c > 0 \end{cases}$$

The frequency error value E is fed into a loop filter, which consists simply of an integrator:

$$v(l) = v(l-1) + E|_{n=N_{max}}$$

The integrator is clocked once per symbol, at the end of the symbol. This value is fed to a DAC which can be used to generate the AFC control voltage if analog AFC is being used. The value is also fed to the DDFS if digital AFC is being used.

Common-Phase-Error Correction

The common-phase error signal is derived only from the fine part of the AFC signal. This signal represents the change of phase from one symbol to the next. In order to correct the common-phase-error it is necessary to know the actual rotation, not just the change in rotation. It is therefore necessary to accumulate the phase differences (with whole rotations discarded):

$$\theta_{CPE}(l) = [\theta_{CPE}(l-1) + \phi_W(l)] \bmod 1.0$$

The whole symbol is now rotated by this angle in the opposite direction. The correction value will not be available until the whole symbol has been received and therefore the correction must be delayed appropriately and applied to the delayed data paths:

$$c'(l-1,n) = c(l-1,n)\exp[-j\theta_{CPE}(l-1)]$$

$$c'(l-2,n) - c(l-2,n)\exp[-j\theta_{CPE}(l-2)]$$

Referring now to Figure 7, this shows a circuit for receiving the outputs of the circuits of Figures 5 and 6. The output 05 from Figure 5 is applied to an accumulator 100 which provides a common-phase-error signal. The signal 05 is also applied to a combining circuit 102 where it is combined with the output 06 from Figure 6 in order to provide a summed signal which is applied to an accumulator 104. The output of accumulator 104 is applied to truncation circuits 106, 108. The output from truncation circuit 108 may be used for digital automatic frequency control where the signal is applied to a DDFS circuit at the input of FFT unit 24; alternatively the output from truncation circuit 106 is applied to a pulse width modulation digital to analog converter circuit 110 in order to provide a signal for analog automatic frequency control where the frequency of a local oscillator in the down-converter stage is controlled.

Referring back to figure 4, the common-phase-error signal from Figure 7 is applied to the delayed versions of the symbols from FFT 24 as at 181, 182 and the corrected versions of the symbols are then fed to a linear interpolator 184 for channel equalisation. The symbol from delay element 52 is applied directly to the interpolator, whereas the stored symbol from element 54 is applied to further delay elements 186, 188 connected to tappings 190 of the interpolator. In use, the elements 52, 54, 186, 188 comprise one and the same memory elements, by arranging the common-phase-error correction and channel equalisation to take place in different phases of operation of the demodulator.

STATEMENTS OF ADVANTAGE

1A. Apparatus for demodulating digital video broadcast signals comprising data modulated on a multiplicity of spaced carrier frequencies, including:

analog to digital conversion means for providing a series of digital samples of the broadcast signal, transform means for analysing the samples to provide a series of data symbol values for each carrier frequency, signal processing means for processing the series of data symbol values including phase error correcting means, and automatic frequency control means for controlling the frequency of the signals input to the transform means, wherein the automatic frequency control means includes coarse frequency control means for controlling the frequency in terms of increments of the carrier spacing frequency, and fine frequency control means for controlling the frequency for values less than a single carrier spacing frequency interval,

wherein the coarse frequency means includes a filter means for assessing a group of a predetermined number (N) of carrier signals on either side of the nominal position of a plurality of predetermined continual pilot signals, wherein the outputs of the filter means are provided to respective memory locations of memory means, the memory means being divided into a plurality of sections , first means for determining within each section a first signal best representing the continual pilot signal, and second means for determining from among the first signals from the plurality of sections, a second signal which best represents the continual pilot signal.

2A. Apparatus according to Statement 1A, wherein the plurality of sections comprises 2 or 3 sections.

3A. Apparatus according to Statement 1A or 2A, wherein the filter means comprises one filter for each memory section

4A. Apparatus according to Statement 1A or 2A, wherein the filter means comprises a single filter.

5A. Apparatus according to any preceding Statement A, including means for determining the rate of change of phase of said predetermined number of carrier signals between consecutive symbol intervals, and applying the same as inputs to respective filter means of the bank of filter means.

6A. Apparatus according to Statement 5A, wherein the filter means comprises a recursive filter for providing an output representative of the accumulated value of a plurality of previous input values, said first means arranged for selecting the minimum output value as representing the continual pilot signal.

7A. Apparatus according to Statement 6A, wherein each filter comprises a difference means coupled to the filter input, to provide an input signal to said memory locations, the output of the store means being fed back to the difference means, so that the output of the difference means represents the difference between the filter input and the output of the store means.

8A. Apparatus according to any preceding Statement A, wherein the filter means includes an offset counter for shifting the address of the location within the memory means for storing said values at different locations.

9A. Apparatus according to Statement 5A or 6A, wherein said first means includes means for comparing a current filter output with a previously determined minimum output value, and updating the minimum value as necessary.

10A. Apparatus according to any preceding Statement A, wherein only continual pilots are assessed which are spaced at least a predetermined number (2N+ 1) carriers apart.

11A. Apparatus according to any of Statements 1A to 10A, wherein only continual pilots are assessed which are spaced at least a predetermined number (2N+ 1)/M carriers apart, where M is the number of memory sections.

12A. A method for demodulating digital video broadcast signals comprising data modulated on a multiplicity of spaced carrier frequencies, the method comprising:

analog to digital conversion to provide a series of digital samples of the broadcast signal,
analysing the samples to provide a series of data symbol values for each carrier frequency,
processing the series of data symbol values including phase error correction and automatic frequency control of the frequency used to analyse the samples,
wherein the automatic frequency control includes coarse frequency control for controlling the frequency in terms of increments of the carrier spacing frequency and fine frequency control for controlling the frequency for values less than a single carrier spacing frequency interval,
wherein the coarse frequency control includes a filter means for assessing a group of a predetermined number (N) of carrier signals on either side of the nominal position of a plurality of predetermined continual pilot signals and providing outputs to respective memory locations of a memory means, the memory means being divided into a plurality of sections,
determining within each section a first signal best representing the continual pilot signal, and
determining from among the first signals from the plurality of sections, a second signal which best represents the continual pilot signal.

1B. Apparatus for demodulating digital video broadcast signals comprising data modulated on a multiplicity of spaced carrier frequencies, comprising:

down-conversion means for converting an input broadcast signal to a frequency sufficiently low to enable analog digital conversion of the signal,
analog to digital conversion means for converting the broadcast signal to a series of digital samples, real to complex conversion means for converting each digital sample to a complex number value, Fourier transform means for analysing the complex number values to provide a series of signal values for each carrier frequency, frequency control means, comprising means responsive to the output of said Fourier Transform means for producing a signal for controlling the frequency of the signal formed by said complex number values, and signal processing means for receiving the signal values and providing an output for decoding, the signal processing means including channel equalisation means and channel state information generating means.

2B. Apparatus according to Statement 1B, wherein the down conversion means includes first intermediate frequency means and second intermediate frequency means for producing a second intermediate frequency which is such in relation to the bandwidth of the modulated data that the bandwidth extends close to 0 Hz frequency.

3B. Apparatus according to Statement 2B, wherein the second IF frequency is about 4.5 MHz.

4B. Apparatus according to Statements 2B or 3B, wherein the sampling frequency of the analog digital conversion means is a multiple, preferably a multiple of four, times the second IF frequency.

5B. Apparatus according to any preceding Statement B, including time synchronisation means for controlling the sampling by the analog to digital conversion means, comprising means responsive to the input signal to the Fourier transform means for providing a signal for controlling a voltage control oscillator for determining the sampling frequency of the analog to digital conversion means.

6B. Apparatus according to any preceding Statement B, wherein said frequency control means, comprises means responsive to the output of said Fourier transform means for providing a signal for controlling local oscillators for said first and/or second IF frequencies.

7B. Apparatus according to any of Statements 1B to 5B, wherein said frequency control means is arranged to provide a digital correction signal for application to the input of said Fourier Transform means.

8B. Apparatus according to any preceding Statement B, including phase-error-correcting means for removing the common phase error in said signal values, including a first plurality of delay elements for processing delayed versions of the signal values with current signal values, and including channel equalisation means for compensating for communication channel impairments for receiving the phase-error-corrected signal values and including a second plurality of delay elements for processing delay versions of the signal values with the current values,
and wherein the apparatus is arranged such that the phase-error-correction means employs said first plurality of delay elements in one phase of operation of the apparatus and the channel equalisation means employs said second plurality of delay elements in a different phase of operation of the apparatus, whereby the first and second pluralities are one and the same.

9B. Apparatus for demodulating a digital video broadcast signal comprising data modulated on a multiplicity of spaced carrier frequencies, the apparatus including:

transform means for analysing a version of the broadcast signal to provide a series of signal values for each of the multiplicity of carrier frequencies,
phase-error-correction means for removing the common phase error in said signal values, including a first plurality of delay elements for processing delayed versions of the signal values with the current signal values, channel equalisation means for compensating for communication channel impairments for receiving the phase-error-corrected signal values and including a second plurality of delay elements for processing delayed versions of the signal values with the current values,
and wherein the apparatus is arranged such that the phase-error-correction means employs said first plurality of delay elements in one phase of operation of the apparatus and the channel equalisation means employs said second plurality of delay elements in a different phase of operation of the apparatus, whereby the first and second pluralities are constituted from one and the same memory elements.

10B. Apparatus for demodulating a digital video broadcast signal comprising data modulated on a multiplicity spaced carrier frequencies, the apparatus including:

analog-to-digital conversion means for converting a version of the broadcast signal, reduced in frequency as desired, to a series of digital samples, real-to-complex conversion means for converting the digital samples to complex number values, Fourier transform means for analysing the complex number values to provide a series of signal values for each of the multiplicity of carrier frequencies, automatic frequency control means coupled to receive the output of the Fourier transform means for providing a control signal for controlling the frequency of the signals input to the Fourier Transform means, and signal processing means for receiving said series of signal values and providing an output for decoding the signal processing means including channel equalisation means and channel state information generating means.

11B. Apparatus according to Statement 9B or 10B, incorporated in an integrated circuit chip.

12B. A method of demodulating digital video broadcast signals comprising data modulated on a multiplicity of spaced carrier frequencies, the method comprising:

converting an input broadcast signal to a frequency sufficiently low to enable analog to digital conversion of the signal, converting the broadcast signal to a series of digital samples, converting each digital sample to a complex number value, analysing the complex number values to provide a series of Fourier transform signal values for each carrier frequency, producing a signal from said Fourier Transform signal values for controlling the frequency of the signal formed by said complex number values, performing channel equalisation on said Fourier Transform signal values, generating state information from said Fourier Transform signal values and including said state information and channel equalisation in an output for decoding based on said Fourier Transform signal values.

13B. A method for demodulating a digital video broadcast signal comprising data modulated on a multiplicity of spaced carrier frequencies, the metod comprising:

analysing a version of the broadcast signal to provide a series of signal values for each of the multiplicity of carrier frequencies, removing the common phase error in said signal values by phase-error-correction, including processing delayed versions of the signal values with the current signal values, compensating the phase-error-corrected signal values for communication channel impairments by channel equalisation, including processing delayed versions of the signal values with the current values, wherein the phase-error-correction employs a plurality of delay elements in one phase of operation and the channel equalisation employs the same plurality of delay elements in a different phase of operation.

14B. A method for demodulating a digital video broadcast signal comprising data modulated on a multiplicity spaced carrier frequencies, the method including:

analog-to-digital conversion of a version of the broadcast signal, reduced in frequency as desired, to a series of digital samples, converting the digital samples to complex number values, analysing the complex number values to provide a series of Fourier transform signal values for each of the multiplicity of carrier frequencies, frequency control means coupled to receive the output of the Fourier transform means for providing from the series of Fourier transform signal values a control signal for automatically controlling the frequency of the signals used to generate the Fourier Transform signal values, and performing channel equalisation on said Fourier Transform signal values, generating state information from said Fourier Transform signal values and including said state information and channel equalisation in an output for decoding based on said Fourier Transform signal values.

1C. Apparatus for demodulating digital video broadcast signals comprising data modulated on a multiplicity of spaced carrier frequencies, including:

analog to digital conversion means for providing a series of digital samples of the broadcast signal, transform means for analysing the samples to provide a series of data signal values for each carrier frequency signal processing means for processing the series of data signal values including the phase-error-correcting means, and automatic frequency control means for controlling the frequency of the signals input to the transform means, wherein the automatic frequency control means includes coarse frequency control means for controlling the frequency in terms of increments of the carrier spacing frequency, and fine frequency control means for controlling the frequency for values less than a single carrier spacing frequency interval,

wherein the coarse frequency means includes a filter means for assessing a predetermined number (N) of carrier signals on either side of the nominal position of a plurality of predetermined continual pilot signals, to determine which signal best represents the continual pilot signal, whereby to determine the coarse frequency error.

2C. Apparatus according to Statement 1C, including means for determining the rate of change of phase of said predetermined number of carrier signals between consecutive symbol intervals, and applying the same as inputs to the filter means.

3C. Apparatus according to Statement 2C, wherein the filter means comprises recursive filter means for providing an output representative of the accumulated value of a plurality of previous input values, and means for selecting the carrier associated with the minimum output value as representing the continual pilot signal position.

4C. Apparatus according to Statement 3C, wherein the filter means comprises a difference means coupled to the filter input, to provide an input signal to a store means, the output of the store means being fed back to the difference means, so that the output of the difference means represents the difference between the filter input and the output of the store means.

5C. Apparatus according to any preceding Statement C, wherein the filter means has access to a store means for storing, in respective store locations, assessment values produced by the filter means representing the respective carriers being assessed.

6C. Apparatus according to Statement 5C, wherein the store means comprises an area of RAM, with said values being stored in respective memory locations in the RAM.

7C. Apparatus according to Statement 4C, 5C or 6C including an offset counter for shifting the address of the location within the store means for storing said values at different locations.

8C. Apparatus according to Statement 7C, including means for assessing the values within the store means and providing the value of the offset counter, corresponding to the best representing signal, as the coarse frequency error.

9C. Apparatus according to any preceding Statement C, including means for combining the coarse and fine error signals and applying the combined value either via an ADC to a down-conversion stage or via a DDFS to the input of the transform means, preferably a fast fourier transform means.

10C. Apparatus according to any preceding Statement C, wherein a subset of continual pilots are assessed whose nominal positions are spaced at least a predetermined number (2N + 1) carriers apart, where preferably N =47.

11C. Apparatus according to Statement 10C, where continual pilots are selected for assessment by selecting a first pilot signal, and determining which is the next pilot signal in the sequence more than (2N+ 1) carriers from the first pilot signal.

12C. A method for demodulating digital video broadcast signals comprising data modulated on a multiplicity of spaced carrier frequencies, the method comprising:

analog to digital conversion for providing a series of digital samples of the broadcast signal,
analysing the samples to provide a series of data signal values for each carrier frequency signal
processing the series of data signal values including the phase-error-correction,
automatic frequency control of the frequency used in the said analysing of the samples,
wherein the automatic frequency control includes coarse frequency control for controlling the frequency in terms of increments of the carrier spacing frequency, and fine frequency control for controlling the frequency for values less than a single carrier spacing frequency interval,
wherein the coarse frequency control includes assessing a predetermined number (N) of carrier signals on either side of the nominal position of a plurality of predetermined continual pilot signals, to determine which signal best represents the continual pilot signal, whereby to determine the coarse frequency error.

1D. Apparatus for demodulating digital video broadcast signals comprising data modulated on a multiplicity of spaced carrier frequencies, comprising:

conversion means for converting a down-converted version of the broadcast signal to a series of digital samples in complex format, transform means for analysing the digital sample values to provide a series of data symbol values for each carrier frequency, and signal processing means for receiving the data symbol values and providing an output for decoding,
and timing synchronisation means for synchronising the transform means with the symbol periods of the broadcast signal, including correlation means for receiving said digital sample values and comprising delay means having a time period delay equal to the active symbol period, and multiplier means for receiving the digital sample values and a version thereof delayed by said delay means, to form a complex product signal, and means for processing the complex product signal to derive timing synchronisation pulses, wherein the timing synchronisation means comprises a coarse synchronisation means employing a subset of the digital sample signals for providing a coarse timing synchronisation, and a fine synchronisation means for providing a fine synchronisation within a time period determined by the coarse synchronisation means.

2D. Apparatus according to Statement 1D, wherein the coarse synchronisation means includes said correlation means arranged to operate only on a subset of said data sample values spaced apart a predetermined amount.

3D. Apparatus according to Statement 2D, wherein said subset comprises values spaced apart every eight samples.

4D. Apparatus according to any preceding Statement D, wherein the coarse synchronisation means comprises coarse adaptive slicing means for determining the leading edge of the pulse of the complex product generated by the correlation means.

5D. Apparatus according to Statement 4D, including a symbol counter for providing a window signal *(fine_window)* to said fine synchronisation means, said fine synchronisation means including a fine correlation means for determining said complex product signal based on all the data sample values within said time interval.

6D. Apparatus according to any preceding Statement D, wherein both the coarse and fine synchronisation means include a respective inter symbol filter for removing a DC component in the product signal, and include a buffer for storing delayed sample values.

7D. Apparatus according to Statement 7D or 8D, wherein the fine synchronisation means includes a fine adaptive slicing means for determining the leading edge of a pulse representing a data sample value.

8D. Apparatus according to Statement 5D, wherein the symbol counter provides a symbol timing synchronisation pulse train, and a sampling frequency error to control an external oscillator.

9D. Apparatus according to any preceding D Statement, wherein the coarse synchronisation means and fine synchronisation means operate simultaneously and in parallel.

10D. Apparatus according to Statement 2D and 5D, wherein the fine correlation means and coarse correlation means employ a common delay means and multiplier means, and have separate buffer means for storing product values.

11D. Apparatus according to Statement 5D or 8D, wherein the symbol counter includes a first counter coupled to receive clock signals, and coupled for incrementing a fine counter and a coarse counter, the fine counter being arranged to be reset by the fine timing synchronisation and the coarse counter being arranged to be reset by the coarse timing synchronisation.

12D. A method for demodulating digital video broadcast signals comprising data modulated on a multiplicity of spaced carrier frequencies, comprising:

converting a down-converted version of the broadcast signal to a series of digital samples in complex format, transforming the digital samples to provide a series of data symbol values for each carrier frequency, and signal processing the data symbol values to provide an output for decoding,
and time synchronising the transform means with the symbol periods of the broadcast signal, including correlating said data samples with data sample values delayed by a time period delay equal to the active symbol period, to form a complex product sample signal, and processing said complex product signal,
wherein the timing synchronisation comprises a coarse synchronisation step employing a subset of the data sample values for providing a coarse timing synchronisation,
and a fine synchronisation step for providing a fine synchronisation employing the data sample values within a time period determined by the coarse synchronisation.

13D. A method as Statemented in Statement 11D, including carrying out said coarse synchronisation step and said fine synchronisation step simultaneously and in parallel.

1E. Apparatus for demodulating digital video broadcast signals comprising data modulated on a multiplicity of spaced carrier frequencies, including:

conversion means for converting the broadcast signal to a series of digital samples in complex format, transform means for analysing the digital sample values to provide a series of data symbol values for each carrier frequency and signal processing means including channel equalisation means for receiving the signal values and providing an output for decoding, automatic frequency control means for controlling the frequencies of the digital sampling signals applied to said transform means, and
timing synchronisation means for synchronising the transform means with the symbol periods of the broadcast signal, including correlation means for receiving said digital signal values and comprising delay means having a time period equal to a symbol period, and multiplier means for receiving the digital signal values and a version thereof delayed by said delay means, to form a complex product signal, and means for processing the complex product signal to derive timing synchronisation pulses, wherein the timing synchronisation means is operable in an initial hunt mode for analysing said digital sample values over a relatively wide timing range to establish synchronisation, and then operable in a zoom mode for analysing the digital sample values over a relatively narrow range where the synchronisation point is expected.

2E. Apparatus according to Statement 1E, wherein the relatively wide timing range is a full symbol period.

3E. Apparatus according to Statement 1E or 2E, wherein the timing synchronisation means includes means for detecting an edge of said complex product signal, and means for selecting the magnitude along four axes ($\pm X$, $\pm Y$) which best represents the edge.

4E. Apparatus according to any preceding Statement E, wherein the timing synchronisation means includes means for detecting an edge of said complex product signal, and providing an edge signal, and counter means responsive to said edge signal and a clock signal for counting symbol intervals and for providing a ZOOM window signal, in response to which the timing synchronisation means operates in said ZOOM mode.

5E. Apparatus according to Statement 4E, wherein the ZOOM mode, the counter means is operative to maintain the ZOOM window signal if said edge signal is located within a predetermined number of symbol intervals from the expected synchronisation point.

6E. Apparatus according to Statement 4E or 5E, wherein the counter means is operative to provide signals indicative of edge detection, and including means responsive to said signals existing over a predetermined plurality of symbol periods for permitting transition between hunt and zoom modes.

7E. Apparatus according to any preceding Statement E, wherein in the hunt mode, the timing synchronisation means is operative to employ memory reserved for automatic frequency control and/or channel equalisation.

8E. A method of demodulating digital video broadcast signals comprising data modulated on a multiplicity of spaced carrier frequencies, including:

converting the broadcast signal to a series of digital sample values in complex format, transforming the digital sample values to a series of data symbol values for each carrier frequency,

synchronising the transform means with the symbol periods of the broadcast signal, including correlating said digital signal values by multiplying the digital signal values and a version thereof delayed by a time period equal to the active symbol period, to form a complex product signal, and processing the complex product signal to derive timing synchronisation pulses, wherein the timing synchronisation is carried out in an initial hunt mode, analysing said digital sample values over a relatively wide timing range to establish synchronisation, and the timing synchronisation then being carried out in a zoom mode, analysing the digital sample values over a relatively narrow range about the synchronisation point, and processing the data symbol values, including channel equalising the data symbol values to provide an output for decoding, and automatically controlling the frequencies of the digital sampling signals applied to said transform means.

9E. A method according to Statement 8E, wherein the relatively wide timing range is a full symbol period.

10E. A method according to Statement 8E or 9E, including detecting an edge of said complex product signal.

11E. A method according to Statement 10E, including selecting the magnitude of the edge along four axes ($\pm$X, $\pm$Y) which best represents the edge.

12E. A method according to Statement 10E or 11E, including counting a clock signal to provide symbol intervals from the occurrence of the edge and providing a Zoom Window signal extending over a predetermined number of symbol intervals.

13E. A method according to Statement 12E wherein the Zoom state is maintained if the edge remains located with the Zoom Window.

14E. A method according to any of Statements 10E to 13E wherein a transition between modes is made only after a predetermined number of symbol periods have elapsed in which conditions exist for making the transaction.

15E. A method according to Statements 8E to 14E, wherein the Hunt mode, an area of memory is employed which is otherwise reserved for automatic frequency control and/or channel equalisation.

1F. Apparatus for demodulating a digital video broadcast signal comprising data modulated on a multiplicity of spaced carrier frequencies, the apparatus including:

transform means for analysing the broadcast signal to provide a series of symbol values for each of the multiplicity of carrier frequencies,
automatic frequency control means for controlling the frequency of said series of symbol values in dependence on a common phase error signal from said series of symbol values,
first and second delay means coupled in series to receive said series of symbol values from said transform means, and means for deriving from symbol values in the first and second delay means a common phase error signal,
first and second common phase error correction (CPE) means for receiving said common phase error signal, for correcting said signal values from said transform means, the output of the first delay means being applied to the first CPE means and the output of the second delay means being applied to said second CPE means,
channel equalisation means for compensating for communication channel impairments for receiving directly the phase error corrected signals from said first CPE means, and third and fourth delay means connected in series and connected to receive the output from said second CPE means and applying delayed versions of the same to the channel equalisation means.

2F. Apparatus as Statemented in Statement 1F, including means coupled to said first and second delay means for converting said symbol values to a phase format, and providing the same to the common phase error deriving means.

3F. Apparatus for demodulating digital video broadcast signals comprising data modulated on a multiplicity of spaced carrier frequencies, comprising:

down-conversion means for converting an input broadcast signal to a frequency sufficiently low to enable analog digital conversion of the signal,
analog to digital conversion means for converting the broadcast signal to a series of digital samples, real to complex conversion means for converting each digital sample to a complex number value, Fourier transform means for analysing the complex number values to provide a series of symbol values for each carrier frequency, frequency control means, comprising means responsive to the output of said Fourier Transform means for producing a signal for controlling the frequency of the signal formed by said complex number values, in dependence upon a common phase error signal in said series of symbol values,

first and second delay means coupled in series to receive said series of symbol values from said transform means, and for providing delayed versions to said automatic frequency control means,

first and second common phase error correction (CPE) means for receiving said common phase error signal, for correcting said symbol values from said transform means, the output of the first delay means being applied to the first CPE means and the output of the second delay means being applied to said second CPE means,

channel equalisation means for compensating for communication channel impairments for receiving directly the phase error corrected signals from said first CPE means, and third and fourth delay means connected in series and connected to receive the output from said second CPE means and applying delayed versions of the same to the channel equalisation means.

4F. Apparatus as Statemented in any preceding Statement F, wherein said third and fourth delay means are arranged to exclude pilot signals and to include only data symbols.

5F. Apparatus as Statemented in Statement 3 or 4 including means for deriving from symbol values in the first and second delay means a common phase error signal.

6F. Apparatus as Statemented in Statement 5F, including means, coupled between the first and second delay means and the common phase error deriving means, for converting the symbol values from a complex format to a phase format.

7F. A method for demodulating a digital video broadcast signal comprising data modulated on a multiplicity of spaced carrier frequencies, the method comprising:

analysing the broadcast signal to provide a series of symbol values for each of the multiplicity of carrier frequencies,

automatic frequency control of the frequency of said series of symbol values in dependence on a common phase error signal from said series of symbol values,

deriving a common phase error signal from symbol values in first and second delay means coupled in series to receive said series of symbol values ,

common phase error correcting the output of the first delay means and common phase error correcting the output of the second delay means

compensating the phase error corrected signals from said first delay means for communication channel impairments by channel equalisation,

delaying the phase error corrected signals from said second delay means in third and fourth delay means connected in series to receive said signals and applying delayed versions of the same to effect the channel equalisation.

8F. A method for demodulating digital video broadcast signals comprising data modulated on a multiplicity of spaced carrier frequencies, the method comprising:

converting an input broadcast signal to a frequency sufficiently low to enable analog digital conversion of the signal,

analog to digital conversion of the broadcast signal to a series of digital samples,

converting each digital sample to a complex number value,

analysing the complex number values to provide a series of Fourier transform symbol values for each carrier frequency,

frequency control responsive to the output of said Fourier Transform symbol values for producing a signal for controlling the frequency of the signal formed by said complex number values, in dependence upon a common phase error signal in said series of symbol values,

providing for said automatic frequency control delayed versions of said series of symbol values using first and second delay means coupled in series,

first and second common phase error correction (CPE) means for receiving said common phase error signal, for common phase error correcting the output of the first delay means and common phase error correcting the output of the second delay means,

compensating the phase error corrected signals from said first delay means for communication channel impairments by channel equalisation,

delaying the phase error corrected signals from said second delay means in third and fourth delay means connected in series to receive said signals and applying delayed versions of the same to effect the channel equalisation.

1G. Apparatus for demodulating digital broadcast signals comprising data modulated on a multiplicity of spaced carrier frequencies, including:

analog to digital conversion means for providing a series of digital samples of the broadcast signal, real to complex conversion means for converting each digital sample to a complex number value, Fourier Transform means for analysing the complex number values to provide a series of data signal values in complex number format for each carrier frequency, and signal processing means for processing the series of data signal values including phase error correcting means,

the phase error correcting means including means for converting the data signal values from a complex number format to a phase angle format, means for determining a common phase error by assessing the phase of continual pilot signals in the broadcast signals and determining the variation in phase of the continual pilot signals between consecutive symbols in the broadcast signals, and means for subtracting the common phase error from the data signal values.

2G. Apparatus according to Statement 1G, including means for averaging the phase of a plurality of said continual pilot signals, and weighting means for applying a weighting to the pilot signals so that more significance is accorded to pilot signals near the average value of phase error.

3G. Apparatus for demodulating digital broadcast signals comprising data modulated on a multiplicity of spaced carrier frequencies, including:

analog to digital conversion means for providing a series of digital samples of the broadcast signal, Fourier Transform means for analysing the samples to provide a series of data signal values for each carrier frequency, and signal processing means for processing the series of data signal values including phase error correcting means,

the phase error correcting means including, means for determining a common phase error by assessing the phase of continual pilot signals in the broadcast signals and determining the variation in phase of the continual pilot signals between consecutive symbols in the broadcast signals, and means for subtracting the common phase error from the data signal values, wherein the common phase error determining means includes means for averaging the phase of a plurality of said continual pilot signals, and weighting means for applying a weighting to the pilot signals so that more significance is accorded to pilot signals near the average value of phase error.

4G. Apparatus according to any preceding Statement G, including automatic frequency control means responsive to the output from the Fourier Transform means for controlling the frequency of the signal applied to the input of the Fourier Transform means, the automatic frequency control means including a coarse frequency control and a fine frequency control, wherein the fine frequency control shares the aforesaid elements of the common phase error correcting means.

5G. Apparatus according to Statement 4G, wherein the automatic frequency control means is arranged to be applied to a down-conversion stage or via a DDFS to the input of the Fourier Transform means.

6G. Apparatus according to Statement 3G, wherein the coarse frequency control comprises a recursive filter responsive to the rate of change of determined phase error, and means for comparing the output of the rate of change with a frequency offset.

7G. Apparatus for demodulating digital video broadcast signals comprising data modulated on a multiplicity of spaced carrier frequencies, including:

analog to digital conversion means for providing a series of digital samples of the broadcast signal, Fourier Transform means for analysing the samples to provide a series of data signal values for each carrier frequency, signal processing means for processing the series of data signal values including phase-error-correcting means, and automatic frequency control means for controlling the frequency of the signals input to the Fourier Transform means,
wherein both the phase-error-correcting means and the automatic frequency control means employ a common phase error determination means comprising means for assessing the phase of a plurality of continual pilot signals in the broadcast signals, and determining the variation in phase of the continual pilot signals between consecutive symbols in the broadcast signals in order to derive a common phase error and a frequency error signal.

8G. Apparatus according to Statement 7G, including means for averaging the phase of a plurality of said continual pilot signals, and weighting means for applying a weight to the pilot signals so that more significance is accorded to pilot signals near the average value of phase error.

9G. Apparatus according to any preceding Statement G, including a plurality of delay elements for storing previous versions of symbol values, and including a channel equalisation means, including a second plurality of storage elements for storing previous versions of the symbol values, wherein the common phase error determination and the channel equalisation means operate in different phases of operation of the apparatus, whereby to permit one and the same memory elements to serve as said first and second plurality of delay elements.

10G. Apparatus according to any preceding Statement G, incorporated in an integrated circuit chip.

11G. A method for demodulating digital broadcast signals comprising data modulated on a multiplicity of spaced carrier frequencies, the method comprising:

analog to digital conversion for providing a series of digital samples of the broadcast signal,
converting each digital sample to a complex number value,
analysing the complex number values to provide a series of Fourier Transform data signal values in complex number format for each carrier frequency,
processing the series of data signal values including phase error correction,
the phase error correction including converting the data signal values from a complex number format to a phase angle format,
determining a common phase error by assessing the phase of continual pilot signals in the broadcast signals and determining the variation in phase of the continual pilot signals between consecutive symbols in the broadcast signals, and
subtracting the common phase error from the data signal values.

12G. A method for demodulating digital broadcast signals comprising data modulated on a multiplicity of spaced carrier frequencies, the metod comprising:

analog to digital conversion for providing a series of digital samples of the broadcast signal,
analysing the samples to provide a series of Fourier Transform data signal values for each carrier frequency,
processing the series of data signal values including phase error correction,
the phase error correction including determining a common phase error by assessing the phase of continual pilot signals in the broadcast signals and determining the variation in phase of the continual pilot signals between consecutive symbols in the broadcast signals,
subtracting the common phase error from the data signal values, wherein the common phase error determination includes averaging the phase of a plurality of said continual pilot signals and applying a weighting to the pilot signals so that more significance is accorded to pilot signals near the average value of phase error.

13G. A method for demodulating digital video broadcast signals comprising data modulated on a multiplicity of spaced carrier frequencies, the method comprising:

analog to digital conversion for providing a series of digital samples of the broadcast signal,
analysing the samples to provide a series of Fourier Transform data signal values for each carrier frequency,
processing the series of data signal values including phase-error-correction,
automatic frequency control for controlling the frequency of the signals used int he said analysing of the samples,
wherein both the phase-error-correction and the automatic frequency control employ a common phase error determination comprising assessing the phase of a plurality of continual pilot signals in the broadcast signals and determining the variation in phase of the continual pilot signals between consecutive symbols in the broadcast signals in order to derive a common phase error and a frequency error signal.

1H. Apparatus for demodulating digital video broadcast signals comprising data modulated on a multiplicity of spaced carrier frequencies, including:

analog to digital conversion means for providing a series of digital samples of the broadcast signal, transform means for analysing the samples to provide a series of data symbol values for each carrier frequency, signal processing means for processing the series of data symbol values including phase error correcting means, and automatic frequency control means for controlling the frequency of the signals input to the transform means, wherein the automatic frequency control means includes coarse frequency control means for controlling the frequency in terms of increments of the carrier spacing frequency, and fine frequency control means for controlling the frequency for values less than a single carrier spacing frequency interval,

wherein the coarse frequency means includes a filter means for assessing a group of a predetermined number (N) of carrier signals on either side of the nominal position of a plurality of predetermined continual pilot signals, wherein the outputs of the filter means are provided to respective memory locations of memory means, the memory means being divided into a plurality of sections , first means for determining within each section a first signal best representing the continual pilot signal, and second means for determining from among the first signals from the plurality of sections, a second signal which best represents the continual pilot signal.

2H.A method for demodulating digital video broadcast signals comprising data modulated on a multiplicity of spaced carrier frequencies, the method comprising:

analog to digital conversion to provide a series of digital samples of the broadcast signal,
analysing the samples to provide a series of data symbol values for each carrier frequency,
processing the series of data symbol values including phase error correction and automatic frequency control of the frequency used to analyse the samples,
wherein the automatic frequency control includes coarse frequency control for controlling the frequency in terms of increments of the carrier spacing frequency and fine frequency control for controlling the frequency for values less than a single carrier spacing frequency interval,
wherein the coarse frequency control includes a filter means for assessing a group of a predetermined number (N) of carrier signals on either side of the nominal position of a plurality of predetermined continual pilot signals and providing outputs to respective memory locations of a memory means, the memory means being divided into a plurality of sections,
determining within each section a first signal best representing the continual pilot signal, and
determining from among the first signals from the plurality of sections, a second signal which best represents the continual pilot signal.

3H. Apparatus for demodulating digital video broadcast signals comprising data modulated on a multiplicity of spaced carrier frequencies, comprising:

down-conversion means for converting an input broadcast signal to a frequency sufficiently low to enable analog to digital conversion of the signal,
analog to digital conversion means for converting the broadcast signal to a series of digital samples, real to complex conversion means for converting each digital sample to a complex number value, Fourier transform means for analysing the complex number values to provide a series of signal values for each carrier frequency, frequency control means, comprising means responsive to the output of said Fourier Transform means for producing a signal for controlling the frequency of the signal values formed by said complex number values, and signal processing means for receiving the signal values and providing an output for decoding, the signal processing means including channel equalisation means and channel state information generating means.

4H. Apparatus for demodulating a digital video broadcast signal comprising data modulated on a multiplicity of spaced carrier frequencies, the apparatus including:

transform means for analysing a version of the broadcast signal to provide a series of signal values for each of the multiplicity of carrier frequencies,
phase-error-correction means for removing the common phase error in said signal values, including a first plurality of delay elements for processing delayed versions of the signal values with the current signal values, channel equalisation means for compensating for communication channel impairments for receiving the phase-error-corrected signal values and including a second plurality of delay elements for processing delayed versions of the signal values with the current values,

and wherein the apparatus is arranged such that the phase-error-correction means employs said first plurality of delay elements in one phase of operation of the apparatus and the channel equalisation means employs said second plurality of delay elements in a different phase of operation of the apparatus, whereby the first and second pluralities are constituted from one and the same memory elements.

5H. Apparatus for demodulating a digital video broadcast signal comprising data modulated on a multiplicity spaced carrier frequencies, the apparatus including:

analog-to-digital conversion means for converting a version of the broadcast signal, reduced in frequency as desired, to a series of digital samples, real-to-complex conversion means for converting the digital samples to complex number values, Fourier transform means for analysing the complex number values to provide a series of signal values for each of the multiplicity of carrier frequencies, automatic frequency control means coupled to receive the output of the Fourier transform means for providing a control signal for controlling the frequency of the signals input to the Fourier Transform means, and signal processing means for receiving said series of signal values and providing an output for decoding the signal processing means including channel equalisation means and channel state information generating means.

6H. A method of demodulating digital video broadcast signals comprising data modulated on a multiplicity of spaced carrier frequencies, the method comprising:

converting an input broadcast signal to a frequency sufficiently low to enable analog to digital conversion of the signal,
converting the broadcast signal to a series of digital samples,
converting each digital sample to a complex number value,
analysing the complex number values to provide a series of Fourier transform signal values for each carrier frequency,
producing a signal from said Fourier Transform signal values for controlling the frequency of the signal formed by said complex number values,
performing channel equalisation on said Fourier Transform signal values,
generating state information from said Fourier Transform signal values and including said state information and channel equalisation in an output for decoding based on said Fourier Transform signal values.

7H. A method for demodulating a digital video broadcast signal comprising data modulated on a multiplicity of spaced carrier frequencies, the metod comprising:

analysing a version of the broadcast signal to provide a series of signal values for each of the multiplicity of carrier frequencies,
removing the common phase error in said signal values by phase-error-correction, including processing delayed versions of the signal values with the current signal values,
compensating the phase-error-corrected signal values for communication channel impairments by channel equalisation, including processing delayed versions of the signal values with the current values,
wherein the phase-error-correction employs a plurality of delay elements in one phase of operation and the channel equalisation employs the same plurality of delay elements in a different phase of operation.

8H. A method for demodulating a digital video broadcast signal comprising data modulated on a multiplicity spaced carrier frequencies, the method including:

analog-to-digital conversion of a version of the broadcast signal, reduced in frequency as desired, to a series of digital samples,
converting the digital samples to complex number values,
analysing the complex number values to provide a series of Fourier transform signal values for each of the multiplicity of carrier frequencies,
frequency control means coupled to receive the output of the Fourier transform means for providing from the series of Fourier transform signal values a control signal for automatically controlling the frequency of the signals used to generate the Fourier Transform signal values, and
performing channel equalisation on said Fourier Transform signal values,
generating state information from said Fourier Transform signal values and including said state information and channel equalisation in an output for decoding based on said Fourier Transform signal values.

9H. Apparatus for demodulating digital video broadcast signals comprising data modulated on a multiplicity of spaced carrier frequencies, including:

analog to digital conversion means for providing a series of digital samples of the broadcast signal, transform means for analysing the samples to provide a series of data signal values for each carrier frequency, signal processing means for processing the series of data signal values including phase-error-correcting means, and automatic frequency control means for controlling the frequency of the signals input to the transform means, wherein the automatic frequency control means includes coarse frequency control means for controlling the frequency in terms of increments of the carrier spacing frequency, and fine frequency control means for controlling the frequency for values less than a single carrier spacing frequency interval, wherein the coarse frequency means includes a filter means for assessing a predetermined number (N) of carrier signals on either side of the nominal position of a plurality of predetermined continual pilot signals, to determine which signal best represents the continual pilot signal, whereby to determine the coarse frequency error.

10H. A method for demodulating digital video broadcast signals comprising data modulated on a multiplicity of spaced carrier frequencies, the method comprising:

analog to digital conversion for providing a series of digital samples of the broadcast signal, analysing the samples to provide a series of data signal values for each carrier frequency signal processing the series of data signal values including the phase-error-correction, automatic frequency control of the frequency used in the said analysing of the samples, wherein the automatic frequency control includes coarse frequency control for controlling the frequency in terms of increments of the carrier spacing frequency, and fine frequency control for controlling the frequency for values less than a single carrier spacing frequency interval, wherein the coarse frequency control includes assessing a predetermined number (N) of carrier signals on either side of the nominal position of a plurality of predetermined continual pilot signals, to determine which signal best represents the continual pilot signal, whereby to determine the coarse frequency error.

11H. Apparatus for demodulating digital video broadcast signals comprising data modulated on a multiplicity of spaced carrier frequencies, comprising:

conversion means for converting a down-converted version of the broadcast signal to a series of digital samples in complex format, transform means for analysing the digital sample values to provide a series of data symbol values for each carrier frequency, and signal processing means for receiving the data symbol values and providing an output for decoding, and timing synchronisation means for synchronising the transform means with the symbol periods of the broadcast signal, including correlation means for receiving said digital sample values and comprising delay means having a time period delay equal to the active symbol period, and multiplier means for receiving the digital sample values and a version thereof delayed by said delay means, to form a complex product signal, and means for processing the complex product signal to derive timing synchronisation pulses, wherein the timing synchronisation means comprises a coarse synchronisation means employing a subset of the digital sample signals for providing a coarse timing synchronisation, and a fine synchronisation means for providing a fine synchronisation within a time period determined by the coarse synchronisation means.

12H. A method for demodulating digital video broadcast signals comprising data modulated on a multiplicity of spaced carrier frequencies, comprising:

converting a down-converted version of the broadcast signal to a series of digital samples in complex format, transforming the digital samples to provide a series of data symbol values for each carrier frequency, and signal processing the data symbol values to provide an output for decoding, and time synchronising the transform means with the symbol periods of the broadcast signal, including correlating said data samples with data sample values delayed by a time period delay equal to the active symbol period, to form a complex product sample signal, and processing said complex product signal, wherein the timing synchronisation comprises a coarse synchronisation step employing a subset of the data sample values for providing a coarse timing synchronisation, and a fine synchronisation step for providing a fine synchronisation employing the data sample values within a time period determined by the coarse synchronisation.

13H. Apparatus for demodulating digital video broadcast signals comprising data modulated on a multiplicity of spaced carrier frequencies, including:

conversion means for converting the broadcast signal to a series of digital samples in complex format, transform means for analysing the digital sample values to provide a series of data symbol values for each carrier frequency and signal processing means including channel equalisation means for receiving the signal values and providing an output for decoding, automatic frequency control means for controlling the frequencies of the digital sampling signals applied to said transform means, and timing synchronisation means for synchronising the transform means with the symbol periods of the broadcast signal, including correlation means for receiving said digital signal values and comprising delay means having a time period equal to a symbol period, and multiplier means for receiving the digital signal values and a version thereof delayed by said delay means, to form a complex product signal, and means for processing the complex product signal to derive timing synchronisation pulses, wherein the timing synchronisation means is operable in an initial hunt mode for analysing said digital sample values over a relatively wide timing range to establish synchronisation, and then operable in a zoom mode for analysing the digital sample values over a relatively narrow range where the synchronisation point is expected.

14H. A method of demodulating digital video broadcast signals comprising data modulated on a multiplicity of spaced carrier frequencies, including:

converting the broadcast signal to a series of digital sample values in complex format, transforming the digital sample values to a series of data symbol values for each carrier frequency, synchronising the transform means with the symbol periods of the broadcast signal, including correlating said digital signal values by multiplying the digital signal values and a version thereof delayed by a time period equal to the active symbol period, to form a complex product signal, and processing the complex product signal to derive timing synchronisation pulses, wherein the timing synchronisation is carried out in an initial hunt mode, analysing said digital sample values over a relatively wide timing range to establish synchronisation, and the timing synchronisation then being carried out in a zoom mode, analysing the digital sample values over a relatively narrow range about the synchronisation point, and processing the data symbol values, including channel equalising the data symbol values to provide an output for decoding, and automatically controlling the frequencies of the digital sampling signals applied to said transform means.

15H. Apparatus for demodulating a digital video broadcast signal comprising data modulated on a multiplicity of spaced carrier frequencies, the apparatus including:

transform means for analysing the broadcast signal to provide a series of symbol values for each of the multiplicity of carrier frequencies, automatic frequency control means for controlling the frequency of said series of symbol values in dependence on a common phase error signal from said series of symbol values, first and second delay means coupled in series to receive said series of symbol values from said transform means, and means for deriving from symbol values in the first and second delay means a common phase error signal, first and second common phase error correction (CPE) means for receiving said common phase error signal, for correcting said signal values from said transform means, the output of the first delay means being applied to the first CPE means and the output of the second delay means being applied to said second CPE means, channel equalisation means for compensating for communication channel impairments for receiving directly the phase error corrected signals from said first CPE means, and third and fourth delay means connected in series and connected to receive the output from said second CPE means and applying delayed versions of the same to the channel equalisation means.

16H. Apparatus for demodulating digital video broadcast signals comprising data modulated on a multiplicity of spaced carrier frequencies, comprising:

down-conversion means for converting an input broadcast signal to a frequency sufficiently low to enable analog digital conversion of the signal, analog to digital conversion means for converting the broadcast signal to a series of digital samples, real to complex conversion means for converting each digital sample to a complex number value, Fourier transform means for analysing the complex number values to provide a series of symbol values for each carrier frequency, frequency control means, comprising means responsive to the output of said Fourier Transform means for producing a signal for controlling the frequency of the signal formed by said complex number values, in dependence upon a common phase error signal in said series of symbol values,

first and second delay means coupled in series to receive said series of symbol values from said transform means, and for providing delayed versions to said automatic frequency control means,

first and second common phase error correction (CPE) means for receiving said common phase error signal, for correcting said symbol values from said transform means, the output of the first delay means being applied to the first CPE means and

the output of the second delay means being applied to said second CPE means, channel equalisation means for compensating for communication channel impairments for receiving directly the phase error corrected signals from said first CPE means, and third and fourth delay means connected in series and connected to receive the output from said second CPE means and applying delayed versions of the same to the channel equalisation means.

17H. A method for demodulating a digital video broadcast signal comprising data modulated on a multiplicity of spaced carrier frequencies, the method comprising:

analysing the broadcast signal to provide a series of symbol values for each of the multiplicity of carrier frequencies,

automatic frequency control of the frequency of said series of symbol values in dependence on a common phase error signal from said series of symbol values, deriving a common phase error signal from symbol values in first and second delay means coupled in series to receive said series of symbol values,

common phase error correcting the output of the first delay means and common phase error correcting the output of the second delay means

compensating the phase error corrected signals from said first delay means for communication channel impairments by channel equalisation,

delaying the phase error corrected signals from said second delay means in third and

fourth delay means connected in series to receive said signals and applying delayed versions of the same to effect the channel equalisation.

18H. A method for demodulating digital video broadcast signals comprising data modulated on a multiplicity of spaced carrier frequencies, the method comprising:

converting an input broadcast signal to a frequency sufficiently low to enable analog digital conversion of the signal,

analog to digital conversion of the broadcast signal to a series of digital samples, converting each digital sample to a complex number value,

analysing the complex number values to provide a series of Fourier transform symbol values for each carrier frequency,

frequency control responsive to the output of said Fourier Transform symbol values for producing a signal for controlling the frequency of the signal formed by said complex number values, in dependence upon a common phase error signal in said series of symbol values,

providing for said automatic frequency control delayed versions of said series of symbol values using first and second delay means coupled in series,

first and second common phase error correction (CPE) means for receiving said common phase error signal, for common phase error correcting the output of the first delay means and common phase error correcting the output of the second delay means,

compensating the phase error corrected signals from said first delay means for communication channel impairments by channel equalisation,

delaying the phase error corrected signals from said second delay means in third and fourth delay means connected in series to receive said signals and applying delayed versions of the same to effect the channel equalisation.

19H. Apparatus for demodulating digital broadcast signals comprising data modulated on a multiplicity of spaced carrier frequencies, including:

analog to digital conversion means for providing a series of digital samples of the broadcast signal, real to complex conversion means for converting each digital sample to a complex number value, Fourier Transform means for analysing the complex number values to provide a series of data signal values in complex number format for each carrier frequency, and signal processing means for processing the series of data signal values including phase error correcting means,

the phase error correcting means including means for converting the data signal values from a complex number format to a phase angle format, means for determining a common phase error by assessing the phase of continual pilot signals in the broadcast signals and determining the variation in phase of the continual pilot signals between consecutive symbols in the broadcast signals, and means for subtracting the common phase error from the data signal values.

20H. Apparatus for demodulating digital broadcast signals comprising data modulated on a multiplicity of spaced carrier frequencies, including:

analog to digital conversion means for providing a series of digital samples of the broadcast signal, Fourier Transform means for analysing the samples to provide a series of data signal values for each carrier frequency, and signal processing means for processing the series of data signal values including phase error correcting means, the phase error correcting means including, means for determining a common phase error by assessing the phase of continual pilot signals in the broadcast signals and determining the variation in phase of the continual pilot signals between consecutive symbols in the broadcast signals, and means for subtracting the common phase error from the data signal values, wherein the common phase error determining means includes means for averaging the phase of a plurality of said continual pilot signals, and weighting means for applying a weighting to the pilot signals so that more significance is accorded to pilot signals near the average value of phase error.

21H. Apparatus for demodulating digital video broadcast signals comprising data modulated on a multiplicity of spaced carrier frequencies, including:

analog to digital conversion means for providing a series of digital samples of the broadcast signal, Fourier Transform means for analysing the samples to provide a series of data signal values for each carrier frequency, signal processing means for processing the series of data signal values including phase-error-correcting means, and automatic frequency control means for controlling the frequency of the signals input to the Fourier Transform means,

wherein both the phase-error-correcting means and the automatic frequency control means employ a common phase error determination means comprising means for assessing the phase of a plurality of continual pilot signals in the broadcast signals, and determining the variation in phase of the continual pilot signals between consecutive symbols in the broadcast signals in order to derive a common phase error and a frequency error signal.

22H. A method for demodulating digital broadcast signals comprising data modulated on a multiplicity of spaced carrier frequencies, the method comprising:

analog to digital conversion for providing a series of digital samples of the broadcast signal,
converting each digital sample to a complex number value,
analysing the complex number values to provide a series of Fourier Transform data signal values in complex number format for each carrier frequency,
processing the series of data signal values including phase error correction,
the phase error correction including converting the data signal values from a complex number format to a phase angle format,
determining a common phase error by assessing the phase of continual pilot signals in the broadcast signals and determining the variation in phase of the continual pilot signals between consecutive symbols in the broadcast signals, and
subtracting the common phase error from the data signal values.

23H. A method for demodulating digital broadcast signals comprising data modulated on a multiplicity of spaced carrier frequencies, the metod comprising:

analog to digital conversion for providing a series of digital samples of the broadcast signal,
analysing the samples to provide a series of Fourier Transform data signal values for each carrier frequency,
processing the series of data signal values including phase error correction,
the phase error correction including determining a common phase error by assessing the phase of continual pilot signals in the broadcast signals and determining the variation in phase of the continual pilot signals between consecutive symbols in the broadcast signals,

subtracting the common phase error from the data signal values, wherein the common phase error determination includes averaging the phase of a plurality of said continual pilot signals and applying a weighting to the pilot signals so that more significance is accorded to pilot signals near the average value of phase error.

24H. A method for demodulating digital video broadcast signals comprising data modulated on a multiplicity of spaced carrier frequencies, the method comprising:

analog to digital conversion for providing a series of digital samples of the broadcast signal,

analysing the samples to provide a series of Fourier Transform data signal values for each carrier frequency,

processing the series of data signal values including phase-error-correction,

automatic frequency control for controlling the frequency of the signals used int he said analysing of the samples,

wherein both the phase-error-correction and the automatic frequency control employ a common phase error determination comprising assessing the phase of a plurality of continual pilot signals in the broadcast signals and determining the variation in phase of the continual pilot signals between consecutive symbols in the broadcast signals in order to derive a common phase error and a frequency error signal.

**Claims**

1. An apparatus for demodulating digital broadcast signals comprising data modulated on a multiplicity of spaced carrier frequencies, comprising:

analog-to-digital conversion means for providing a series of digital samples of the broadcast signal;

real-to-complex conversion means for converting each digital sample to a complex number value;

Fourier Transform means for analyzing the complex number values to provide a series of data signal values in complex number format for each carrier frequency; and

signal processing means for processing the series of data signal values including phase error correcting means;

said phase error correcting means including means for converting the data signal values from a complex number format to a phase angle format, means for determining a common phase error by assessing the phase of continual pilot signals in the broadcast signals and determining the variation in phase of the continual pilot signals between consecutive symbols in the broadcast signals, and means for subtracting the common phase error from the data signal values.

2. An apparatus according to claim 1, including means for averaging the phase of a plurality of the continual pilot signals, and weighting means for applying a weighting to the pilot signals so that more significance is accorded to pilot signals near the average value of phase error.

3. An apparatus according to claim 1, including automatic frequency control means responsive to the output from the Fourier Transform means for controlling the frequency of the signal applied to an input of the Fourier Transform means, the automatic frequency control means including a coarse frequency control and a fine frequency control, wherein the fine frequency control shares the aforesaid elements of the common phase error correcting means.

4. An apparatus according to claim 1, including a plurality of delay elements for storing previous versions of symbol values, and including a channel equalization means, including a second plurality of storage elements for storing previous versions of the symbol values, wherein the common phase error determination and the channel equalization means operate in different phases of operation of the apparatus, thereby to permit one and the same memory elements to serve as said first and second plurality of delay elements.

5. An apparatus for demodulating digital broadcast signals comprising data modulated on a multiplicity of spaced carrier frequencies, comprising:

analog-to-digital conversion means for providing a series of digital samples of the broadcast signal;

Fourier Transform means for analyzing the samples to provide a series of data signal values for each carrier frequency; and

signal processing means for processing the series of data signal values including phase error correcting means;

said phase error correcting means including, means for determining a common phase error by assessing the phase of continual pilot signals in the broadcast signals and determining the variation in phase of the continual pilot signals between consecutive symbols in the broadcast signals, and means for subtracting the common phase error from the data signal values, wherein the common phase error determining means includes means for averaging the phase of a plurality of said continual pilot signals, and weighting means for applying a weighting to the pilot signals so that more significance is accorded to pilot signals near the average value of phase error.

6. An apparatus according to claim 5, including automatic frequency control means responsive to the output from the Fourier Transform means for controlling the frequency of the signal applied to the input of the Fourier Transform means, the automatic frequency control means including a coarse frequency control and a fine frequency control, wherein the fine frequency control shares the aforesaid elements of the common phase error correcting means.

7. An apparatus according to claim 6, wherein the automatic frequency control means is arranged to be applied to a down-conversion stage or via a DDFS to an input of the Fourier Transform means.

8. An apparatus according to claim 5, wherein the coarse frequency control comprises a recursive filter responsive to the rate of change of determined phase error, and means for comparing the output of the rate of change with a frequency offset.

9. An apparatus according to claim 5, including a plurality of delay elements for storing previous versions of symbol values, and including a channel equalization means, including a second plurality of storage elements for storing previous versions of the symbol values, wherein the common phase error determination and the channel equalization means operate in different phases of operation of the apparatus, thereby to permit one and the same memory elements to serve as said first and second plurality of delay elements.

10. An apparatus for demodulating digital video broadcast signals comprising data modulated on a multiplicity of spaced carrier frequencies, comprising:

   analog-to-digital conversion means for providing a series of digital samples of the broadcast signal;
   Fourier Transform means for analyzing the samples to provide a series of data signal values for each carrier frequency;
   signal processing means for processing the series of data signal values including phase-error-correcting means; and
   automatic frequency control means for controlling the frequency of the signals input to the Fourier Transform means;
   wherein both the phase-error-correcting means and the automatic frequency control means employ a common phase error determination means comprising means for assessing the phase of a plurality of continual pilot signals in the broadcast signals, and determining the variation in phase of the continual pilot signals between consecutive symbols in the broadcast signals in order to derive a common phase error and a frequency error signal.

11. An apparatus according to claim 8, including means for averaging the phase of a plurality of the continual pilot signals, and weighting means for applying a weight to the pilot signals so that more significance is accorded to pilot signals near the average value of phase error.

12. An apparatus according to claim 9, including a plurality of delay elements for storing previous versions of symbol values, and including a channel equalization means, including a second plurality of storage elements for storing previous versions of the symbol values, wherein the common phase error determination and the channel equalization means operate in different phases of operation of the apparatus, thereby to permit one and the same memory elements to serve as said first and second plurality of delay elements.

13. An apparatus according to claim 10, wherein said apparatus is incorporated in an integrated circuit chip.

14. An apparatus according to claim 1, wherein said apparatus is incorporated in an integrated circuit chip.

15. An apparatus according to claim 5, wherein said apparatus is incorporated in an integrated circuit chip.

16. A method for demodulating digital broadcast signals comprising data modulated on a multiplicity of spaced carrier frequencies, the method comprising:

analog-to-digital conversion for providing a series of digital samples of the broadcast signal;
converting each digital sample to a complex number value;
an analyzing the complex number values to provide a series of Fourier Transform data signal values in complex number format for each carrier frequency;
processing the series of data signal values including phase error correction, the phase error correction including converting the data signal values from a complex number format to a phase angle format;
determining a common phase error by assessing the phase of continual pilot signals in the broadcast signals and determining the variation in phase of the continual pilot signals between consecutive symbols in the broadcast signals; and
subtracting the common phase error from the data signal values.

17. A method for demodulating digital broadcast signals comprising data modulated on a multiplicity of spaced carrier frequencies, the method comprising:

analog-to-digital conversion for providing a series of digital samples of the broadcast signal;
analyzing the samples to provide a series of Fourier Transform data signal values for each carrier frequency;
processing the series of data signal values including phase error correction, the phase error correction including determining a common phase error by assessing the phase of continual pilot signals in the broadcast signals and determining the variation in phase of the continual pilot signals between consecutive symbols in the broadcast signals; and
subtracting the common phase error from the data signal values, wherein the common phase error determination includes averaging the phase of a plurality of the continual pilot signals and applying a weighting to the pilot signals so that more significance is accorded to pilot signals near the average value of phase error.

18. A method for demodulating digital video broadcast signals comprising data modulated on a multiplicity of spaced carrier frequencies, the method comprising:

analog-to-digital conversion for providing a series of digital samples of the broadcast signal;
analyzing the samples to provide a series of Fourier Transform data signal values for each carrier frequency;
processing the series of data signal values including phase-error-correction; and
automatic frequency control for controlling the frequency of the signals used in the analyzing of the samples;
wherein both the phase error-correction and the automatic frequency control employ a common phase error determination comprising assessing the phase of a plurality of continual pilot signals in the broadcast signals and determining the variation in phase of the continual pilot signals between consecutive symbols in the broadcast signals in order to derive a common phase error and a frequency error signal.

FIG. A1

FIG. A3

FIG. A2

ARCHITECTURE OF THE DTTV INTEGRATED CIRCUIT

EP 1 933 516 A2

## FIG. A4

EP 1 933 516 A2

## FIG. B1

## FIG. B3

EP 1 933 516 A2

## FIG. B2

### ARCHITECTURE OF THE DTTV INTEGRATED CIRCUIT

EP 1 933 516 A2

## FIG. B4A

### COARSE AND FINE FREQUENCY OFFSET

COARSE AFC ERROR

FINE AFC ERROR

## FIG. B4B

### VALUE OF THE SECOND PHASE DIFFERENCE AT EACH CARRIER

—SCATTERED CARRIERS    —CONTINUAL CARRIERS
—DATA CARRIERS         —TPS CARRIERS

## FIG. B4C

### COARSE RECOVERY PRINCIPLE

SYMBOL
START          RECEIVED SIGNAL
PULSE      COARSE FREQUENCY OFFSET

THEORETICAL SIGNAL

←SCATTERED CARRIERS    ←CONTINUAL CARRIERS
←DATA CARRIERS         —TPS CARRIERS

## FIG. B5

### BENCH OF RECURSIVE FILTERS AROUND THEORETICAL CP POSITIONS

NO COARSE ERROR

COARSE ERROR OF 20 CARRIERS

——THEORETICAL POSITION ——RECEIVER POSITION ——FFT START PULSE

EP 1 933 516 A2

## FIG. B6

### LOCAL MINIMUMS IN THE COARSE

WHICH IS THE REAL MINIMUM

## FIG. B7

CP TOO CLOSE

FRQ.

CORRECT CP
DISTANCE

BLOCK 1    BLOCK 2    BLOCK 3

FRQ.

$F_1$    MIN    $F_0$    $F_2$

EP 1 933 516 A2

## FIG. B9

COARSE      RECURSIVE FILTER   80

SECOND DIFFERENCE

n → | |x| 82 | →o → (−) 84 →p → | SHIFT 86 | →q → (+) 88 →r → | STORE 90 | →s → | FIND SMALLEST 94 | →u → 06

92

| OFFSET COUNTER | 96 →t

## FIG. B10

| ACCUM 100 | →v → COMMON-PHASE-ERROR

05 →m

06 →u

| COMBINE 102 | →w → | ACCUM 104 | →x → | TRUNE 106 | →y1 → | Σ/Δ 110 | →z → ANALOGUE AFC

| TRUNE 108 | →y2 → DIGITAL AFC

EP 1 933 516 A2

### FIG. B11

**CARRIER INDICES FOR CONTINUAL PILOT CARRIERS**

| CONTINUAL PILOT CARRIER POSITIONS (INDEX NUMBER k) | | | | | | | |
|---|---|---|---|---|---|---|---|
| **2k MODE** | | | | | | | |

| 0 | 48 | 54 | 87 | 141 | 156 | 192 | 201 | 255 | 279 | 282 | 333 |
|---|---|---|---|---|---|---|---|---|---|---|---|
| 432 | 450 | 483 | 525 | 531 | 618 | 636 | 714 | 759 | 765 | 780 | |
| 804 | 873 | 888 | 918 | 939 | 942 | 969 | 984 | 1050 | 1101 | | |
| 1107 | 1110 | 1137 | 1140 | 1146 | 1206 | 1269 | 1323 | | | | |
| 1377 | 1491 | 1683 | 1704 | | | | | | | | |

| **8k MODE** | | | | | | | |
|---|---|---|---|---|---|---|---|
| 0 | 48 | 54 | 87 | 141 | 156 | 192 | 201 | 255 | 279 | 282 | 333 |
| 432 | 450 | 483 | 525 | 531 | 618 | 636 | 714 | 759 | 765 | 780 |
| 804 | 873 | 888 | 918 | 939 | 942 | 969 | 984 | 1050 | 1101 |
| 1107 | 1110 | 1137 | 1140 | 1146 | 1206 | 1269 | 1323 |
| 1377 | 1491 | 1683 | 1704 | 1752 | 1758 | 1791 | 1845 |
| 1860 | 1896 | 1905 | 1959 | 1983 | 1986 | 2037 | 2136 |
| 2154 | 2187 | 2229 | 2235 | 2322 | 2340 | 2418 | 2463 |
| 2469 | 2484 | 2508 | 2577 | 2592 | 2622 | 2643 | 2646 |
| 2673 | 2688 | 2754 | 2805 | 2811 | 2814 | 2841 | 2844 |
| 2850 | 2910 | 2973 | 3027 | 3081 | 3195 | 3387 | 3408 |
| 3456 | 3462 | 3495 | 3549 | 3564 | 3600 | 3609 | 3663 |
| 3687 | 3690 | 3741 | 3840 | 3858 | 3891 | 3933 | 3939 |
| 4026 | 4044 | 4122 | 4167 | 4173 | 4188 | 4212 | 4281 |
| 4296 | 4326 | 4347 | 4350 | 4377 | 4392 | 4458 | 4509 |
| 4515 | 4518 | 4545 | 4548 | 4554 | 4614 | 4677 | 4731 |
| 4785 | 4899 | 5091 | 5112 | 5160 | 5166 | 5199 | 5253 |
| 5268 | 5304 | 5313 | 5367 | 5391 | 5394 | 5445 | 5544 |
| 5562 | 5595 | 5637 | 5643 | 5730 | 5748 | 5826 | 5871 |
| 5877 | 5892 | 5916 | 5985 | 6000 | 6030 | 6051 | 6054 |
| 6081 | 6096 | 6162 | 6213 | 6219 | 6222 | 6249 | 6252 |
| 6258 | 6318 | 6381 | 6435 | 6489 | 6603 | 6795 | 6816 |

EP 1 933 516 A2

FIG. C2

ARCHITECTURE OF THE DTTV INTEGRATED CIRCUIT

## FIG. C3

OFDM RECEIVER FRONT END

## FIG. C4

OFDM SYMBOL COMPRISING ITS ACTIVE AND GUARD INTERVAL AND THEIR RELATIONSHIP

GUARD INTERVAL    ACTIVE SYMBOL PERIOD

$T_G$    $T_A$

SIGNAL HAS THE SAME VALUE AT INSTANT SEPARATED BY $T_A$

X    SYMBOL n    SYMBOL n+1

SEGMENT IN THE GUARD INTERVAL IS IDENTICAL TO THE LAST PART OF THE ACTIVE SYMBOL

EP 1 933 516 A2

## FIG. C5

PROPERTIES OF
THE CORRELATION
PRODUCT WITH TIME

X [△] SYMBOL n [△] SYMBOL n+1 [△]

Y [△] SYMBOL n+1 [△] SYMBOL n+2

$T_G$   $T_A$

XY*

HERE THE PRODUCT HAS
MEAN $\sigma^2$

HERE THE PRODUCT HAS
ZERO MEAN

## FIG. C6     PROPERTIES OF THE PRODUCT XY WITH FREQUENCY ERROR

—— COMPLEX PRODUCT

—— PROJECTED COMPLEX PRODUCT OVER REAL AXIS

PROJECTED COMPLEX PRODUCT OVER
IMAGINARY AXIS

$W_0 T_A$ PHASE DUE TO FREQUENCY OFFSET $W_0$

EP 1 933 516 A2

FIG. C7

TIMING SYNCHRONIZATION PROCESS

CORRELATOR 50

XY*

DC COMPONENT DUE TO INTERFERENCES

INTRA SYMBOL RECURSIVE HIGH PASS FILTER 60

SIGNAL AFTER INTERFERENCE REMOVAL

INTER SYMBOL RECURSIVE FILTER 62

SIGNAL PRODUCT AFTER AVERAGING

SLICING 64

ONE BIT PLL SAMPLE PULSE SIGNAL

PULSE PROCESSOR 66

SYMBOL COUNTER 68

SYMBOL TIMING SYNCHRO

SAMPLING FREQUENCY ERROR

FIG. C8

SUB-SAMPLING TIMING SYNCHRONISATION PROCESS

• FINE SAMPLE
○ COARSE SAMPLES
× UNUSED SAMPLES

FINE WINDOW

REGION OF INTEREST WHERE THE RISING EDGE OF THE PULSE IS EXPECTED

# FIG. C9

## SUB-SAMPLING IMPLEMENTATION OF THE TIMING SYNCHRONISATION

EP 1 933 516 A2

# FIG. C10

Fine window in 2K and 8K modes

• FINE SAMPLE
◦ COARSE SAMPLES
× UNUSED SAMPLES

FINE WINDOW
=512 18MHz CLOCKS

8k MODE (1024 COARSE SAMPLES AND 224 FINE SAMPLES)

FINE WINDOW
=512 18MHz CLOCKS

2k MODE (1024 COARSE SAMPLES AND 128 FINE SAMPLES)

HIGH PASS FILTER IMPLEMENTATION

FIG. C12

IIR INTER SYMBOL FILTER IMPLEMENTATION

EP 1 933 516 A2

FIG. C13

COARSE ADAPTIVE SLICER IMPLEMENTATION

## FIG. C14

### COARSE PULSE PROCESSOR IMPLEMENTATION

ONE BIT
DV
COARSE

$z^{-1}$ | $z^{-2}$ | $z^{-3}$ | $z^{-4}$ | $z^{-5}$ | $z^{-6}$ | $z^{-7}$ | $z^{-8}$ | $z^{-9}$

1402

DETECT NUMBER OF ONE

$>=7$

$z^{-1}$

1404

ACTIVE SYMBOL
MASK PERIOD
COUNTER

ENABLE

COARSE_EDGE
SIGNAL

COARSE PULSE
PROCESSOR

EP 1 933 516 A2

FIG. C15

SYMBOL COUNTER IMPLEMENTATION

EP 1 933 516 A2

FIG. D2

ARCHITECTURE OF THE DTTV INTEGRATED CIRCUIT

FIG. D3

30/38                                    32

24 → □ → • → 50 → • → 52 → • → 60 → • → 70 → 72

58

54          ├──┤    66
                62

EP 1 933 516 A2

FIG. D4          OFDM SYMBOL COMPRISING ITS ACTIVE AND GUARD INTERVAL
                          AND THEIR RELATIONSHIP

GUARD          ACTIVE              SIGNAL HAS THE SAME VALUE
INTERVAL    SYMBOL PERIOD          AT INSTANT SEPARATED BY $T_A$
$T_G$            $T_A$

X |///| SYMBOL n |///| SYMBOL n+1 |///|

SEGMENT IN THE GUARD INTERVAL IS IDENTICAL
TO THE LAST PART OF THE ACTIVE SYMBOL

## FIG. D5

PROPERTIES OF
THE CORRELATION
PRODUCT WITH TIME

XY*

HERE THE PRODUCT HAS
MEAN $\sigma^2$

HERE THE PRODUCT HAS
ZERO MEAN

## FIG. D6    PROPERTIES OF THE PRODUCT XY WITH FREQUENCY ERROR

—— COMPLEX PRODUCT

—— PROJECTED COMPLEX PRODUCT OVER REAL AXIS

PROJECTED COMPLEX PRODUCT OVER
IMAGINARY AXIS

$W_0 T_A$ PHASE DUE TO FREQUENCY OFFSET $W_0$

## FIG. D7

### TIMING SYNCHRONIZATION PROCESS

CORRELATOR
74

XY*

DC COMPONENT DUE
TO INTERFERENCES

INTRA SYMBOL
RECURSIVE
HIGH PASS FILTER
8

SIGNAL AFTER INTERFERENCE
REMOVAL

INTER
SYMBOL
RECURSIVE
FILTER
84

SIGNAL PRODUCT
AFTER AVERAGING

SLICING

PULSE
PROCESSOR

ONE BIT PLL SAMPLE PULSE SIGNAL

SYMBOL
COUNTER

SYMBOL TIMING
SYNCHRO

SAMPLING FREQUENCY
ERROR

## FIG. D8

### ZOOMING TIMING SYNCHRONIZATION PROCESS

ZOOM WINDOW
REGION OF INTEREST WHERE
THE RISING EDGE OF THE
PULSE IS EXPECTED

EP 1 933 516 A2

## FIG. D9

TIMING SYNCHRONISATION STATE MACHINE

ALPHA CONSECUTIVE PULSE LOCK EVENTS

HUNT    ZOOM

DELTA CONSECUTIVE PULSE UNLOCK EVENTS

## FIG. D12

SUB-SAMPLING IMPLEMENTATION OF THE TIMING SYNCHRONISATION

74 CORRELATOR → 80 HIGH PASS FILTER → 82 INTER SYMBOL FILTER → 84 ADAPTIVE SLICER → 86 PULSE PROCESSOR —Edge_Pulse→ 88 SYMBOL COUNTER

SYMBOL TIMING SYNCHRO

SAMPLING FREQUENCY ERROR

90 ZOOM WINDOW

FIG. 10

TIMING PROCESSING IN HUNT STATE MODE

— BUS NOT USED
— BUS USED
□ MEMORY NOT USED
▨ MEMORY USED FOR THE TIMING

TIMING SYNCHRO  384x20BITS  384x20BITS  92

92  74

CORRELATOR  82  INTER SYMBOL FILTER  SLICING AND PULSE EXTRACT

FREQUENCY SYNCHRO  CHANNEL EQUALISER

6911x20BITS  6911x20BITS  6252x20BITS  6252x20BITS

FFT  50  52  70  72

FREQUENCY SYNCHRONISATION DSP OPERATIONS

RESPONSE CHANNEL ESTIMATOR AND EQUALISATION DSP OPERATIONS

▨ MEMORY USED FOR THE FREQUENCY SYNCHRO
□ MEMORY USED FOR THE CHANNEL EQUALISATION

EP 1 933 516 A2

## FIG. D11

### TIMING PROCESSING IN ZOOM STATE MODE

— BUS NOT USED

— BUS USED

☐ MEMORY NOT USED

▨ MEMORY USED FOR THE TIMING

TIMING SYNCHRO

384x20BITS — 92

384x20BITS — 92

74 — CORRELATOR

82 — INTER SYMBOL FILTER

SLICING AND PULSE EXTRACT

FREQUENCY SYNCHRO

CHANNEL EQUALISER

6911x20BITS | 6911x20BITS

6252x20BITS | 6252x20BITS

FFT

50 | 52 | 70 | 72

FREQUENCY SYNCHRONISATION DSP OPERATIONS

RESPONSE CHANNEL ESTIMATOR AND EQUALISATION DSP OPERATIONS

■ MEMORY USED FOR THE FREQUENCY SYNCHRO

☐ MEMORY USED FOR THE CHANNEL EQUALISATION

FIG. D13

HIGH PASS FILTER IMPLEMENTATION

$x_k$ → (−) 1306 → (−) → $\alpha_1$ 1308 → 1310 → (+) → $z^{-1}$ 1304 → $z_k$ → (−) 1302 → $y_k$

HIGH PASS FILTER FUNCTION

FIG. D14

IIR INTER SYMBOL FILTER IMPLEMENTATION

COMPLEX INPUT $x_k(L+1)$ → (−) 1404 → (−) → $\alpha_2$ 1406 → 1408 → (+) → $z^{-Ts}$ 1402 → $y_k(1)$

Ts=FULL OFDM PERIOD

COMPLEX OUTPUT $y_k(L+1)$

INTER SYMBOL IIR FILTER

# FIG. D15

## ADAPTIVE SLICER IMPLEMENTATION

EP 1 933 516 A2

## FIG. D16

### COARSE PULSE PROCESSOR IMPLEMENTATION

ONE BIT → [ $z^{-1}$ | $z^{-2}$ | $z^{-3}$ | $z^{-4}$ | $z^{-5}$ | $z^{-6}$ | $z^{-7}$ | $z^{-8}$ | $z^{-9}$ ] — 1602

DETECT NUMBER OF ONE → >=7

$z^{-1}$ — 1604

ACTIVE SYMBOL MASK PERIOD COUNTER

ENABLE → EDGE_PULSE SIGNAL

PULSE PROCESSOR

FIG. D17

SYMBOL COUNTER IMPLEMENTATION

FIG. D18

FIG. E1

FIG. E3

FIG. E2

ARCHITECTURE OF THE DTTV INTEGRATED CIRCUIT

FIG. E4

EP 1 933 516 A2

FIG. E5

EP 1 933 516 A2

66 AFC ALGORITHM

38

60

C2P

68

z⁻¹ 90

MEMORY USED FOR
*REMAINING CE
2 DELAY LINE

86

92

94

100

24

80

z⁻⁸ᴷ

z⁻⁸ᴷ

82

CPE
301

z⁻⁸ᴷ

z⁻⁸ᴷ

z⁻⁸ᴷ

z⁻⁸ᴷ

z⁻⁸ᴷ

z⁻⁸ᴷ

84

MEMORY USED FOR
*AFC FIRST DELAY
*CPE CORRECTION

CPE
302

CHANNEL ESTIMATION 72

DIVIDER

MEMORY USED FOR
*AFC SECOND DELAY
*CPE CORRECTION OF DELAY SIGNAL
*FIRST CE DELAY LINE

FIG. F1

FIG. F3

FIG. F2

ARCHITECTURE OF THE DTTV INTEGRATED CIRCUIT

## FIG. F4A

### COARSE AND FINE FREQUENCY OFFSET

COARSE AFC ERROR

FINE AFC ERROR

## FIG. F4B

### VALUE OF THE SECOND PHASE DIFFERENCE AT EACH CARRIER

— SCATTERED CARRIERS  — CONTINUAL CARRIERS
— DATA CARRIERS  — TPS CARRIERS

## FIG. F4C

### COARSE RECOVERY PRINCIPLE

SYMBOL
START
PULSE

RECEIVED SIGNAL
COARSE FREQUENCY OFFSET

THEORETICAL SIGNAL

← SCATTERED CARRIERS  — CONTINUAL CARRIERS
← DATA CARRIERS  — TPS CARRIERS

# FIG. F5

## BENCH OF RECURSIVE FILTERS AROUND THEORETICAL CP POSITIONS

NO COARSE ERROR

COARSE ERROR OF 20 CARRIERS

——THEORETICAL POSITION ——RECEIVER POSITION ——FFT START PULSE

EP 1 933 516 A2

## FIG. F6

### HIGH COST SOLUTION, NOISE OPTIMUM

## FIG. F7

EP 1 933 516 A2

FIG. F8

## FIG. F9

COARSE

RECURSIVE FILTER 80

SECOND DIFFERENCE

$|x|$ **82**

o

84

− p

SHIFT **86**

q

88

+ r

STORE **90**

s

FIND SMALLEST **94**

u

06

n

92

OFFSET COUNTER

96

t

## FIG. F10

ACCUM **100**

v

COMMON-PHASE-ERROR

05 m

COMBINE **102**

w

ACCUM **104**

x

TRUNE **106**

y1

$\Sigma/\Delta$ **110**

z

ANALOGUE AFC

06 u

TRUNE **108**

y2

DIGITAL AFC

EP 1 933 516 A2

## FIG. F11  CARRIER INDICES FOR CONTINUAL PILOT CARRIERS

| CONTINUAL PILOT CARRIER POSITIONS (INDEX NUMBER k) | |
|---|---|
| 2k MODE | 8k MODE |
| 0  48  54  87  141  156  192 201  255 279  282  333<br>432 450 483  525  531  618  636 714  759  765  780<br>804  873  888  918  939  942  969  984  1050 1101<br>1107  1110  1137  1140  1146  1206  1269  1323<br>1377  1491  1683  1704 | 0  48  54  87  141  156  192 201  255 279  282  333<br>432 450 483  525  531  618  636 714  759  765  780<br>804  873  888  918  939  942  969  984  1050 1101<br>1107  1110  1137  1140  1146  1206  1269  1323<br>1377  1491  1683  1704  1752  1758  1791  1845<br>1860  1896  1905  1959  1983  1986  2037  2136<br>2154  2187  2229  2235  2322  2340  2418  2463<br>2469  2484  2508  2577  2592  2622  2643  2646<br>2673  2688  2754  2805  2811  2814  2841  2844<br>2850  2910  2973  3027  3081  3195  3387  3408<br>3456  3462  3495  3549  3564  3600  3609  3663<br>3687  3690  3741  3840  3858  3891  3933  3939<br>4026  4044  4122  4167  4173  4188  4212  4281<br>4296  4326  4347  4350  4377  4392  4458  4509<br>4515  4518  4545  4548  4554  4614  4677  4731<br>4785  4899  5091  5112  5160  5166  5199  5253<br>5268  5304  5313  5367  5391  5394  5445  5544<br>5562  5595  5637  5643  5730  5748  5826  5871<br>5877  5892  5916  5985  6000  6030  6051  6054<br>6081  6096  6162  6213  6219  6222  6249  6252<br>6258  6318  6381  6435  6489  6603  6795  6816 |

EP 1 933 516 A2

## FIG. G1

## FIG. G3

EP 1 933 516 A2

# FIG. G2

## ARCHITECTURE OF THE DTTV INTEGRATED CIRCUIT

FIG. G4

FIG. G5

EP 1 933 516 A2

## FIG. G6

COARSE         RECURSIVE FILTER   80

SECOND
DIFFERENCE

n → | |x| |  o → (−) p → | SHIFT 86 | q → (+) r → | STORE 90 | s → | FIND SMALLEST | u → 06

82    84    88    94

92

96 | OFFSET COUNTER | t

## FIG. G7

| ACCUM 100 | v → COMMON-PHASE-ERROR

05 m →
06 u → | COMBINE 102 | w → | ACCUM 104 | x → | TRUNE 106 | y1 → | DAC 110 | z → ANALOGUE AFC

| TRUNE 108 | y2 → DIGITAL AFC

124

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2307155 A

- GB 2037155 A

**Non-patent literature cited in the description**

- **STOTT, J.H.** Explaining Some of the Magic of COFDM. *Proceedings of 20th International Television Symposium,* June 1997

- **STOTT, J.H.** Explaining Some of the Magic of COFDM. *Proceedings of 20th International Television Symposium,* June 1997